# EUROPEAN PATENT SPECIFICATION

(11) **EP 4 268 148 B1**
(45) Date of publication and mention of the grant of the patent: **25.11.2026**
(21) Application number: 21912235.5
(22) Date of filing: 23.12.2021
(51) Int. Cl.: G06N 10/40, G06N 10/20, B82Y 10/00

(54) **APPLYING TWO-QUBIT QUANTUM LOGIC GATES IN A SUPERCONDUCTING QUANTUM PROCESSING UNIT**
ANWENDUNG VON ZWEI-QUBIT-QUANTENLOGIKGATTERN IN EINER SUPRALEITENDEN QUANTENVERARBEITUNGSEINHEIT
APPLICATION DE PORTES LOGIQUES QUANTIQUES À DEUX BITS QUANTIQUES DANS UNE UNITÉ DE TRAITEMENT QUANTIQUE SUPRACONDUCTEUR

(30) Priority: 23.12.2020 US 202063130053 P
(43) Date of publication of application: 01.11.2023
(73) Proprietor: Rigetti & Co, LLC, Berkeley CA 94710 (US)
(72) Inventor: SETE, Eyob, Berkeley, California 94710 (US); POLETTO, Stefano, Berkeley, California 94710 (US); DIDIER, Nicolas, Berkeley, California 94710 (US)
(74) Representative: Potter Clarkson
(86) International application number: PCT/US2021/065086
(87) International publication number: WO 2022/140674

(56) References cited:
- WO-A1-2018/236922
- US-A1- 2020 272 929
- CALDWELL S. A. ET AL: "Parametrically Activated Entangling Gates Using Transmon Qubits", 8 December 2017 (2017-12-08), arXiv.org, pages 1 - 7, XP093213392, Retrieved from the Internet <URL:https://arxiv.org/pdf/1706.06562>
- LI X ET AL: "Tunable coupler for realizing a controlled-phase gate with dynamically decoupled regime in a superconducting circuit", ARXIV.ORG, CORNELL UNIVERSITY LIBRARY, 201 OLIN LIBRARY CORNELL UNIVERSITY ITHACA, NY 14853, 12 September 2020 (2020-09-12), XP081761319, DOI: 10.1103/PHYSREVAPPLIED.14.024070
- NICOLAS DIDIER: "Flux control of superconducting qubits at dynamical sweet spots", ARXIV.ORG, CORNELL UNIVERSITY LIBRARY, 201 OLIN LIBRARY CORNELL UNIVERSITY ITHACA, NY 14853, 19 December 2019 (2019-12-19), XP081569737
- TAO CHEN, XUE ZHENG-YUAN: "Nonadiabatic Geometric Quantum Computation with Parametrically Tunable Coupling", CORNELL UNIVERSITY, ARXIV.ORG, 22 November 2018 (2018-11-22), arXiv.org , XP055644038, Retrieved from the Internet <URL:https://arxiv.org/abs/1808.02839> [retrieved on 20191119], DOI: 10.1103/PhysRevApplied.10.054051
- J. J. GARC\&APOS;IA-RIPOLL; A. RUIZ-CHAMORRO; E. TORRONTEGUI: "Quantum control of frequency tunable transmon superconducting qubits", ARXIV.ORG, CORNELL UNIVERSITY LIBRARY, 201 OLIN LIBRARY CORNELL UNIVERSITY ITHACA, NY 14853, 20 July 2020 (2020-07-20), 201 Olin Library Cornell University Ithaca, NY 14853 , XP081705906
- R. BARENDS; C. M. QUINTANA; A. G. PETUKHOV; YU CHEN; D. KAFRI; K. KECHEDZHI; R. COLLINS; O. NAAMAN; S. BOIXO; F. ARUTE; K. ARYA; D: "Diabatic gates for frequency-tunable superconducting qubits", ARXIV.ORG, CORNELL UNIVERSITY LIBRARY, 201 OLIN LIBRARY CORNELL UNIVERSITY ITHACA, NY 14853, 4 July 2019 (2019-07-04), 201 Olin Library Cornell University Ithaca, NY 14853 , XP081438199

## Description

### CROSS-REFERENCE TO RELATED APPLICATIONS

This application claims priority to U.S. Provisional Application No. 63/130,053 filed on December 23, 2020, and entitled "Parametric Resonance Gates."

### BACKGROUND

The following description relates to applying two-qubit quantum gates in a superconducting quantum processing unit.

Quantum computers can perform computational tasks by storing and processing information within quantum states of quantum systems. For example, qubits (i.e., quantum bits) can be stored in, and represented by, an effective two-level sub-manifold of a quantum coherent physical system. A variety of physical systems have been proposed for quantum computing applications. Examples include superconducting circuits, trapped ions, spin systems, and others.

Caldwell S. A. et al: "Parametrically Activated Entangling Gates Using Transmon Qubits", 8 December 2017 (2017-12-08), XP093213392, arXiv.org, describes and implements a family of entangling gates activated by radio-frequency flux modulation applied to a tunable transmon that is statically coupled to a neighboring transmon. Didier N.: "Flux control of superconducting qubits at dynamical sweet spots", 19 December 2019 (2019-12-19), arXiv.org, shows how two-tone modulation of the flux bias, a bichromatic modulation, gives rise to a continuum of dynamical sweet spots where dephasing due to slow flux noise is suppressed to first order for a wide range of time-averaged qubit frequencies.

### BRIEF DESCRIPTION OF THE DRAWINGS

FIG. 1 is a block diagram of an example computing environment.
FIG. 2 is a block diagram showing devices and interactions in an example quantum computing system.
FIG. 3 is a flow chart showing aspects of an example process for applying a two-qubit quantum logic gate.
FIG. 4 is a plot showing the zeroth order Bessel function (*J*₀ ) as a function of a frequency shift divided by a flux modulation frequency (*δω*/2*ωₘ*).
FIG. 5 is a circuit diagram showing an equivalent circuit of an example superconducting circuit.
FIG. 6 is a table showing device parameters of the two qubit devices in an example superconducting quantum processing unit shown in FIG. 5.
FIG. 7 are plots showing a flux modulation frequency (*ωₘ*) in MHz and a qubit frequency as a function of a flux modulation amplitude (Φ*_{ac}*(Φ₀)) applied to the tunable-frequency qubit device in the example superconducting quantum processing unit in FIG. 5 for activating various two-qubit quantum logic gates.
FIG. 8 are schematic diagrams of a top view and a cross-sectional view of an example superconducting quantum processing unit.
FIG. 9 is a circuit diagram showing an example equivalent circuit of the example superconducting quantum processing unit shown in FIG. 8.
FIG. 10 is a table showing device parameters of the two tunable-frequency qubit devices and a tunable-frequency coupler device in the example superconducting quantum processing unit shown in FIG. 8.
FIG. 11 is a schematic diagram showing pulse sequences for a ZZ coupling measurement to determine a parking value of a coupler flux bias applied on the tunable-frequency coupler device of the example superconducting quantum processing unit shown in FIG. 8.
FIG. 12 contains plots showing gate time in nanosecond (ns), population of the first tunable-frequency qubit device, an effective qubit-qubit coupling (*g_{eff}*) as a function of a coupler flux bias applied on the tunable-frequency coupler device of the superconducting quantum processing unit shown in FIG. 8.
FIG. 13 contains plots showing a flux modulation frequency and a qubit operating frequency as a function of a flux modulation amplitude of the flux modulation signal applied on the second tunable-frequency qubit device of the example superconducting quantum processing unit shown in FIG. 8 for activating various two-qubit quantum logic gates.
FIG. 14 contains plots showing population transferring between the first and second tunable-frequency qubit devices of the example superconducting quantum processing unit shown in FIG. 8.
FIG. 15 is a flow chart showing aspects of an example calibration process.
FIGS. 16A-16B are plots showing example bipolar pulse shapes for reducing flux noise sensitivity and improving dephasing time in an example superconducting quantum processing unit.
FIG. 17 is a flow chart showing an example process for applying a two-qubit quantum logic gate.
FIG. 18 is a schematic diagram showing aspects of an example superconducting quantum processing unit.
FIG. 19 are schematic diagrams of a top view and a cross-sectional view of an example superconducting quantum processing unit
FIG. 20 is a schematic diagram showing aspects of an example superconducting quantum processing unit.
FIG. 21 is a schematic diagram showing aspects of an example superconducting quantum processing unit.
FIG. 22 is a circuit diagram showing an example equivalent circuit of an example superconducting quantum processing unit.
FIG. 23 is a plot showing an effective qubit-qubit coupling as a function of a transition frequency of the tunable-frequency coupler device in the example superconducting quantum processing unit shown in FIG. 22.
FIG. 24 contains plots showing a flux modulation frequency and a qubit operating frequency as a function of a flux modulation amplitude of the flux modulation signal applied on the second tunable-frequency qubit device of the example superconducting quantum processing unit shown in FIG. 8 for activating various two-qubit quantum logic gates.

### DETAILED DESCRIPTION

In some aspects of what is described here, a superconducting quantum processing unit includes two qubit devices operably coupled to each other by a coupler device. The two qubit devices include at least one tunable-frequency qubit device which has a transition frequency that can be tuned by applying a qubit flux bias. In some implementations, the tunable-frequency qubit device includes a superconducting circuit loop with one or more Josephson junctions and a shunt capacitor. An interaction between the two qubit devices can be controlled by communicating control signals to the superconducting quantum processing unit. Control signals communicated to the superconducting quantum processing unit include a flux modulation signal, which is communicated to the tunable-frequency qubit device on a flux bias control line coupled to the tunable-frequency qubit device. The flux modulation signal modulates the qubit flux bias (e.g., in the superconducting circuit loop of the tunable-frequency qubit device) at a flux modulation frequency and a flux modulation amplitude causing the transition frequency of the tunable-frequency qubit device to be modulated. As such, two-qubit quantum logic gates can be applied to a pair of qubits defined by the two qubit devices by communicating the control signals to the superconducting quantum processing unit.

In some implementations, an entangling gate between two qubit devices can be activated by applying the flux modulation signal to the tunable-frequency qubit device such that a time average of the transition frequency of the tunable-frequency qubit device over a duration of the flux modulation signal is on resonance with a transition frequency of a second qubit device in the superconducting quantum processing unit. In some implementations, a flux modulation frequency of the flux modulation signal can be set to a value that is not equal to a subharmonic of the difference between the time average of the transition frequency of the first tunable-frequency qubit device and the transition frequency of the second qubit device. The value of the flux modulation frequency does not activate any interaction with its neighboring qubit devices except for the interaction between the target qubit devices. In some instances, the value of the flux modulation frequency is greater than a threshold frequency value that activates interactions (e.g., sideband interaction) between the first tunable-frequency qubit device and the second qubit device. In some implementations, a flux modulation amplitude of the flux modulation signal is set to a value at which the first tunable-frequency qubit device and the second qubit device are on resonance according to a resonant condition.

When the first tunable-frequency qubit device and the second qubit device are coupled through a tunable-frequency coupler device, the value of the flux modulation frequency of the flux modulation signal applied on the first tunable-frequency qubit device does not activate an interaction between the first tunable-frequency qubit device and the tunable-frequency coupler device. In some implementations, the value of the flux modulation frequency does not activate a sideband parametric two-qubit quantum logic gate between the first tunable-frequency qubit device and the tunable-frequency coupler device. In other words, the sidebands of the first tunable-frequency qubit device under flux modulation is not on resonance with the tunable-frequency coupler device, and there is no exchange of energy between the first tunable-frequency qubit device and the tunable-frequency coupler device.

In some implementations, the systems and techniques described here can provide technical advantages and improvements. For example, the system and techniques disclosed here can allow activation of two-qubit quantum logic gates on different qubit devices using a single flux modulation frequency. As such, the systems and techniques described can compensate variations in transition frequencies of qubit devices caused by nonuniformities of fabrication processes. In some cases, the systems and techniques described here can operate two-qubit quantum logic gates without significantly reducing the effective qubit-qubit coupling; enable two-qubit quantum logic gates that are less sensitive to the frequency-dependent transfer function; and improve performance of quantum logic gates (e.g., higher gate fidelities and faster gates) for quantum computation. In some cases, a combination of these and potentially other advantages and improvements may be obtained.

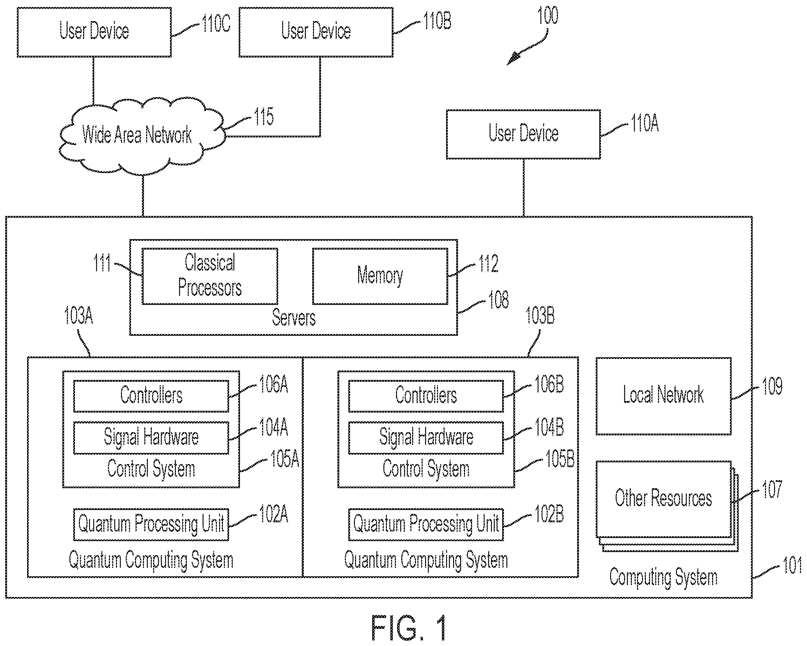

FIG. 1 is a block diagram of an example computing environment 100. The example computing environment 100 shown in FIG. 1 includes a computing system 101 and user devices 110A, 110B, 110C. A computing environment may include additional or different features, and the components of a computing environment may operate as described with respect to FIG. 1 or in another manner.

The example computing system 101 includes classical and quantum computing resources and exposes their functionality to the user devices 110A, 110B, 110C (referred to collectively as "user devices 110"). The computing system 101 shown in FIG. 1 includes one or more servers 108, quantum computing systems 103A, 103B, a local network 109, and other resources 107. The computing system 101 may also include one or more user devices (e.g., the user device 110A) as well as other features and components. A computing system may include additional or different features, and the components of a computing system may operate as described with respect to FIG. 1 or in another manner.

The example computing system 101 can provide services to the user devices 110, for example, as a cloud-based or remote-accessed computer system, as a distributed computing resource, as a supercomputer or another type of high-performance computing resource, or in another manner. The computing system 101 or the user devices 110 may also have access to one or more other quantum computing systems (e.g., quantum computing resources that are accessible through the wide area network 115, the local network 109, or otherwise).

The user devices 110 shown in FIG. 1 may include one or more classical processors, memory, user interfaces, communication interfaces, and other components. For instance, the user devices 110 may be implemented as laptop computers, desktop computers, smartphones, tablets, or other types of computer devices. In the example shown in FIG. 1, to access computing resources of the computing system 101, the user devices 110 send information (e.g., programs, instructions, commands, requests, input data, etc.) to the servers 108; and in response, the user devices 110 receive information (e.g., application data, output data, prompts, alerts, notifications, results, etc.) from the servers 108. The user devices 110 may access services of the computing system 101 in another manner, and the computing system 101 may expose computing resources in another manner.

In the example shown in FIG. 1, the local user device 110A operates in a local environment with the servers 108 and other elements of the computing system 101. For instance, the user device 110A may be co-located with (e.g., located within 0.5 to 1 km of) the servers 108 and possibly other elements of the computing system 101. As shown in FIG. 1, the user device 110A communicates with the servers 108 through a local data connection.

The local data connection in FIG. 1 is provided by the local network 109. For example, some or all of the servers 108, the user device 110A, the quantum computing systems 103A, 103B, and the other resources 107 may communicate with each other through the local network 109. In some implementations, the local network 109 operates as a communication channel that provides one or more low-latency communication pathways from the server 108 to the quantum computer systems 103A, 103B (or to one or more of the elements of the quantum computer systems 103A, 103B). The local network 109 can be implemented, for instance, as a wired or wireless Local Area Network, an Ethernet connection, or another type of wired or wireless connection. The local network 109 may include one or more wired or wireless routers, wireless access points (WAPs), wireless mesh nodes, switches, high-speed cables, or a combination of these and other types of local network hardware elements. In some cases, the local network 109 includes a software-defined network that provides communication among virtual resources, for example, among an array of virtual machines operating on the server 108 and possibly elsewhere.

In the example shown in FIG. 1, the remote user devices 110B, 110C operate remote from the servers 108 and other elements of the computing system 101. For instance, the user devices 110B, 110C may be located at a remote distance (e.g., more than 1 km, 10 km, 100 km, 1,000 km, 10,000 km, or farther) from the servers 108 and possibly other elements of the computing system 101. As shown in FIG. 1, each of the user devices 110B, 110C communicates with the servers 108 through a remote data connection.

The remote data connection in FIG. 1 is provided by a wide area network 115, which may include, for example, the Internet or another type of wide area communication network. In some cases, remote user devices use another type of remote data connection (e.g., satellite-based connections, a cellular network, a virtual private network, etc.) to access the servers 108. The wide area network 115 may include one or more internet servers, firewalls, service hubs, base stations, or a combination of these and other types of remote networking elements. Generally, the computing environment 100 can be accessible to any number of remote user devices.

The example servers 108 shown in FIG. 1 can manage interaction with the user devices 110 and utilization of the quantum and classical computing resources in the computing system 101. For example, based on information from the user devices 110, the servers 108 may delegate computational tasks to the quantum computing systems 103A, 103B and the other resources 107; the servers 108 can then send information to the user devices 110 based on output data from the computational tasks performed by the quantum computing systems 103A, 103B, and the other resources 107.

As shown in FIG. 1, the servers 108 are classical computing resources that include classical processors 111 and memory 112. The servers 108 may also include one or more communication interfaces that allow the servers to communicate via the local network 109, the wide area network 115 and possibly other channels. In some implementations, the servers 108 may include a host server, an application server, a virtual server or a combination of these and other types of servers. The servers 108 may include additional or different features, and may operate as described with respect to FIG. 1 or in another manner.

The classical processors 111 can include various kinds of apparatus, devices, and machines for processing data, including, by way of example, a microprocessor, a central processing unit (CPU), a graphics processing unit (GPU), an FPGA (field programmable gate array), an ASIC (application specific integrated circuit), or combinations of these. The memory 112 can include, for example, a random-access memory (RAM), a storage device (e.g., a writable read-only memory (ROM) or others), a hard disk, or another type of storage medium. The memory 112 can include various forms of volatile or non-volatile memory, media, and memory devices, etc.

Each of the example quantum computing systems 103A, 103B operates as a quantum computing resource in the computing system 101. The other resources 107 may include additional quantum computing resources (e.g., quantum computing systems, quantum simulators, or both) as well as classical (non-quantum) computing resources such as, for example, digital microprocessors, specialized co-processor units (e.g., graphics processing units (GPUs), cryptographic co-processors, etc.), special purpose logic circuitry (e.g., field programmable gate arrays (FPGAs), application-specific integrated circuits (ASICs), etc.), systems-on-chips (SoCs), etc., or combinations of these and other types of computing modules.

In some implementations, the servers 108 generate programs, identify appropriate computing resources (e.g., a QPU or QVM) in the computing system 101 to execute the programs, and send the programs to the identified resources for execution. For example, the servers 108 may send programs to the quantum computing system 103A, the quantum computing system 103B, or any of the other resources 107. The programs may include classical programs, quantum programs, hybrid classical/quantum programs, and may include any type of function, code, data, instruction set, etc.

In some instances, programs can be formatted as source code that can be rendered in human-readable form (e.g., as text) and can be compiled, for example, by a compiler running on the servers 108, on the quantum computing systems 103, or elsewhere. In some instances, programs can be formatted as compiled code, such as, for example, binary code (e.g., machine-level instructions) that can be executed directly by a computing resource. Each program may include instructions corresponding to computational tasks that, when performed by an appropriate computing resource, generate output data based on input data. For example, a program can include instructions formatted for a quantum computer system, a simulator, a digital microprocessor, co-processor or other classical data processing apparatus, or another type of computing resource.

In some cases, a program may be expressed in a hardware-independent format. For example, quantum machine instructions may be provided in a quantum instruction language such as Quil, described in the publication "A Practical Quantum Instruction Set Architecture," arXiv:1608.03355v2, dated Feb. 17, 2017, or another quantum instruction language. For instance, the quantum machine instructions may be written in a format that can be executed by a broad range of quantum processing units or simulators. In some cases, a program may be expressed in high-level terms of quantum logic gates or quantum algorithms, in lower-level terms of fundamental qubit rotations and controlled rotations, or in another form. In some cases, a program may be expressed in terms of control signals (e.g., pulse sequences, delays, etc.) and parameters for the control signals (e.g., frequencies, phases, durations, channels, etc.). In some cases, a program may be expressed in another form or format. In some cases, a program may utilize Quil-T, described in the publication "Gain deeper control of Rigetti quantum processors with Quil-T," available at https://medium.com/rigetti/gain-deeper-control-of-rigetti-quantum-processors-with-quil-t-ea8943061e5b dated Dec. 10, 2020.

In some implementations, the servers 108 include one or more compilers that convert programs between formats. For example, the servers 108 may include a compiler that converts hardware-independent instructions to binary programs for execution by the quantum computing systems 103A, 103B. In some cases, a compiler can compile a program to a format that targets a specific quantum resource in the computer system 101. For example, a compiler may generate a different binary program (e.g., from the same source code) depending on whether the program is to be executed by the quantum computing system 103A or the quantum computing system 103B.

In some cases, a compiler generates a partial binary program that can be updated, for example, based on specific parameters. For instance, if a quantum program is to be executed iteratively on a quantum computing system with varying parameters on each iteration, the compiler may generate the binary program in a format that can be updated with specific parameter values at runtime (e.g., based on feedback from a prior iteration, or otherwise); the parametric update can be performed without further compilation. In some cases, a compiler generates a full binary program that does not need to be updated or otherwise modified for execution.

In some implementations, the servers 108 generate a schedule for executing programs, allocate computing resources in the computing system 101 according to the schedule, and delegate the programs to the allocated computing resources. The servers 108 can receive, from each computing resource, output data from the execution of each program. Based on the output data, the servers 108 may generate additional programs that are then added to the schedule, output data that is provided back to a user device 110, or perform another type of action.

In some implementations, all or part of the computing environment operates as a cloud-based quantum computing (QC) environment, and the servers 108 operate as a host system for the cloud-based QC environment. The cloud-based QC environment may include software elements that operate on both the user devices 110 and the computer system 101 and interact with each other over the wide area network 115. For example, the cloud-based QC environment may provide a remote user interface, for example, through a browser or another type of application on the user devices 110. The remote user interface may include, for example, a graphical user interface or another type of user interface that obtains input provided by a user of the cloud-based QC environment. In some cases, the remote user interface includes, or has access to, one or more application programming interfaces (APIs), command line interfaces, graphical user interfaces, or other elements that expose the services of the computer system 101 to the user devices 110.

In some cases, the cloud-based QC environment may be deployed in a "serverless" computing architecture. For instance, the cloud-based QC environment may provide on-demand access to a shared pool of configurable computing resources (e.g., networks, servers, storage, applications, services, quantum computing resources, classical computing resources, etc.) that can be provisioned for requests from user devices 110. Moreover, the cloud-based computing systems 101 may include or utilize other types of computing resources, such as, for example, edge computing, fog computing, etc.

In an example implementation of a cloud-based QC environment, the servers 108 may operate as a cloud provider that dynamically manages the allocation and provisioning of physical computing resources (e.g., GPUs, CPUs, QPUs, etc.). Accordingly, the servers 108 may provide services by defining virtualized resources for each user account. For instance, the virtualized resources may be formatted as virtual machine images, virtual machines, containers, or virtualized resources that can be provisioned for a user account and configured by a user. In some cases, servers 108 include a container management and execution system that is implemented, for example, using KUBERNETES ^{®} or another software platform for container management. In some cases, the cloud-based QC environment is implemented using a resource such as, for example, OPENSTACK ^{®}. OPENSTACK ^{®} is an example of a software platform for cloud-based computing, which can be used to provide virtual servers and other virtual computing resources for users.

In some cases, the server 108 stores quantum machine images (QMI) for each user account. A quantum machine image may operate as a virtual computing resource for users of the cloud-based QC environment. For example, a QMI can provide a virtualized development and execution environment to develop and run programs (e.g., quantum programs or hybrid classical/quantum programs). When a QMI operates on the server 108, the QMI may engage either of the quantum processor units 102A, 102B, and interact with a remote user device (110B or 110C) to provide a user programming environment. The QMI may operate in close physical proximity to, and have a low-latency communication link with, the quantum computing systems 103A, 103B. In some implementations, remote user devices connect with QMIs operating on the servers 108 through secure shell (SSH) or other protocols over the wide area network 115.

In some implementations, all or part of the computing system 101 operates as a hybrid computing environment. For example, quantum programs can be formatted as hybrid classical/quantum programs that include instructions for execution by one or more quantum computing resources and instructions for execution by one or more classical resources. The servers 108 can allocate quantum and classical computing resources in the hybrid computing environment, and delegate programs to the allocated computing resources for execution. The quantum computing resources in the hybrid environment may include, for example, one or more quantum processing units (QPUs), one or more quantum virtual machines (QVMs), one or more quantum simulators, or possibly other types of quantum resources. The classical computing resources in the hybrid environment may include, for example, one or more digital microprocessors, one or more specialized co-processor units (e.g., graphics processing units (GPUs), cryptographic co-processors, etc.), special purpose logic circuitry (e.g., field programmable gate arrays (FPGAs), application-specific integrated circuits (ASICs), etc.), systems-on-chips (SoCs), or other types of computing modules.

In some cases, the servers 108 can select the type of computing resource (e.g., quantum or classical) to execute an individual program, or part of a program, in the computing system 101. For example, the servers 108 may select a particular quantum processing unit (QPU) or other computing resource based on availability of the resource, speed of the resource, information or state capacity of the resource, a performance metric (e.g., process fidelity) of the resource, or based on a combination of these and other factors. In some cases, the servers 108 can perform load balancing, resource testing and calibration, and other types of operations to improve or optimize computing performance.

Each of the example quantum computing systems 103A, 103B shown in FIG. 1 can perform quantum computational tasks by executing quantum machine instructions (e.g., a binary program compiled for the quantum computing system). In some implementations, a quantum computing system can perform quantum computation by storing and manipulating information within quantum states of a composite quantum system. For example, qubits (i.e., quantum bits) can be stored in, and represented by, an effective two-level sub-manifold of a quantum coherent physical system. In some instances, quantum logic can be executed in a manner that allows large-scale entanglement within the quantum system. Control signals can manipulate the quantum states of individual qubits and the joint states of multiple qubits. In some instances, information can be read out from the composite quantum system by measuring the quantum states of the qubits. In some implementations, the quantum states of the qubits are read out by measuring the transmitted or reflected signal from auxiliary quantum devices that are coupled to individual qubits.

In some implementations, a quantum computing system can operate using gate-based models for quantum computing. For example, the qubits can be initialized in an initial state, and a quantum logic circuit comprised of a series of quantum logic gates can be applied to transform the qubits and extract measurements representing the output of the quantum computation. Individual qubits may be controlled by single-qubit quantum logic gates, and pairs of qubits may be controlled by two-qubit quantum logic gates (e.g., entangling gates that are capable of generating entanglement between the pair of qubits). In some implementations, a quantum computing system can operate using adiabatic or annealing models for quantum computing. For instance, the qubits can be initialized in an initial state, and the controlling Hamiltonian can be transformed adiabatically by adjusting control parameters to another state that can be measured to obtain an output of the quantum computation.

In some models, fault-tolerance can be achieved by applying a set of high-fidelity control and measurement operations to the qubits. For example, quantum error correcting schemes can be deployed to achieve fault-tolerant quantum computation. Other computational regimes may be used; for example, quantum computing systems may operate in non-fault-tolerant regimes. In some implementations, a quantum computing system is constructed and operated according to a scalable quantum computing architecture. For example, in some cases, the architecture can be scaled to a large number of qubits to achieve large-scale general purpose coherent quantum computing. Other architectures may be used; for example, quantum computing systems may operate in small-scale or non-scalable architectures.

The example quantum computing system 103A shown in FIG. 1 includes a quantum processing unit 102A and a control system 105A, which controls the operation of the quantum processing unit 102A. Similarly, the example quantum computing system 103B includes a quantum processing unit 102B and a control system 105B, which controls the operation of a quantum processing unit 102B. A quantum computing system may include additional or different features, and the components of a quantum computing system may operate as described with respect to FIG. 1 or in another manner.

In some instances, all or part of the quantum processing unit 102A functions as a quantum processor, a quantum memory, or another type of subsystem. In some examples, the quantum processing unit 102A includes a quantum circuit system. The quantum circuit system may include qubit devices, readout devices, and possibly other devices that are used to store and process quantum information. The quantum processing unit 102A includes a superconducting quantum circuit, and the superconducting quantum circuit includes two qubit devices operatively coupled to each other by a coupler device. The two qubit devices include at least one tunable-frequency qubit device and a second qubit device. The tunable-frequency qubit device is implemented as a superconducting quantum circuit device that include Josephson junctions, for example, in Superconducting Quantum Interference Device (SQUID) loops or other arrangements, and are controlled by radio-frequency signals, microwave signals, and flux bias signals delivered to the quantum processing unit 102A.

In some examples, the second qubit device may be implemented as a tunable-frequency qubit device with a tunable transition frequency, or a fixed-frequency qubit device with a fixed transition frequency. In some examples, each ach of the two qubit devices can be a floating qubit device with two respective qubit electrodes electrically floating at a certain potential (without being conductively connected to a ground plane, or to a grounded electrode of a qubit device). In some instances, the coupler device can be a tunable-frequency coupler device with a tunable transition frequency or a fixed-frequency coupler device. In some examples, when the coupler device is a tunable-frequency coupler device, the effective coupling strength between the two qubit devices can be calibrated and tuned to activate or deactivate the coupling between the two qubit devices. In some instances, the tunable-frequency coupler devices have two coupler electrodes electrically floating at a certain potential, without being conductively connected to the ground plane.

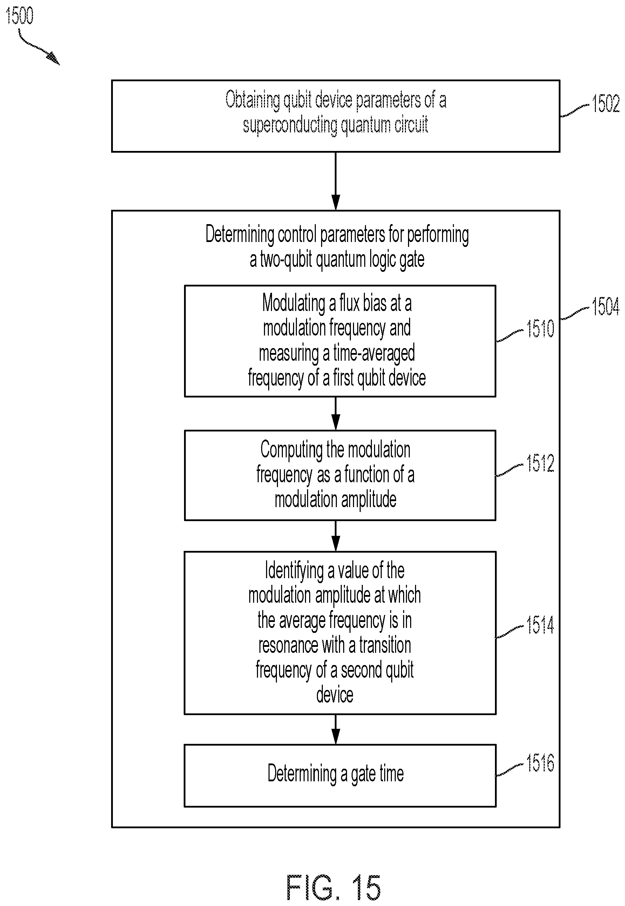

In some implementations, control signals are communicated to the quantum circuit devices of the superconducting quantum circuit for performing quantum logic operations. Values of control parameters of the control signals are determined according to device parameters of the quantum circuit devices, which can be obtained by performing a calibration process (e.g., with respective to operations in the example process 1500 in FIG. 15) or another process. For example, a range of operating frequencies (e.g., a tunable range of the transition frequency on which the tunable-frequency qubit device operates) and anharmonicities of the tunable-frequency qubit device, a transition frequency of the second qubit device (e.g., when the second qubit device is a fixed-frequency qubit device), a tunable range of transition frequency of the second qubit device (e.g., when the second qubit device is a tunable-frequency qubit device), a range of transition frequency of the coupler device (e.g., when the coupler device is a tunable-frequency coupler device) can be obtained and further used to determine the control parameters of the control signals.

In some implementations, a flux modulation signal configured to modulate a transition frequency of the tunable-frequency qubit device in the quantum processing unit 102 is generated by, and communicated from, the example control system 105 to the tunable-frequency qubit device of the quantum processing unit 102 on respective signal lines. The flux modulation signal modulates the magnetic flux bias applied in the superconducting circuit loop of the tunable-frequency qubit device causing a modulation of the transition frequency of the tunable-frequency qubit device. The flux modulation signal is characterized by a flux modulation frequency and a flux modulation amplitude. A value of the flux modulation frequency can be determined such that a time average of the transition frequency of the tunable-frequency qubit device over a duration when the flux modulation signal is applied is on resonance with a transition frequency of the second qubit device of the quantum processing unit 102. In some implementations, the flux modulation frequency of the flux modulation signal applied on the tunable-frequency qubit device has a value greater than a threshold frequency value that activates interactions between the first tunable-frequency qubit device and the second qubit device. In some implementations, the flux modulation frequency of the flux modulation signal applied on the tunable-frequency qubit device has a value not equal to a subharmonic of the difference between the time average of the transition frequency of the first tunable-frequency qubit device and the transition frequency of the second qubit device. In some implementations, other control parameters for performing a two-qubit quantum logic gate can be also determined, for example, a gate time for the two-qubit quantum logic gate, parking, and gate-activating values of a coupler flux bias applied on the coupler device, and other control parameters.

In some cases, the quantum processing unit 102A includes an ion trap system, and the qubit devices are implemented as trapped ions controlled by optical signals delivered to the quantum processing unit 102A. In some cases, the quantum processing unit 102A includes a spin system, and the qubit devices are implemented as nuclear or electron spins controlled by microwave or radio-frequency signals delivered to the quantum processing unit 102A. The quantum processing unit 102A may be implemented based on another physical modality of quantum computing.

The quantum processing unit 102A may include, or may be deployed within, a controlled environment. The controlled environment can be provided, for example, by shielding equipment, cryogenic equipment, and other types of environmental control systems. In some examples, the components in the quantum processing unit 102A operate in a cryogenic temperature regime and are subject to very low electromagnetic and thermal noise. For example, magnetic shielding can be used to shield the system components from stray magnetic fields, optical shielding can be used to shield the system components from optical noise, thermal shielding and cryogenic equipment can be used to maintain the system components at controlled temperature, etc.

In some implementations, the example quantum processing unit 102A can process quantum information by applying control signals to the qubits in the quantum processing unit 102A. The control signals can be configured to encode information in the qubits, to process the information by performing quantum logic gates or other types of operations, or to extract information from the qubits. In some examples, the operations can be expressed as single-qubit quantum logic gates, two-qubit quantum logic gates, or other types of quantum logic gates that operate on one or more qubits. A quantum logic circuit, which includes a sequence of quantum logic operations, can be applied to the qubits to perform a quantum algorithm. The quantum algorithm may correspond to a computational task, a hardware test, a quantum error correction procedure, a quantum state distillation procedure, or a combination of these and other types of operations.

The example control system 105A includes controllers 106A and signal hardware 104A. Similarly, control system 105B includes controllers 106B and signal hardware 104B. All or part of the control systems 105A, 105B can operate in a roomtemperature environment or another type of environment, which may be located near the respective quantum processing units 102A, 102B. In some cases, the control systems 105A, 105B include classical computers, signaling equipment (microwave, radio, optical, bias, etc.), electronic systems, vacuum control systems, refrigerant control systems, or other types of control systems that support operation of the quantum processing units 102A, 102B.

The control systems 105A, 105B may be implemented as distinct systems that operate independent of each other. In some cases, the control systems 105A, 105B may include one or more shared elements; for example, the control systems 105A, 105B may operate as a single control system that operates both quantum processing units 102A, 102B. Moreover, a single quantum computer system may include multiple quantum processing units, which may operate in the same controlled (e.g., cryogenic) environment or in separate environments.

The example signal hardware 104A includes components that communicate with the quantum processing unit 102A. The signal hardware 104A may include, for example, waveform generators, amplifiers, digitizers, high-frequency sources, DC sources, AC sources, etc. The signal hardware may include additional or different features and components. In the example shown, components of the signal hardware 104A are adapted to interact with the quantum processing unit 102A. For example, the signal hardware 104A can be configured to operate in a particular frequency range, configured to generate and process signals in a particular format, or the hardware may be adapted in another manner.

In some instances, one or more components of the signal hardware 104A generate control signals, for example, based on control information from the controllers 106A. The control signals can be delivered to the quantum processing unit 102A during operation of the quantum computing system 103A. For instance, the signal hardware 104A may generate signals to implement quantum logic operations, readout operations, or other types of operations. As an example, the signal hardware 104A may include arbitrary waveform generators (AWGs) that generate electromagnetic waveforms (e.g., microwave or radio-frequency) or laser systems that generate optical waveforms. The waveforms or other types of signals generated by the signal hardware 104A can be delivered to devices in the quantum processing unit 102A to operate qubit devices, readout devices, bias devices, coupler devices, or other types of components in the quantum processing unit 102A.

In some instances, the signal hardware 104A receives and processes signals from the quantum processing unit 102A. The received signals can be generated by the execution of a quantum program on the quantum computing system 103A. For instance, the signal hardware 104A may receive signals from the devices in the quantum processing unit 102A in response to readout or other operations performed by the quantum processing unit 102A. Signals received from the quantum processing unit 102A can be mixed, digitized, filtered, or otherwise processed by the signal hardware 104A to extract information, and the information extracted can be provided to the controllers 106A or handled in another manner. In some examples, the signal hardware 104A may include a digitizer that digitizes electromagnetic waveforms (e.g., microwave or radio-frequency) or optical signals, and a digitized waveform can be delivered to the controllers 106A or to other signal hardware components. In some instances, the controllers 106A process the information from the signal hardware 104A and provide feedback to the signal hardware 104A; based on the feedback, the signal hardware 104A can in turn generate new control signals that are delivered to the quantum processing unit 102A.

In some implementations, the signal hardware 104A includes signal delivery hardware that interfaces with the quantum processing unit 102A. For example, the signal hardware 104A may include filters, attenuators, directional couplers, multiplexers, diplexers, bias components, signal channels, isolators, amplifiers, power dividers, and other types of components. In some instances, the signal delivery hardware performs preprocessing, signal conditioning, or other operations to the control signals to be delivered to the quantum processing unit 102A. In some instances, signal delivery hardware performs preprocessing, signal conditioning, or other operations on readout signals received from the quantum processing unit 102A.

The example controllers 106A communicate with the signal hardware 104A to control operation of the quantum computing system 103A. The controllers 106A may include classical computing hardware that directly interface with components of the signal hardware 104A. The example controllers 106A may include classical processors, memory, clocks, digital circuitry, analog circuitry, and other types of systems or subsystems. The classical processors may include one or more single- or multi-core microprocessors, digital electronic controllers, special purpose logic circuitry, e.g., an FPGA (field programmable gate array) or an ASIC (application specific integrated circuit), or other types of data processing apparatus. The memory may include any type of volatile or non-volatile memory or another type of computer storage medium. The controllers 106A may also include one or more communication interfaces that allow the controllers 106A to communicate via the local network 109 and possibly other channels. The controllers 106A may include additional or different features and components.

In some implementations, the controllers 106A include memory or other components that store quantum state information, for example, based on qubit readout operations performed by the quantum computing system 103A. For instance, the states of one or more qubits in the quantum processing unit 102A can be measured by qubit readout operations, and the measured state information can be stored in a cache or other type of memory system in or more of the controllers 106A. In some cases, the measured state information is subsequently used in the execution of a quantum program, a quantum error correction procedure, a quantum processing unit (QPU) calibration or testing procedure, or another type of quantum process.

In some implementations, the controllers 106A include memory or other components that store a quantum program containing quantum machine instructions for execution by the quantum computing system 103A. In some instances, the controllers 106A can interpret the quantum machine instructions and perform hardware-specific control operations according to the quantum machine instructions. For example, the controllers 106A may cause the signal hardware 104A to generate control signals that are delivered to the quantum processing unit 102A to execute the quantum machine instructions.

In some instances, the controllers 106A extract qubit state information from qubit readout signals, for example, to identify the quantum states of qubits in the quantum processing unit 102A or for other purposes. For example, the controllers may receive the qubit readout signals (e.g., in the form of analog waveforms) from the signal hardware 104A, digitize the qubit readout signals, and extract qubit state information from the digitized signals. In some cases, the controllers 106A compute measurement statistics based on qubit state information from multiple shots of a quantum program. For example, each shot may produce a bitstring representing qubit state measurements for a single execution of the quantum program, and a collection of bitstrings from multiple shots may be analyzed to compute quantum state probabilities.

In some implementations, the controllers 106A include one or more clocks that control the timing of operations. For example, operations performed by the controllers 106A may be scheduled for execution over a series of clock cycles, and clock signals from one or more clocks can be used to control the relative timing of each operation or groups of operations. In some implementations, the controllers 106A may include classical computer resources that perform some or all of the operations of the servers 108 described above. For example, the controllers 106A may operate a compiler to generate binary programs (e.g., full or partial binary programs) from source code; the controllers 106A may include an optimizer that performs classical computational tasks of a hybrid classical/quantum program; the controllers 106A may update binary programs (e.g., at runtime) to include new parameters based on an output of the optimizer, etc.

The other quantum computer system 103B and its components (e.g., the quantum processing unit 102B, the signal hardware 104B, and controllers 106B) can be implemented as described above with respect to the quantum computer system 103A; in some cases, the quantum computer system 103B and its components may be implemented or may operate in another manner.

In some implementations, the quantum computer systems 103A, 103B are disparate systems that provide distinct modalities of quantum computation. For example, the computer system 101 may include both an adiabatic quantum computer system and a gate-based quantum computer system. As another example, the computer system 101 may include a superconducting circuit-based quantum computer system and an ion trap-based quantum computer system. In such cases, the computer system 101 may utilize each quantum computing system according to the type of quantum program that is being executed, according to availability or capacity, or based on other considerations.

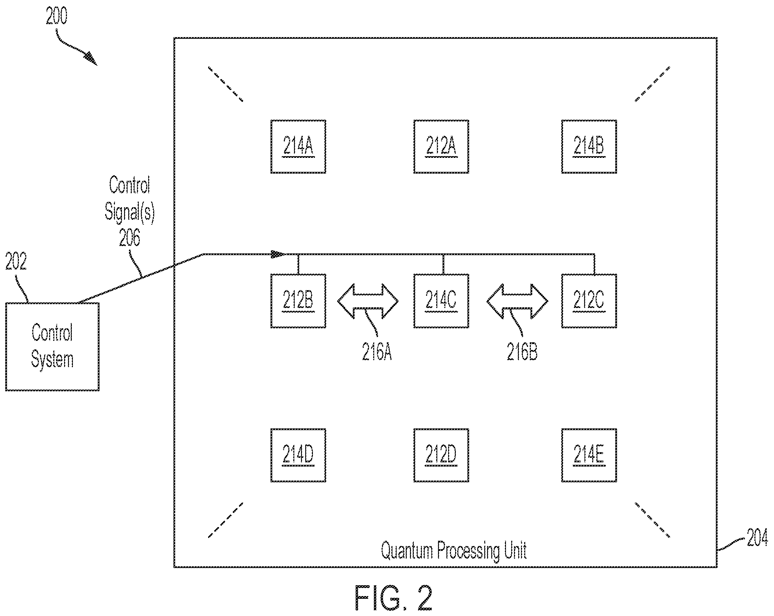

FIG. 2 is a block diagram showing devices and interactions in an example quantum computing system 200. The example quantum computing system 200 includes a control system 202 and a superconducting quantum processing unit 204. The example superconducting quantum processing unit 204 includes a device array, which includes quantum circuit devices arranged in a two-dimensional or three-dimensional lattice structure. Nine of the quantum circuit devices in the device array are shown in FIG. 2. In particular, FIG. 2 shows four qubit devices 212, e.g., 212A, 212B, 212C, 212D and five coupler devices 214, e.g., 214A, 214B, 214C, 214D, 214E. The quantum computing system 200 may include additional or different features, and the components may be arranged in another manner.

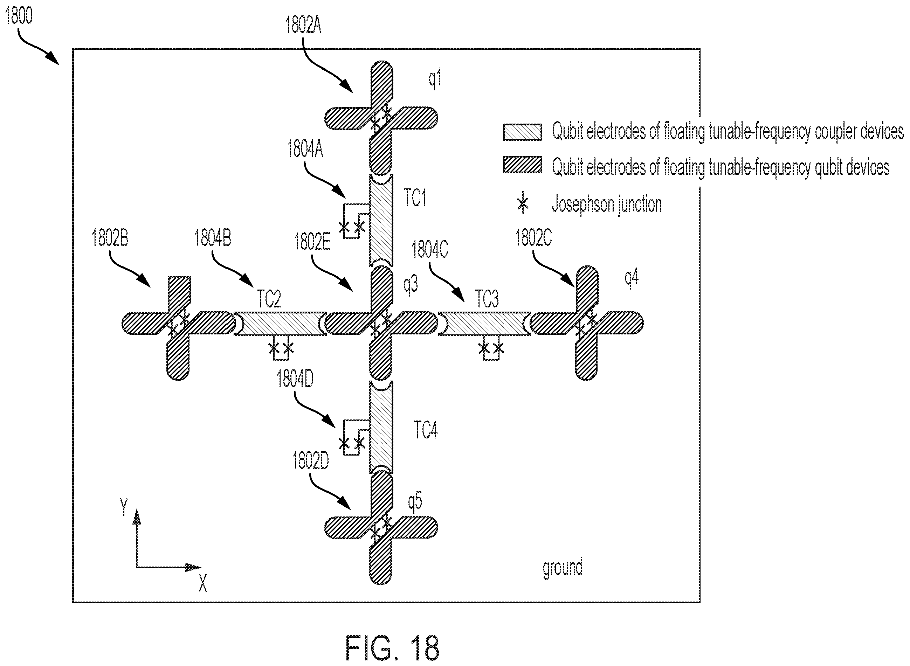

In the example shown in FIG. 2, the quantum circuit devices are arranged in a rectilinear (e.g., rectangular, or square) array that extends in two spatial dimensions (e.g., in the plane of the page). In some implementations, the devices can be arranged in another type of ordered array. In some instances, the rectilinear array also extends in a third spatial dimension (e.g., in/out of the page), for example, to form a cubic array or another type of three-dimensional array. For example, the devices can be arranged in device arrays 1800, 2000, and 2100 shown in FIGS. 18, 20, and 21. The superconducting quantum processing unit 204 may include additional devices, including additional qubit devices, readout resonators, or other quantum circuit devices.

In some implementations, the control system 202 interfaces with the superconducting quantum processing unit 204 through a signal delivery system that includes connector hardware elements. For example, the connector hardware elements of the control system 202 can include signal lines, signal processing hardware, filters, feedthrough devices (e.g., light-tight feedthroughs, etc.), and other types of components. In some implementations, the control system connector hardware can span multiple different temperature and noise regimes. For example, the connector hardware elements can include a series of temperature stages operating at different temperatures, e.g., 60 Kelvin (K), 3 K, 800 milli Kelvin (mK), 150 mK, that decrease between a higher temperature regime of the example control system 202 and a lower temperature regime of the example superconducting quantum processing unit 204.

In some implementations, the qubit devices 212 are housed between neighboring pairs of the coupler devices 214 in a device array within the superconducting quantum processing unit 204. Quantum states (e.g., qubits) of respective qubit devices 212 can be manipulated by control signals, or read by readout signals, generated by the control system 202. The qubit devices 212 can be controlled individually, for example, by delivering control signals to the respective qubit devices 212. In some cases, a set of neighboring quantum circuit devices (e.g., the qubit devices 212B, 212C and the coupler device 214C) is controlled jointly by delivering control signals to the set. In some cases, readout devices can detect the states of the qubit devices 212, for example, by interacting directly with the respective qubit devices 212.

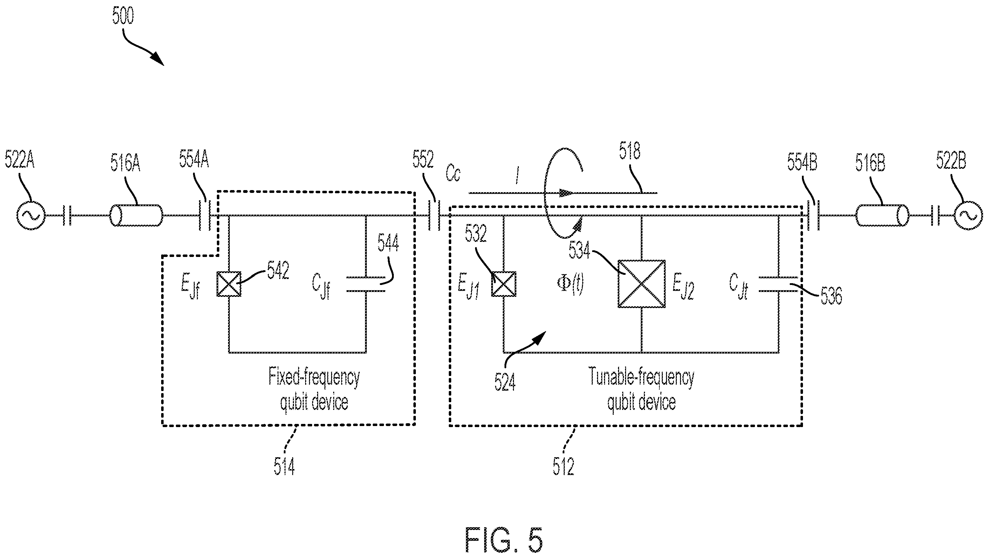

In the example shown in FIG. 2, the energy difference *E* between any two adjacent energy levels in a qubit device 212 can be represented as a transition frequency *ω* of the qubit device (e.g., according to *ω* = *E*/*ℏ*). In some examples, a transition frequency of a qubit device 212 is tunable (e.g., a tunable-frequency qubit device), for example, by application of an offset field. In some instances, a superconducting tunable-frequency qubit device may include a tunable transmon qubit device, a flux qubit device, a capacitively shunted flux qubit device, a flatsonium qubit device, a fluxonium qubit device, or another type of tunable-frequency qubit device. In some implementations, a tunable-frequency qubit device includes a superconducting circuit loop (e.g., a SQUID loop), which can receive a magnetic flux that tunes the transition frequency of the tunable-frequency qubit device. As an example, the superconducting circuit loop may include two Josephson junctions connected in parallel, and the tunable-frequency qubit device may also include a shunt capacitor in parallel with the two Josephson junctions. For another example, the superconducting circuit loop may include three Josephson junctions, a single Josephson junction, and a linear indicator in parallel, or another loop. In some implementations, the transition frequency of the tunable-frequency qubit device may be defined at least in part by Josephson energies of the two Josephson junctions, a capacitance of the shunt capacitor, and a magnetic flux threading the superconducting circuit loop. In some implementations, the qubit devices 212 may be implemented as the first/second qubit devices 512, 912/914, 1002/1004, 1912/1914, or 2202/2204 shown in FIGS. 5, 9, 10, 19, 22, or in another manner.

In some examples, the transition frequency of a qubit device 212 is not tunable by application of an offset field and is independent of magnetic flux experienced by the qubit device 212. For instance, a fixed-frequency qubit device may have a fixed transition frequency that is defined by an electronic circuit of the qubit device. As an example, a fixed-frequency qubit device (e.g., a fixed-frequency transmon qubit device) may be implemented without a SQUID loop. In some examples, the fixed-frequency qubit device includes one Josephson junction and a shunt capacitor, and the transition frequency of the fixed-frequency qubit device is defined at least in part by a Josephson energy of the Josephson junction and a capacitance of the shunt capacitor, which is independent of a magnetic flux experienced by the fixed-frequency qubit device. In some implementations, the qubit devices 212 may be implemented as the fixed-frequency qubit devices 514 FIG. 5, or in another manner.

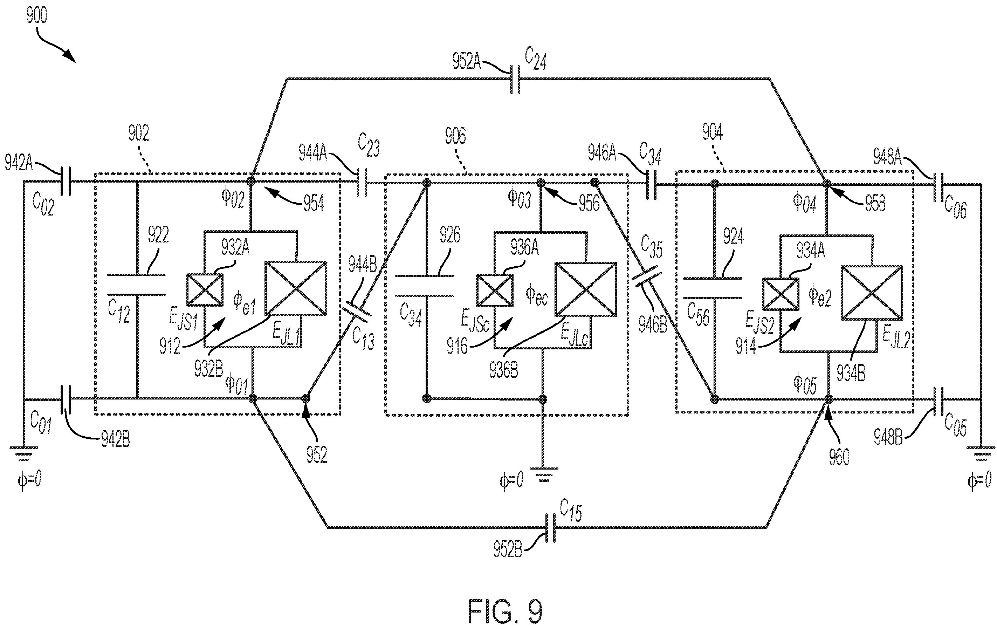

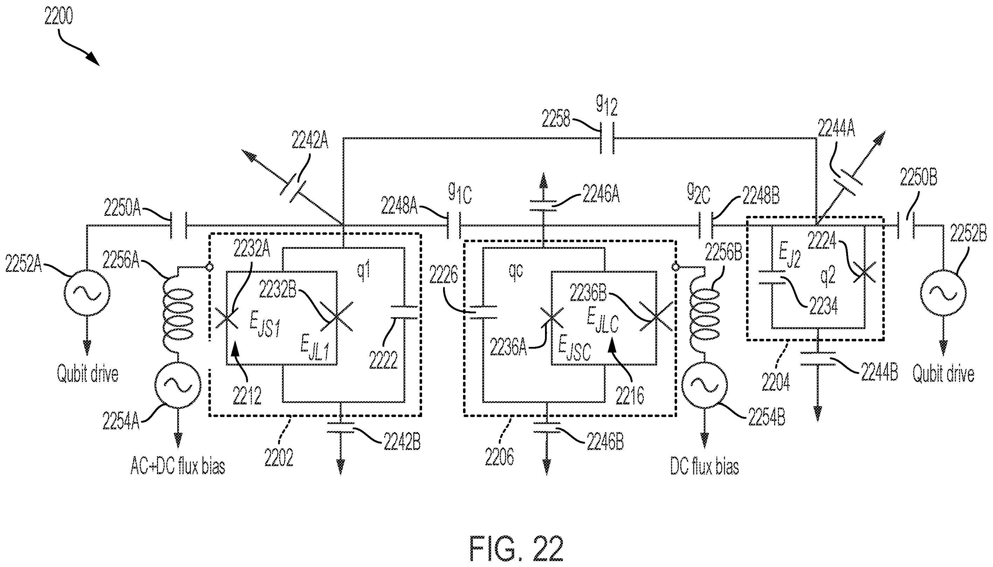

In certain instances, the qubit device 212 includes one qubit electrode. In this case, the qubit device 212 is considered a "grounded" qubit device when the one or more Josephson junctions of the qubit device 212 are connected between the qubit electrode and a ground plane (e.g., two or more Josephson junctions may be connected in parallel between the qubit electrode and a ground plane); and the shunt capacitor is defined by capacitance between the qubit electrode and the ground plane. In other instances, the qubit device 212 includes two qubit electrodes. In this case, the qubit device 212 is considered a "floating" qubit device when the one or more Josephson junctions of the qubit device 212 are connected between the two qubit electrodes that are not directly connected to ground (e.g., two or more Josephson junctions may be connected in parallel between the two qubit electrodes, as in the examples shown in FIGS. 9, 19, 22); and the shunt capacitor is defined by capacitance between the two qubit electrodes. In some instances, when the coupler device includes two coupler electrodes, the two coupler electrodes are electrically floating at a certain potential without being conductively connected to a ground plane. In other words, neither of the two coupler electrodes is conductively coupled to ground. In this case, the two coupler electrodes of the coupler device can be capacitively coupled to the ground plane, e.g., through a residual capacitance between each of the two coupler electrodes and the ground plane (e.g., as the tunable-frequency coupler device 2206 shown in FIG. 22).

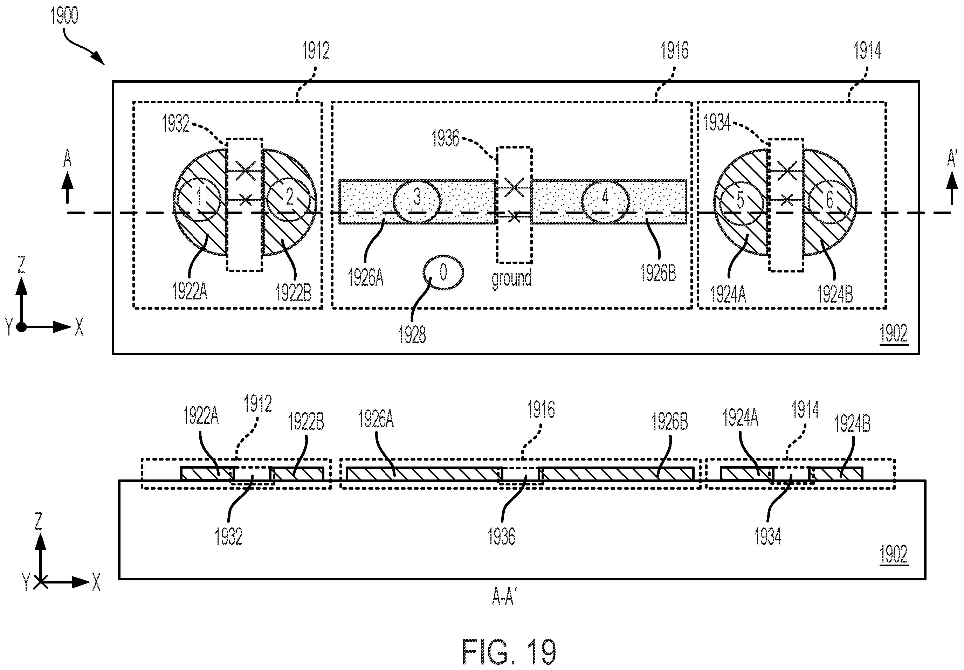

The coupler devices 214A, 214B, 214C, 214D, 214E may be implemented by transmon qubit devices, flux qubit devices, flatsonium qubit devices, fluxonium qubit devices, or other types of tunable-frequency qubit devices. In some implementations, the coupler device 214 is a tunable-frequency coupler device. In certain examples, a tunable-frequency coupler device may include a superconducting circuit loop (e.g., a SQUID loop), which can receive a coupler flux bias that tunes the transition frequency of the tunable-frequency coupler device. In some instances, a tunable-frequency coupler device includes two coupler electrodes; the two Josephson junctions of the tunable-frequency coupler device are connected in parallel between the two coupler electrodes; the shunt capacitor is caused by the two coupler electrodes. In this case, the tunable-frequency coupler device is a tunable-frequency "floating" coupler device. In some implementations, the coupler devices 214 may be implemented as the tunable-frequency coupler device 1916, 2206 shown in FIGS. 19, 22, or in another manner. In some implementations, the coupler devices 214 may be implemented as the tunable "grounded" coupler device 916 shown in FIG. 9, or in another manner. In some implementations, the coupler devices 214 may be implemented as a fixed-frequency coupler device 552 shown in FIG. 5, or in another manner.

As a particular example, FIG. 9 shows an equivalent circuit of example tunable-frequency qubit devices 902, 904, which include respective superconducting circuit loops 912, 914. Each of the respective superconducting circuit loops 912, 914 can receive a magnetic flux *Φ*(*t*) that controls the transition frequency of the example tunable-frequency qubit devices 902, 904. Manipulating the magnetic flux *Φ*(*t*) through the superconducting circuit loop 912, 914 can increase or decrease the transition frequencies of the example tunable-frequency floating qubit devices 902, 904. In this example, the magnetic flux *Φ*(*t*) through the superconducting circuit loops 912, 914 are offset fields that can be modified in order to tune the transition frequencies of the tunable-frequency qubit devices 902, 904. In some cases, inductors or other types of flux bias elements as part of control lines carrying the control signals 206 are coupled to the respective superconducting circuit loops 912, 914 by respective mutual inductances, and the magnetic flux *Φ*(*t*) through the superconducting circuit loops 912, 914 can be controlled by the current through the inductors.

In certain examples, an offset field can be, for example, a magnetic flux bias, a DC electrical voltage, or another type of field. In some implementations, the tunability of the qubit devices 212A, 212B, 212C, 212D, in the superconducting quantum processing unit 204 allows pairs of qubit devices to be selectively coupled on-demand to perform multi-qubit quantum logic gates, to entangle pairs of qubits defined by pairs of qubit devices 212, or to perform other types of control operations. The qubit devices can have a high "on/off" ratio, which refers to the ratio of the effective coupling strength provided by control of the tunable-frequency coupler device. In some implementations, the coupler devices 214A, 214B, 214C, 214D, 214E, when activated or deactivated, can enable or disable coupling between two neighboring qubit devices 212, respectively.

In some instances, information is encoded in the qubit devices in the superconducting quantum processing unit 204, and the information can be processed by operation of the qubit devices 212A, 212B, 212C, 212D. For instance, input information can be encoded in the computational states or computational subspaces defined by some or all of the qubit devices 212 in the superconducting quantum processing unit 204. The information can be processed, for example, by applying a quantum algorithm or other operations to the input information. The quantum algorithm may be decomposed as quantum logic gates or instruction sets that are performed by the qubit devices 212 and coupler devices 214 over a series of clock cycles. For instance, a quantum algorithm may be executed by a combination of single-qubit quantum logic gates and two-qubit quantum logic gates. In some cases, information is processed in another manner. Processing the information encoded in the qubit devices 212 can produce output information that can be extracted from the qubit devices 212. The output information can be extracted, for example, by performing state tomography or individual readout operations. In some instances, the output information is extracted over multiple clock cycles or in parallel with the processing operations.

In some aspects of operation, the control system 202 communicates control signals to the qubit devices 212 in the superconducting quantum processing unit 204. The control signals can be configured to modulate, increase, decrease, or otherwise manipulate the transition frequencies of the qubit devices 212A, 212B, 212C, 212D (e.g., when the qubit devices are tunable-frequency qubit devices). In some implementations, a control signal 206 includes a flux bias signal that varies a magnetic flux experienced by the tunable-frequency qubit device, and varying the magnetic flux can change the transition frequency of the tunable-frequency qubit device. A control signal 206 includes a flux modulation signal that is configured to modulate a transition frequency of a tunable-frequency qubit device at a certain flux modulation frequency and a certain flux modulation amplitude. A control signal 206 includes a microwave drive signal that is configured to drive the qubit at the transition frequency in order to apply a two-qubit quantum logic gate. A control signal 206 can be a direct current (DC) signal communicated from the control system 202 to the individual qubit device 212. In some implementations, a control signal can be an alternating current (AC) signal communicated from the control system 202 to the individual qubit device 212. In some cases, the AC signal may be superposed with a direct current (DC) signal. Other types of control signals may be used.

In the example shown in FIG. 2, when the coupler device 214C is a tunable-frequency coupler device, the control system 202 communicates control signals 206 to the coupler device 214C to generate interactions between the coupler device 214C and the neighboring qubit devices 212B, 212C. For instance, the control signals 206 can generate a first interaction 216A between the qubit device 212B and the coupler device 214C, a second interaction 216B between the qubit device 212C and the coupler device 214C, or a combination of them in series or in parallel. In some cases, the control signals 206 can generate an interaction that is mediated by the coupler device 214C. For instance, the control signals 206 may generate an interaction between a pair of the tunable devices 212B, 212C in which the coupler device 214C mediates the interaction generated by the control signals 206 (e.g., as in the examples described below).

In some implementations, the control signals 206 are configured to generate interactions that perform quantum logic gates on the qubits defined by the qubit devices. For example, in some cases, one or more of the control signals 206 generate an interaction that applies a two-qubit quantum logic gate to a pair of qubits defined by two of the qubit devices 212 coupled through a coupler device 214 in the superconducting quantum processing unit 204. A control signal 206 may be a current signal, a voltage signal, or another type of electrical signal which can be used to control a control line, for example with a flux bias element, to modulate a flux bias signal so as to modulate a magnetic flux and generate a modulated magnetic flux (e.g., a modulated flux bias). In this case, the control signals 206 activate two-qubit quantum logic gates by modulating a transition frequency of a qubit device 212, and/or tuning a transition frequency of the coupler device 214C.

In some cases, when a qubit device 212C is a tunable-frequency qubit device, the control line (which receives the control signal 206) may include a flux bias element that is inductively coupled to a superconducting circuit loop of the qubit device 212C to control the magnetic flux through the superconducting circuit loop in the qubit device 212C. The control signal 206 may cause the flux bias element to modulate the magnetic flux at a flux modulation frequency. In some instances, the control line and the superconducting circuit loop are implemented as the control line 518 and the superconducting circuit loop 524 shown in FIG. 5.

In some instances, the control system 202 identifies a quantum logic gate to be applied to a pair of qubits in the superconducting quantum processing unit 204. The pair of qubits includes, for example, a first qubit defined by the qubit device 212B and a second qubit defined by the qubit device 212C in the qubit device array through the coupler device 214C. The control signal 206 can be configured to turn on the coupler device 214C (e.g., when the coupler device 214C is a tunable-frequency coupler device) to enable the coupling between the qubit devices 212B and 212C. The control signal 206 can be further configured to perform a control operation (e.g., two-qubit quantum logic gate) on the qubit devices 212B, 212C. The control system 202 can perform the quantum logic gate by communicating the control signal 206 to a control line that is coupled to the coupler device 214C in the superconducting quantum processing unit 204. In some implementations, the control signal 206 can be further configured to perform a calibration process to determine device parameters and control parameters for activating the quantum logic gate; for enabling and disabling the coupling between the two qubit devices 212, and for other control operations.

The control parameters of the control signal 206 can be selected to achieve a specified multi-qubit quantum logic gate. In some systems, applying the two-qubit quantum logic gate to the pair of qubits defined by a pair of tunable-frequency qubit devices may include applying any quantum logic gate from the XY family of gates, the controlled-phase family of gates, the iSWAP family of gates, or another family of gates. In some cases, applying the two-qubit quantum logic gate to the pair of qubits includes applying a controlled-phase gate (e.g., a controlled-Z gate) to the pair of qubits. In some cases, applying the two-qubit quantum logic gate to the pair of qubits includes applying a Bell-Rabi gate, a square-root-of-Bell-Rabi gate, or another two-photon gate to the pair of qubits.

In some implementations, the control system 202, or another type of system associated with the quantum computing system 200, determines control parameters for applying two-qubit quantum logic gates in the superconducting quantum processing unit 204. For example, values of the control parameters for the control signal 206 may be determined by a gate calibration process defined in software, firmware, or hardware or a combination thereof. In some cases, the control system 202 executes a gate calibration process when the superconducting quantum processing unit 204 is first installed for use in the quantum computing system 200, and the gate calibration process may be repeated at other times (e.g., as needed, periodically, according to a calibration schedule, etc.). For instance, a gate calibration module may execute a calibration process that obtains values of device parameters of the qubit devices 212 and the coupler devices 214 in the superconducting quantum processing unit 204. For example, the device parameters include a range of qubit operating frequency and anharmonicity of the qubit devices 212 (e.g., when the qubit devices 212 are tunable-frequency qubit devices), an operating frequency and anharmonicity of the qubit devices 212 (e.g., when the qubit devices 212 are fixed-frequency qubit devices), and a coupling between the qubit devices and the tunable-frequency coupler devices, or another parameter.

In some instances, the values of the device parameters are used to determine values of control parameters for the control signal. In some implementations, the parameters for the control signal 206 may include the relative duration, relative phase, flux modulation frequency, flux modulation amplitude, or another parameter. When the qubit devices 212B, 212C are tunable-frequency qubit devices, the control signal with the determined parameters can be applied to one or more of the qubit devices 212B, 212C to bring the qubit devices 212B, 212C on resonance with each other. The control signal 206 can vary values of the magnetic flux applied to the coupler device 214C (e.g., when the coupler device 214C is a tunable-frequency coupler device) to determine a parking value which causes a total coupling strength of the qubit devices 212B, 212C to vanish or to be less than or equal to a predetermined threshold value. The control signal 206 can vary values of the magnetic flux applied to the coupler device 214C to determine a gate-activating value which corresponds to a maximal value of the total coupling strength. For example, the control parameters of the control signal for activating a two-qubit quantum logic gate (e.g., bringing the two qubit devices 212B, 212C on resonance) can be identified with respect to the example process 1500 shown in FIG 15, or in another manner. For another example, after the values of the control parameters of the control signals applied to the qubit devices are identified, control parameters of control signals applied on the coupler device 214C to minimize and maximize the coupling strength can be also identified to disable and enable the coupling between the two qubit devices 212B, 212C.

In some cases, the parking value of the coupler flux bias is determined based on a threshold value of the coupling strength between the qubits. The threshold value can be determined based on target operating parameters of the superconducting quantum processing unit or target operating parameters for processes (e.g., quantum logic gates or other operations) to be performed by the superconducting quantum processing unit 204. In some cases, the threshold value represents a maximum value of the coupling strength that is small enough to allow single-qubit gates (or other types of quantum logic gates) to be performed at or above a target gate fidelity. Zero coupling strength is often ideal, but a non-zero value of the coupling strength can be effectively equal to zero when it is small enough to still allow single-qubit gates to be performed at or above the target gate fidelity. In such cases, target control parameters may be achieved by using a parking value that minimizes the magnitude of the coupling strength or otherwise causes the magnitude of the coupling strength to be less than the threshold value (effectively equal to zero). Thus, a threshold value of the coupling strength can define a maximum value of the coupling strength that still preserves single-qubit gate fidelities above a target gate fidelity. Other types of gate fidelities and/or other criteria may be used to define a threshold value of the coupling strength.

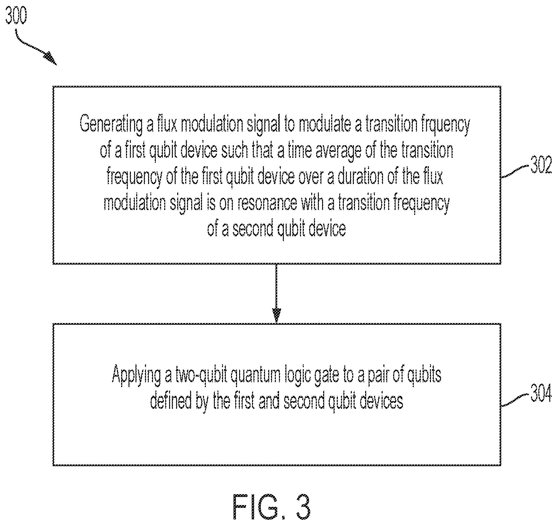

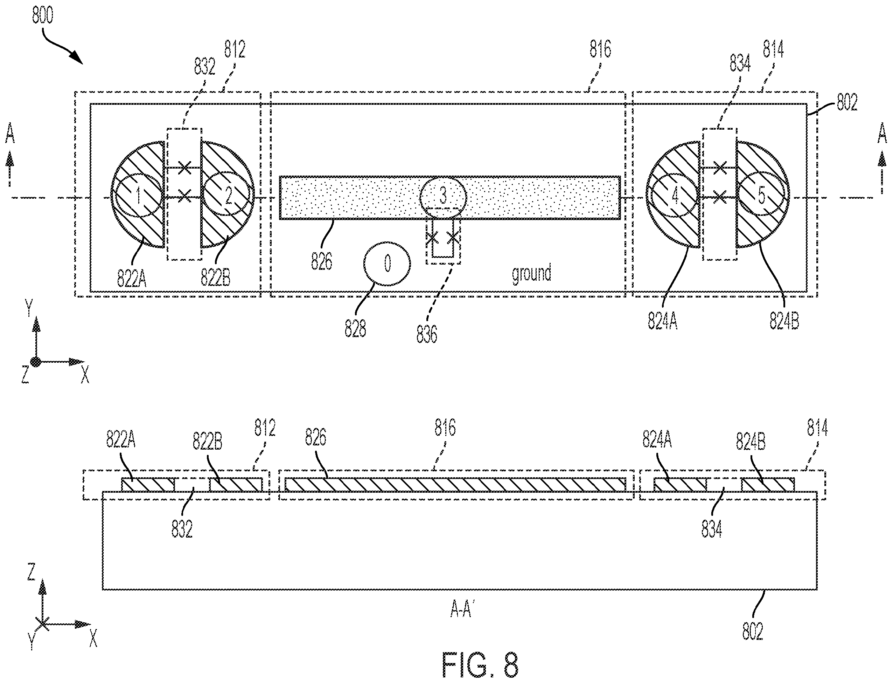

FIG. 3 is a flow chart showing aspects of an example process 300 for applying a two-qubit quantum logic gate. The example process 300 can be used, for example, to operate a superconducting quantum processing unit of a quantum computing system. For instance, the example process 300 may be used to bring two qubit devices of a superconducting quantum processing unit on resonance with each other to produce an interaction between the two qubit devices. In some implementations, the superconducting quantum processing unit includes at least one tunable-frequency qubit device. For example, the superconducting quantum processing unit may include a fixed-frequency qubit device and a tunable-frequency qubit device which can be implemented as the superconducting quantum processing unit 500 in FIG. 5, or two tunable-frequency qubit devices which can be implemented as the superconducting quantum processing units 800, 900, 1900, 2200 in FIGS. 8, 9, 19, 22. In some instances, the superconducting quantum processing unit includes a fixed-frequency coupler device (e.g., the fixed-frequency coupler device 552 in FIG. 5) or a tunable-frequency coupler device (e.g., the tunable-frequency coupler device 816, 906, 1916, 2206 in FIGS. 8, 9, 19, 22). In some implementations, the superconducting quantum processing unit may include other superconducting quantum circuit devices, for example, readout resonator devices, flux bias elements, control lines, connections (e.g., capacitive coupling, galvanic coupling, inductive coupling, or combinations thereof). The example process 300 may include additional or different operations, and the operations can be performed in the order shown or in another order.

In some implementations, one or more operations in the example process 300 can be performed by a computer system, for instance, by a digital computer system having one or more digital processors (e.g., a microprocessor or other data processing apparatus) that execute instructions (e.g., instructions stored in a digital memory or other computer-readable medium), or by another type of digital, quantum, or hybrid computer system. As an example, in some cases the superconducting quantum processing unit can be deployed as the superconducting quantum processing unit 102 shown in FIG. 1, and operations in the example process 300 shown in FIG. 3 can be controlled, executed, or initiated by one or more components of the control system 110 shown in FIG. 1. In some implementations, one or more operations in the example process 300 can be performed by a control system, for example, by a waveform generator or another type of system that generates radio frequency or microwave control signals based on signal parameters.

At 302, a flux modulation signal is generated. The flux modulation signal is configured to modulate a transition frequency of a first qubit device such that a time average of the transition frequency of the first qubit device over a duration of the flux modulation signal is on resonance with a transition frequency of a second qubit device. In some implementations, the first qubit device is a tunable-frequency qubit device; and the second qubit device may be a tunable-frequency qubit device or a fixed frequency qubit device. The first and second qubit devices are operably coupled to each other through a coupler device, e.g., a fixed-frequency coupler device or a tunable-frequency coupler device.

When the superconducting quantum processing unit includes a first tunable-frequency qubit device and a second tunable-frequency qubit device, the first and second tunable-frequency qubit devices can be brought on resonance with each other by tuning a transition frequency of the first tunable-frequency qubit device, for example, by modulating a flux bias in a first superconducting circuit loop associated with the first tunable-frequency qubit device. In some instances, the first tunable-frequency qubit device has a higher transition frequency than that of the second tunable-frequency qubit device. In some implementations, the qubit flux bias in the first superconducting circuit loop can be modulated by modulating the flux bias signal at a flux modulation frequency and a flux modulation amplitude, which causes a modulation of the transition frequency. In some implementations, when the qubit flux bias is modulated such that a time average of the transition frequency of the first tunable-frequency qubit device is on resonance with a transition frequency of the second tunable-frequency qubit device (e.g., a maximum transition frequency or another frequency of the second tunable-frequency qubit device), a two-qubit quantum logic gate is activated.

When the superconducting quantum processing unit includes a tunable-frequency qubit device and a fixed-frequency qubit device, the tunable-frequency and fixed-frequency qubit devices can be brought on resonance with each other by tuning the transition frequency of the tunable-frequency qubit device. In some implementations, when the qubit flux bias in a superconducting circuit loop associated with the tunable-frequency qubit device is modulated such that a time average of the transition frequency of the tunable-frequency qubit device is on resonance with a transition frequency of the fixed-frequency qubit device, a two-qubit quantum logic gate is activated.

In some implementations, the transition frequency of the first qubit device is modulated by communicating a flux modulation signal to the first qubit device via a respective flux bias control line. In some instances, the first qubit device includes a superconducting circuit loop and a flux bias element that applies a magnetic flux to the superconducting circuit loop of the first qubit device. When the flux modulation signal is communicated to the first qubit device, the flux modulation signal is communicated to the flux bias element on the flux bias control line such that the magnetic flux to the superconducting circuit loop is modulated. In some implementations, the flux modulation signal is characterized by a flux modulation frequency and a flux modulation amplitude. In some implementations, to activate a two-qubit quantum logic gate (e.g., iSWAP, CZ02, CZ20, and another two-qubit quantum logic gate), the flux modulation frequency of the flux modulation signal applied on the first qubit device has a value that is not equal to a subharmonic of the difference between the time average of the transition frequency of the first tunable-frequency qubit device and the transition frequency of the second qubit device. In some implementations, to activate a two-qubit quantum logic gate, the flux modulation frequency has a value that is greater than a threshold frequency value that activates interactions between the first qubit device and the second qubit device.

In some implementations, the first qubit device is communicably coupled with other quantum circuit devices in the quantum processing unit. For example, the first qubit device may have a connectivity of four (e.g., the tunable-frequency qubit device 1802E in FIG. 18), e.g., operably coupled to the second qubit device and three other qubit devices. In this case, the flux modulation frequency of the flux modulation signal applied on the first qubit device has a value that does not activate any interaction between the first qubit device and the three other qubit devices. In some implementations, the first qubit device and the second qubit device are coupled through a tunable-frequency coupler device. In this case, the flux modulation frequency of the flux modulation signal applied on the first qubit device has a value that does not activate any interaction between the first qubit device and the tunable-frequency coupler device. In some cases, the interaction between the first qubit device and the tunable-frequency coupler device can be active when the sideband of the modulated first qubit device is on resonance with the tunable-frequency coupler device. In some other implementations, the interaction between the first qubit device and the tunable-frequency coupler device can be activated when the average frequency the modulated first qubit devices is on resonance with the tunable-frequency coupler device.

In some instances, a two-qubit quantum logic gates can be operated at a frequency value (e.g., tens of MHz or another value) away from the maximum transition frequency (e.g., DC flux insensitive point) of the first qubit device to reduce the dephasing time of the first qubit device.

In some implementations, control parameters for control signals (e.g., the flux modulation frequency, flux modulation amplitude of the flux modulation signal to the first qubit device) are determined by operation of a control system based on device parameters. The device parameters representing the quantum circuit devices in a superconducting quantum processing unit can be determined by performing a measurement or characterization process, a calibration process, or another type of process. For example, a calibration process can be executed in a quantum computing system to obtain the device parameters for each of the quantum circuit devices in the superconducting quantum processing unit. In some instances, a calibration process can characterize the quantum circuit devices that a quantum logic gate operation is to be applied to. In some cases, the calibration process can also characterize neighboring qubit devices in the superconducting quantum processing unit. In certain examples, the process for obtaining the device parameters of the quantum circuit devices is executed by the control system 202 of FIG. 2 or by another component in a computing system (e.g., the computing system 101). In some implementations, a gate time for the two-qubit quantum logic gate is also determined. In some instances, the device parameters may be predetermined using another process, which can be stored and obtained in another manner.

In some implementations, the device parameters may include one or more of the device parameters of the tunable-frequency qubit devices (e.g., floating or grounded), the fixed-frequency qubit device, and the coupler device (e.g., floating or grounded, fixed-frequency or tunable-frequency) in the superconducting quantum processing unit. For example, device parameters, such as a range of operating frequencies (e.g., minimal and a maximal frequencies), and anharmonicity of each of the tunable-frequency qubit devices and the tunable-frequency coupler device involved in the interaction, the transition frequency of the fixed-frequency qubit device, or another qubit device parameter, may be obtained. In certain cases, the values of the device parameters may be used to determine values of control parameters for control signals.

At 304, a two-qubit quantum logic gate is applied to a pair of qubits defined by the first and second qubit devices. In the example shown, applying the two-qubit quantum logic gate includes communicating the flux modulation signal (generated at 302) to a flux bias control line coupled to the first qubit device. In some instances, when the two-qubit quantum logic gate is applied, a microwave drive signal can be generated, for example by operation of the control system 202 according to the determined control parameters of the microwave drive signal; and the microwave drive signal is communicated to the first qubit device on a respective qubit drive line. In some instances, when the two-qubit quantum logic gate is applied, a flux bias signal can be generated by operation of the control system; and the flux bias signal can be communicated to the coupler device (e.g., a tunable-frequency coupler device) for activating the coupling between the first and second qubit devices. In some implementations, other control signals are also communicated to other quantum circuit devices, when the two-qubit quantum logic gate is applied. For example, when the first and second qubit devices are operably coupled by a tunable-frequency a coupler flux bias signal can be communicated to the tunable-frequency coupler device to shift the transition frequency from a parking value to a gate-activating value to activate the coupling between the first and second qubit devices. For another example, when the second qubit device is a tunable-frequency coupler device, qubit flux bias signal and qubit drive signal can be generated according to the control parameters and communicated to the second qubit devices.

In some implementations, the two qubits defined by the first and second qubit devices can be described by the Hamiltonian as below, $\begin{matrix}H = {\sum }_{k = 1}^{2} {ω}_{k} {\left|1\right〉}_{k} \left〈1\right| + \left(2{ω}_{k}-{η}_{k}\right) {\left|2\right〉}_{k} \left〈2\right| + {g}_{01} \left(\left|10\right〉\left〈01\right|+\left|01\right〉\left〈10\right|\right) \\ + {g}_{02} \left(\left|11\right〉\left〈02\right|+\left|02\right〉\left〈11\right|\right) + {g}_{20} \left(\left|11\right〉\left〈20\right|+\left|20\right〉\left〈11\right|\right) ,\end{matrix}$ (1) where |0〉, |1〉, |2〉 are the first three energy levels of each qubit, *ωₖ* is the transition frequency of respective qubit devices; *ηₖ* is the anharmonicity; *g*₀₁ is the coupling rate between |10〉 and |01〉; *g*₀₂ and *g*₂₀ are coupling rates between|11〉 and |02〉, and |11〉 and |20〉, respectively; and *k* = {1, 2} representing the first (*k =* 1) and the second (*k =* 2) qubit devices.

In some implementations, the first qubit device is a tunable-frequency qubit device, and the second qubit device is a fixed-frequency qubit device. In this case, a transition frequency of the tunable-frequency qubit device can be modulated by applying a flux bias of the form $Φ \left(t\right) = {Φ}_{dc} + {Φ}_{ac} \left(t\right) cos \left({ω}_{m}t+ϕ\right)$ (2) where *Φ_{dc}* is a static flux bias and *Φ_{ac}*(*t*) is a flux modulation amplitude, *ωₘ* is a flux modulation frequency, and *ϕ* is a flux modulation phase. In the limit where the parking value of the flux bias (e.g., the static flux bias *Φ_{dc}*) and when *Φ_{ac}* ≲ *Φ*₀/2, the transition frequency of the tunable-frequency qubit device can be modulated, which can be expressed in an approximate form given by: ${ω}_{{T}_{01}} \left(t\right) = {\overline{ω}}_{{T}_{01}} + δω cos \left(2{ω}_{m} t+2ϕ\right)$ (3) where *ω̅*_{*T*01} is the time average of the transition frequency of the tunable-frequency qubit device and *δω* is the frequency shift when a flux modulation signal (e.g., the flux bias as described in Equation (2) above) is applied. In a frame defined by ${H}_{0} = {\sum }_{k = 1}^{2} {ω}_{k} {\left|1\right〉}_{k} \left〈1\right| + \left(2{ω}_{k}-{η}_{k}\right) {\left|2\right〉}_{k} \left〈2\right|$ (4) the interaction Hamiltonian can be written as $H = {{g}^{˜}}_{01} \left(t\right) \left|10\right〉 \left〈10\right| + {{g}^{˜}}_{02} \left(t\right) \left|11\right〉 \left〈02\right| + {{g}^{˜}}_{20} \left(t\right) \left|11\right〉 \left〈20\right| + h . c .$ (5) where |*FT*〉 represents the state F defined by the fixed-frequency qubit device and the state T defined by the tunable-frequency qubit device, and $\begin{matrix}{{g}^{˜}}_{01} \left(t\right) = {g}_{01} {\sum }_{n = - ∞}^{∞} {J}_{n} \left(\frac{δω}{2 {ω}_{m}}\right) {e}^{i \left(2{nω}_{m}+{β}_{n}-Δ\right) t} , \\ {{g}^{˜}}_{02} \left(t\right) = {g}_{02} {\sum }_{n = - ∞}^{∞} {J}_{n} \left(\frac{δω}{2 {ω}_{m}}\right) {e}^{i \left(2{nω}_{m}+{β}_{n}-Δ-{η}_{2}\right) t} \\ {{g}^{˜}}_{20} \left(t\right) = {g}_{20} {\sum }_{n = - ∞}^{∞} {J}_{n} \left(\frac{δω}{2 {ω}_{m}}\right) {e}^{i \left(2{nω}_{m}+{β}_{n}-Δ+{η}_{1}\right) t}\end{matrix}$ (6) where *Δ* are the detunings between two states of the two qubits, e.g., *Δ* = *ω̅*_{*T*01} - *ω*₁, *βₙ* are the effective coupling rates under flux modulation, e.g., *βₙ =* (*ω̅*_{*T*01} /2*ωₘ*)sin(2*ϕ*) + (2*ϕ* + *π*)*n, ω̅*_{*T*01} is the time average of the transition frequency of the tunable-frequency qubit device, above. Please confirm.]] *Jₙ* is the Bessel function of the first kind, *g̃*₀₁ is the normalized coupling rate between |10〉 and |01〉, and *g̃*₀₂ and *g̃*₂₀ are the normalized coupling rates between|11〉 and |02〉, and |11〉 and |20〉, respectively, and *n* is an integer.

As shown in Equation (6) above, the coupling rates are normalized by the Bessel function of the first kind (*Jₙ*). In particular, when |*n*| ≥ 1, the value of the Bessel function of the first kind is approximately 0.7, e.g., *Jₙ* = 0.7, causing the normalized coupling rates between the first and second qubit devices become less than the respective coupling rates; and when n = 0, the normalized coupling rates shown in Equation (6) can be simplified and re-written in equations below: $\begin{matrix}{{g}^{˜}}_{01} = {g}_{01} {J}_{0} \left(\frac{δω}{2 {ω}_{m}}\right) {e}^{- iΔt} , \\ {{g}^{˜}}_{02} = {g}_{02} {J}_{0} \left(\frac{δω}{2 {ω}_{m}}\right) {e}^{- i \left(Δ+{η}_{2}\right) t} , \\ {{g}^{˜}}_{20} = {g}_{20} {J}_{0} \left(\frac{δω}{2 {ω}_{m}}\right) {e}^{- i \left(Δ-{η}_{1}\right) t} .\end{matrix}$ (7)

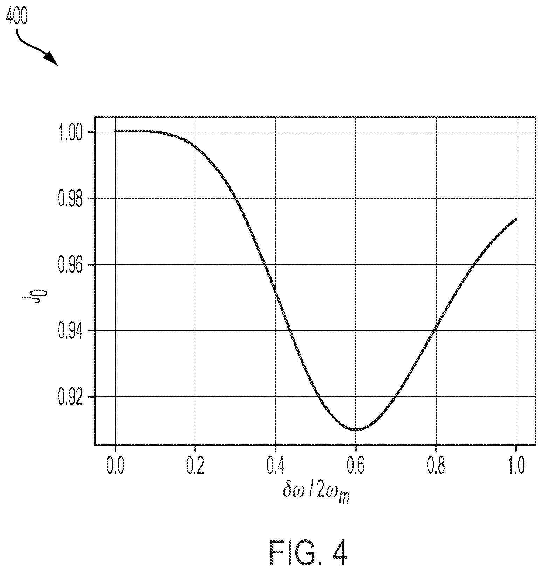

FIG. 4 is a plot 400 showing the zeroth order (n = 0) Bessel function of the first kind (*J*₀ ) as a function of a frequency shift divided by a flux modulation frequency (*δω*/2*ωₘ*). As shown in FIG. 4, the zeroth order Bessel function of the first kind *J*₀ is about 1 for *δω*/2*ωₘ* with values in a range between 0 and 1. In other words, at realistic values of a flux modulation frequency and a frequency shift, when the frequency shift is equal to or less than twice of the flux modulation frequency (e.g., *ωₘ* ≥ *δω*/2), the normalization factor as determined by the zeroth order Bessel function of the first kind (*J*₀ ) to the coupling rates is in a range of 0.90 and 1.00.

FIG. 5 is a circuit diagram showing an equivalent circuit 500 of an example superconducting circuit. The equivalent circuit 500 represented in FIG. 5 includes a tunable-frequency qubit device 512, a fixed-frequency qubit device 514, and a control line 518. The example equivalent circuit 500 further includes a source 522A and readout resonator 516A coupled to the fixed-frequency qubit device 514 via a capacitor 554A. The example equivalent circuit 500 also includes a source 522B and readout resonator 516B coupled to the tunable-frequency qubit device 512 via a capacitor 554B. In some examples, the tunable-frequency qubit device 512 and the fixed-frequency qubit device 514 may be implemented by other types of systems, and the features and components represented in FIG. 5 can be extended in a larger two-dimensional or three-dimensional array of devices. For instance, the equivalent circuit 500 in FIG. 5 can represent any of the qubit devices 212 and one of its coupler devices 214 in the superconducting quantum processing unit 204 in FIG. 2, or the equivalent circuit 500 in FIG. 5 can represent devices in another type of system or environment. The quantum computing system may include additional or different features, and the components may be arranged as shown or in another manner.

In the example shown in FIG. 5, the tunable-frequency qubit device 512 is implemented as a tunable-frequency transmon qubit device. As shown, the tunable-frequency qubit device 512 includes two Josephson junctions, e.g., a first Josephson junction 532 and a second Josephson junction 534. The first and second Josephson junctions 532, 534 having Josephson energies *E*_{*J*1} and *E*_{*J*2} are connected in parallel with each other to form a superconducting circuit loop 524, which resides adjacent to the control line 518. The tunable-frequency qubit device 512 also includes a capacitor 536 with a shunt capacitance *C_{Jt},* which is connected in parallel with the two Josephson junctions 532, 534. In some implementations, the control line 518 is a flux bias control line. In some instances, a flux bias control line is coupled to a flux bias element (e.g., a conductor, an inductor, or another type of circuit component configured to carry a current *I*), which generates a magnetic flux *Φ*(*t*) through the superconducting circuit loop 524 in the tunable-frequency qubit device 512. The magnetic flux can be modulated by communicating a flux modulation signal on the flux bias control line which causes a modulation to the transition frequency of the tunable-frequency qubit device 512.

In the example shown in FIG. 5, the fixed-frequency qubit device 514 is implemented as a fixed-frequency transmon qubit device. As shown, the fixed-frequency qubit 514 includes a Josephson junction 542 having Josephson energy *E_{Jf}* and a capacitor 544 with a shunt capacitance *C_{Jf},* which are connected in parallel. The fixed-frequency qubit device 514 is capacitively coupled to the tunable-frequency qubit device 512 through a fixed-frequency coupler device 552, e.g., a capacitive coupler device with a capacitance *C_{c}*. In some instances, a parameter *g* can represent a capacitive coupling strength between the fixed-frequency qubit device 514 and the tunable-frequency qubit device 512.

In some instances, the fixed-frequency qubit device 514 and the tunable-frequency qubit device 512 can be also coupled together through a tunable-frequency coupler device. The tunable-frequency coupler device may include one or more tunable-frequency transmon qubit devices, tunable-frequency fluxonium qubit devices, or another type of tunable-frequency qubit device. The tunable-frequency coupler device may be capacitively coupled to each of the fixed-frequency qubit device 514 and the tunable-frequency qubit device 512 with respective coupling strengths. In some instances, an effective coupling between the fixed-frequency qubit device 514 and the tunable-frequency qubit device 512 is determined by the capacitance value of the capacitor 552.

In some implementations, the fixed-frequency qubit device 514 has a transition frequency *ω*_{*F*01} with a fixed value, while the tunable-frequency qubit device 512 has a transition frequency *ω*_{*T*01}(*t*) that can be tuned over time. In this example, the tunability of the transition frequency of a tunable-frequency qubit device can be used to perform two-qubit quantum logic gates on the two qubit devices 512, 514. For instance, by modulating the transition frequency *ω*_{*T*01}(*t*) of the tunable-frequency qubit device at predetermined values of the flux modulation frequency and flux modulation amplitude, a two-qubit quantum logic gate can be activated between the two qubit devices 512, 514.

As shown in FIG. 5, the control line 518 can receive control signals, for example, from an external control system. In some instances, the control line 518 can include, for example, a flux bias element that is configured to apply an offset field to the tunable-frequency qubit device 512. For instance, the flux bias element may include an inductor (e.g., a partial loop, a single loop, or multiple loops of a conductor) that has a mutual inductance with the circuit loop 524. In the example shown, the transition frequency *ω*_{*T*01}(*t*) of the tunable-frequency qubit device 512 is controlled by the magnetic flux *Φ*(*t*) by controlling the current I through the control line 518. In some instances, the transition frequency *ω*_{*T*01}(*t*) may be controlled in another manner, for instance, by another type of control signal. In some implementations, the control line 518 may include an inductance loop or another type of flux bias element that is coupled (e.g., conductively, capacitively, or inductively) to a control port to receive control signals, and to the tunable-frequency qubit device 512. In certain instances, the control signals on the control line 518 may cause the flux bias element to generate and modulate the magnetic flux in the superconducting circuit loop 524. In some implementations, the control signals on the control line 518 are implemented as the control signals 206 as shown in FIG. 2.

In some implementations, when the two qubit devices 512, 514 are coupled through a tunable-frequency coupler device, the effective coupling between the two qubit devices 512, 514 can be enabled by tuning a magnetic field applied on the tunable-frequency coupler device. For example, a separate control signal (e.g., a DC or an AC current) can be applied on a control line to tune the magnetic flux threading to the tunable-frequency coupler device, for example with a superconducting circuit loop, to turn on the coupling. When the tunable-frequency coupler device is turned on, the flux modulation signal can be applied on the flux bias element so as to apply the modulated flux bias to the tunable-frequency qubit device 512 to activate a two-qubit quantum logic gate. In some cases, the control signal applied on the tunable-frequency coupler device can be also modulated. In another instances, operation of the tunable-frequency coupler device that is used to couple the fixed-frequency qubit device 514 and the tunable-frequency qubit device 512 can be implemented with respect to the operations in the example process 1500 shown in FIG. 15 or in another manner.

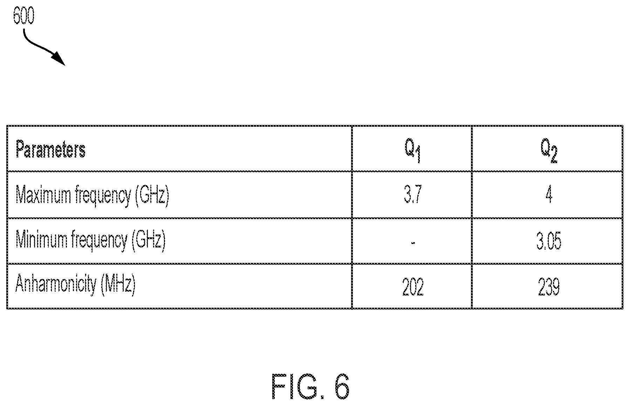

FIG. 6 is a table 600 showing device parameters of the two qubit devices 512, 514 in the example superconducting quantum processing unit 500 shown in FIG. 5. In some implementation, the device parameters shown in table 600 are obtained by performing a calibration process. Qubit device Q1 represents the fixed-frequency qubit device 514, which has a fixed |0〉 → |1〉 transition frequency of 3.7 GHz and anharmonicity of 202 MHz. Qubit device Q2 represents the tunable-frequency qubit device 512, which has a |0〉 → |1〉 transition frequency (at zero flux bias) of 4.00 GHz (e.g., a maximum value of the transition frequency *ωₘₐₓ*/2*π* = 4.00 GHz), a |1〉 → |2〉 transition frequency (at zero flux bias) of 3.05 GHz (a minimum value of the transition frequency *ωₘᵢₙ*/2*π* = 3.05 GHz), and anharmonicity (at zero flux bias) of 239 MHz.

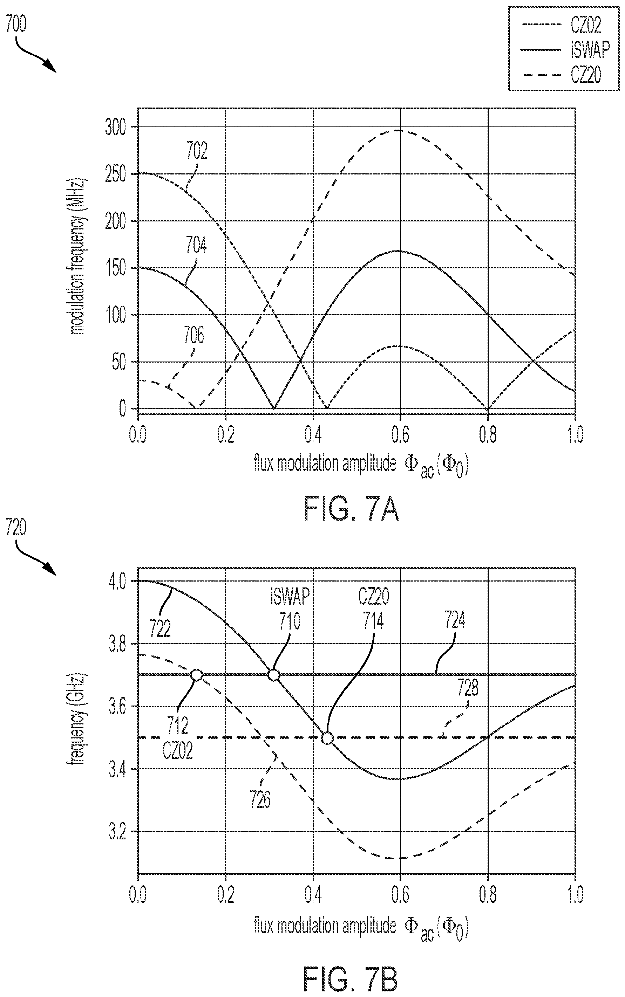

FIG. 7 are plots 700, 720 showing a flux modulation frequency (*ωₘ*) in MHz and a transition frequency of qubit devices 512, 514 in GHz as a function of a flux modulation amplitude (Φ*_{ac}*(Φ₀)) applied to the tunable-frequency qubit device 512 in the example superconducting quantum processing unit 500 in FIG. 5 for activating various two-qubit quantum logic gates. As shown in FIG. 7, two-qubit quantum logic gates (e.g., an iSWAP gate, a CZ02 gate, and a CZ20 gate) are activated by bringing a time average of the transition frequency of the tunable-frequency qubit device 512 over a duration of the flux modulation signal on resonance with the transition frequency of the fixed-frequency qubit device 514. For example, an iSWAP gate can be activated when the time average of the transition frequency of the |0〉 → |1〉 transition (〈*f*₀₁*^{T}*〉) of the tunable-frequency qubit device 512 is brought on resonance with the transition frequency of the |0〉 → |1〉 transition (*f*₀₁*^{F}*) of the fixed-frequency qubit device 514 (e.g., at operating point 710 between the tunable |0〉 → |1〉 transition frequency of the tunable-frequency qubit device represented by curve 722 and the fixed |0〉 → |1〉 transition frequency of the fixed-frequency qubit device represented by curve 724). The time average of the transition frequency of the |0〉 → |1〉 transition of the tunable-frequency qubit device over a duration (e.g., a period *τ*) is defined by $\left〈{{f}_{01}}^{T}\right〉 = \frac{1}{τ} {\int }_{0}^{τ} dt ′ {{f}_{01}}^{T} \left(t′\right)$ (8)

where *τ* is a period, e.g., *τ* = 2*π*/*ωₘ* and *ωₘ* is the flux modulation frequency. In some cases, to activate an iSWAP gate, the transition frequency of the tunable-frequency qubit device can be modulated at any available frequency that can be provided by a signal source (e.g., a flux pulse source as part of the signal hardware 104B of the control system 105B in FIG. 1). In some implementations, a value of a flux modulation frequency to activate a two-qubit quantum logic gate is greater than threshold values that can activate interactions between the tunable-frequency qubit device and the fixed-frequency qubit device. In some implementations, the value of the flux modulation frequency can be selected as the frequency does not land on the curves 702, 704, 706 shown in FIG. 7 and their corresponding higher harmonics frequencies. In some instances, an optimal range of the flux modulation frequency (*ωₘ*/2*π*) for activating an iSWAP gate is greater than a threshold frequency value. In some instances, the threshold frequency value is the maximum value of the flux modulation frequency that can activate a sideband parametric two-qubit quantum logic gate e.g., *ωₘ*/2*π* ≥ 300 MHz for the CZ20 gate at 0.6Φ₀ Modulating the flux bias applied on the tunable-frequency qubit device 512 at a flux modulation frequency in this range ensures that other sideband parametric gates are not activated. In some implementations, the amount (e.g., amplitude) of flux modulation signal reaching the qubit devices (e.g., from the control system 202 to the quantum processing unit 204 as shown in FIG. 2) may be frequency dependent, e.g., determined by a transfer function. For example, the flux modulation signal may be attenuated more significantly at certain frequencies or frequency ranges. In this case, the strong attenuation at these frequencies or frequency ranges may result in a flux modulation signal with a flux modulation amplitude that is not enough to bring the two qubit devices on resonance. In some implementations, the flux modulation frequency may be set to a value that is outside these frequencies or frequency ranges to avoid strong attenuation.

Similarly, a CZ02 gate is activated when the time average of the modulated |1〉 → |2) transition frequency of the tunable-frequency qubit device is brought on resonance with the |0〉 → |1〉 transition frequency of the fixed-frequency qubit device (e.g., at operating point 712 between the tunable |1〉 → |2〉 transition frequency of the tunable-frequency qubit device represented by curve 726 and the fixed |0〉 → |1〉 transition frequency of the fixed-frequency qubit device represented by curve 724); and a CZ20 gate is activated when the time average of the modulated |0〉 → |1〉 transition frequency of the tunable-frequency qubit device is brought on resonance with the |1〉 → |2〉 transition frequency of the fixed-frequency qubit device (e.g., at operating point 714 between the tunable |0〉 → |1〉 transition frequency of the tunable-frequency qubit device represented by curve 722 and the fixed |1〉 → |2〉 transition frequency of the fixed-frequency qubit device represented by curve 728).

In some implementations, a value of the flux modulation amplitude can be tuned to activate a respective two-qubit quantum logic gate. As shown in plot 720 of FIG. 7, when the flux modulation frequency is zero, a value of the flux modulation amplitude of the flux modulation signal applied to the tunable-frequency qubit device can be tuned to ~0.15Φ₀ (e.g., at operation point 712) to activate a CZ02 gate, ~0.32Φ₀ (at operating point 710) to activate an iSWAP gate, and 0.43Φ₀ (at operating point 714) to activate a CZ20 gate. In some instances, there might be two operating points where a curve representing the time average of the modulated transition frequency of a tunable-frequency qubit device crosses a curve representing a fixed transition frequency of a fixed-frequency qubit device. In this case, the lower value of the flux modulation amplitude may be selected according to qubit dephasing time consideration or other considerations. For example, a lower value of the flux modulation amplitude can result in a longer dephasing time.

FIG. 8 are schematic diagrams of a top view and a cross-sectional view of an example superconducting quantum processing unit 800. The example superconducting quantum processing unit 800 includes superconducting quantum circuit devices. As shown in FIG. 8, the superconducting quantum circuit devices in the example superconducting quantum processing unit 800 include a first tunable-frequency qubit device 812, a second tunable-frequency qubit device 814, and a tunable-frequency coupler device 816. As shown in FIG. 8, the example superconducting quantum processing unit 800 includes a ground plane 828 surrounding the first and second tunable-frequency qubit devices 812, 814 and the tunable-frequency coupler device 816, and other superconducting quantum circuit devices.

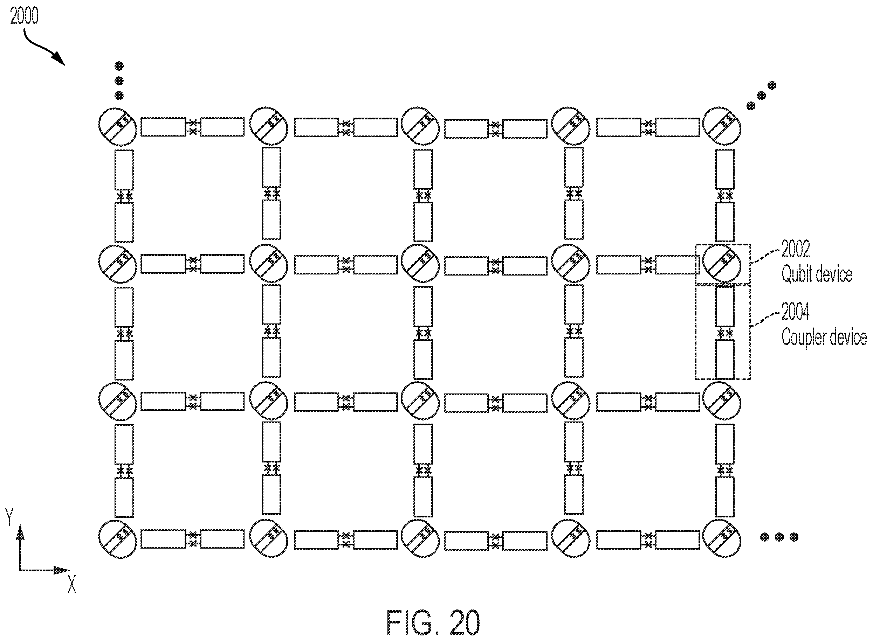

In some examples, the first and second tunable-frequency qubit devices 812, 814 and the tunable-frequency coupler device 816 may be implemented by other types of systems, and the features and components represented in FIG. 8 can be extended in a larger two-dimensional or three-dimensional array of devices (e.g., the two-dimensional and three-dimensional arrays 2000, 2100 shown in FIGS. 20-21). The example superconducting quantum processing unit 800 may include additional or different features and components, which may be configured in another manner. For example, the superconducting quantum circuit devices may include respective readout resonator devices associated with the first and second tunable-frequency qubit devices 812, 814 for performing readout operations. For another example, the example superconducting quantum processing unit 800 may include control lines (e.g., flux bias control lines and/or qubit drive lines) for providing control signals (e.g., to bring the two qubits on resonance, or to activate or deactivate coupling between the first and second tunable-frequency qubit devices 812, 814) and performing two-qubit quantum logic gates.

Each of the first and second tunable-frequency qubit devices 812, 814 and the tunable-frequency coupler device 816 includes a superconducting circuit loop that has two Josephson junctions connected in parallel. Particularly, the first tunable-frequency qubit device 812 includes a first superconducting circuit loop 832; the second tunable-frequency qubit device 814 includes a second superconducting circuit loop 834; and the tunable-frequency coupler device 816 includes a third superconducting circuit loop 836. In some implementations, each of the first, second, and third superconducting circuit loops 832, 834, and 836 can be inductively coupled to (has a mutual inductance with) a respective control line, which can individually tune a magnetic flux in a respective superconducting circuit loop. The control lines are connected to an external control system (e.g., the control system 202 in FIG. 2) which is configured to generate respective flux bias signals or flux modulation signals. The two Josephson junctions in a superconducting circuit loop include an asymmetric Superconducting Quantum Interference Device (SQUID). In some instances, the first and second tunable-frequency qubit devices 812, 814 and the tunable-frequency coupler device 816 may include additional or different features, and may operate as described with respect to FIG. 8 or in another manner. For example, the superconducting circuit loops 832, 834, and 836 may include more than two Josephson junctions.

As shown in FIG. 8, each of the first and second tunable-frequency qubit devices 812, 814 includes a pair of qubit electrodes. Particularly, the first tunable-frequency qubit device 812 includes a first pair of qubit electrodes 822A/822B; and the second tunable-frequency qubit device 814 includes a second pair of qubit electrodes 824A/824B. The tunable-frequency coupler device 816 includes a coupler electrode 826. Each of the first and second pairs of qubit electrodes are electrically floating at a certain potential without being conductively connected to the ground plane 828. In other words, since the ground plane 828 is configured around superconducting quantum circuit devices, the qubit electrodes 822A/822B, 824A/824B, and the coupler electrodes 826 are capacitively coupled to the ground plane 828.

In some examples, a shunt capacitor can be formed between two qubit electrodes from the same superconducting quantum circuit device. As shown in the example equivalent circuit 900 of the example superconducting quantum processing unit 800, the shunt capacitors 922, 924, 926 are caused by the two qubit electrodes 822A/822B, 824A/824B, and the coupler electrode/ground 826/828 in the first and second tunable-frequency qubit devices 902, 904, and the tunable-frequency coupler device 906, respectively. In some instances, a residual capacitor can be formed between two qubit electrodes from two distinct superconducting quantum circuit devices forming a capacitive coupling between the two distinct superconducting quantum circuit devices. As shown in the example equivalent circuit 900 of the example superconducting quantum processing unit 800, a residual capacitor can be formed between a coupler electrode 826 of the tunable-frequency coupler device 816 and each of the qubit electrodes of first or second tunable-frequency qubit devices 812, 814. In some instances, a residual capacitor can be formed between a qubit electrode of the first tunable-frequency qubit device 812 and a qubit electrode of the second tunable-frequency qubit device 814. Therefore, a static capacitive coupling (*g*₁₂) between the first and second tunable-frequency qubit devices 902, 904 includes two components, e.g., a direct capacitive coupling component and an indirect capacitive coupling component. In some instances, the direct capacitive coupling component is caused by the capacitance formed between qubit electrodes 822A/822B of the first tunable-frequency qubit device 812 and qubit electrodes 824A/824B of the second tunable-frequency qubit device 314. In some instances, the indirect capacitive coupling component is a capacitive coupling mediated by the tunable-frequency coupler device 806. The indirect capacitive coupling component is caused by the capacitances formed between coupler electrode 826 of the tunable-frequency coupler device 806 and qubit electrodes 822A/822B/824A/824B of the first and second tunable-frequency qubit devices 802, 804.

The example superconducting quantum processing unit 800 shown in FIG. 8 resides on the top surface of a substrate 802. In certain instances, the substrate 802 may be an elemental semiconductor, for example silicon (Si), germanium (Ge), selenium (Se), tellurium (Te), or another elemental semiconductor. In some instances, the substrate 802 may also include a compound semiconductor such as aluminum oxide (sapphire), silicon carbide (SiC), gallium arsenic (GaAs), indium arsenide (InAs), indium phosphide (InP), silicon germanium (SiGe), silicon germanium carbide (SiGeC), gallium arsenic phosphide (GaAsP), gallium indium phosphide (GaInP), or another compound semiconductor. In some instances, the substrate 802 may also include a superlattice with elemental or compound semiconductor layers. In certain instances, the substrate 802 includes an epitaxial layer. In some examples, the substrate 802 may have an epitaxial layer overlying a bulk semiconductor or may include a semiconductor-on-insulator (SOI) structure.

The electrodes 822A, 822B, 824A, 824B, and 826 and the ground plane 828 include superconductive materials and can be formed by patterning one or more superconductive (e.g. superconducting metal) layers or other materials on the surface of the substrate 802. In some implementations, each of the one or more superconductive layers include a superconducting metal, such as aluminum (Al), niobium (Nb), tantalum (Ta), titanium (Ti), vanadium (V), tungsten (W), zirconium (Zr), or another superconducting metal. In some implementations, each of the one or more superconductive layers may include a superconducting metal alloy, such as molybdenum-rhenium (Mo/Re), niobium-tin (Nb/Sn), or another superconducting metal alloy. In some implementations, each of the superconductive layers may include a superconducting compound material, including superconducting metal nitrides and superconducting metal oxides, such as titanium-nitride (TiN), niobium-nitride (NbN), zirconium-nitride (ZrN), hafnium-nitride (HfN), vanadium-nitride (VN), tantalum-nitride (TaN), molybdenum-nitride (MoN), yttrium barium copper oxide (Y-Ba-Cu-O), or another superconducting compound material. In some instances, the electrodes 822A, 822B, 824A, 824B, and 826 and the ground plane 828 may include multilayer superconductor-insulator heterostructures.

In some implementations, the electrodes 822A, 822B, 824A, 824B, and 826 and the ground plane 828 are fabricated on the top surface of the substrate 802 and patterned using a microfabrication process or in another manner. For example, the electrodes 822A, 822B, 824A, 824B, and 826 and the ground plane 828 may be formed by performing at least some of the following fabrication steps: using chemical vapor deposition (CVD), physical vapor deposition (PVD), atomic layer deposition (ALD), spin-on coating, and/or other suitable techniques to deposit respective superconducting layers on the substrate 802; and performing one or more patterning processes (e.g., a lithography process, a dry/wet etching process, a soft/hard baking process, a cleaning process, etc.) to form openings in the respective superconducting layers.

FIG. 9 is a circuit diagram showing an example equivalent circuit 900 of the example superconducting quantum processing unit 800 shown in FIG. 8. The example equivalent circuit 900 represented in FIG. 9 includes a first tunable-frequency qubit device 902, a second tunable-frequency qubit device 904, and a tunable-frequency coupler device 906. For instance, the equivalent circuit 900 in FIG. 9 can represent a pair of qubit devices 212B, 212C and the coupler device 214C in the superconducting quantum processing unit 204 in FIG. 2, or the equivalent circuit 900 in FIG. 9 can represent devices in another type of system or environment.

In the example shown in FIG. 9, each of the first and second tunable-frequency qubit devices 902, 904 and the tunable-frequency coupler device 906 is implemented as a tunable-frequency transmon qubit device. As shown, the first tunable-frequency qubit device 902 includes two Josephson junctions, e.g., a first Josephson junction 932A and a second Josephson junction 932B. The first and second Josephson junctions 932A, 932B having Josephson energies *E*_{*JS*1} and *E*_{*JL*1} are connected in parallel with each other to form a first superconducting circuit loop 912. The first tunable-frequency qubit device 902 also includes a shunt capacitor 922 with a capacitance *C*₁, which is connected in parallel with the two Josephson junctions 932A, 932B. The shunt capacitor 922 is caused by two qubit electrodes of the first tunable-frequency qubit device 902, e.g., the two qubit electrodes 822A, 822B as shown in the first tunable-frequency qubit device 812 in FIG. 8.

The second tunable-frequency qubit device 904 includes two Josephson junctions, e.g., a third Josephson junction 934A and a fourth Josephson junction 934B. The third and fourth Josephson junctions 934A, 934B having Josephson energies *E*_{*JS*2} and *E*_{*JL*2} are connected in parallel with each other to form a second superconducting circuit loop 914. The second tunable-frequency qubit device 904 also includes a shunt capacitor 924 with a capacitance *C*₂, which is connected in parallel with the two Josephson junctions 934A, 934B. The shunt capacitor 924 is caused by two qubit electrodes of the second tunable-frequency qubit device 904, e.g., the two qubit electrodes 824A, 824B as shown in the second tunable-frequency qubit device 814 in FIG. 8.

The tunable-frequency coupler device 906 includes two Josephson junctions, e.g., a fifth Josephson junction 936A and a sixth Josephson junction 936B. The fifth and sixth Josephson junctions 936A, 936B having Josephson energies *E_{JSC}* and *E_{JLC}* are connected in parallel with each other to form a third superconducting circuit loop 916. The tunable-frequency coupler device 906 also includes a shunt capacitor 926 with a capacitance *C_{C}*, which is connected in parallel with the two Josephson junctions 936A, 936B. The shunt capacitor 926 is caused by one electrode of the tunable-frequency coupler device 906 and the ground plane, e.g., the coupler electrode 826 and the ground plane 828 as shown in the tunable-frequency coupler device 816 in FIG. 8.

In the example shown in FIG. 9, each of the first and second tunable-frequency qubit devices 902, 904 is capacitively coupled to the ground plane (e.g., Φ = 0) through respective residual capacitors. Particularly, the first tunable-frequency qubit device 902 is coupled to the ground plane via residual capacitors 942A, 942B having respective capacitances *C*₀₂ and *C*₀₁; and the second tunable-frequency qubit device 904 is coupled to the ground plane via residual capacitors 948A, 948B having respective capacitances *C*₀₆ and *C*₀₅.

As shown in FIG. 9, the tunable-frequency coupler device 906 is capacitively coupled to each of the first and second tunable-frequency qubit devices 902, 904 via respective residual capacitors. Particularly, the tunable-frequency coupler device 906 is coupled to the first tunable-frequency qubit device 902 via residual capacitors 944A, 944B with respective capacitances *C*₂₃ and *C*₁₃; and the tunable-frequency coupler device 906 is coupled to the second tunable-frequency qubit device 904 via residual capacitors 946A, 946B with respective capacitances *C*₃₆ and *C*₃₅. The residual capacitors 944A/944B and 946A/946B represent the indirect capacitive coupling component between the first and second tunable-frequency qubit devices 902, 904. Further, the first and second tunable-frequency qubit devices 902, 904 are also capacitively coupled to each other via respective residual capacitors 952A, 952B with respective capacitances *C*₂₄ and *C*₁₅. Therefore, the residual capacitors 952A/952B represent the direct capacitive coupling component between the first and second tunable-frequency qubit devices 902, 904.

In some implementations, control operations can be performed on the superconducting circuit by providing control signals to the first and second tunable-frequency qubit devices 902, 904 and the tunable-frequency coupler device 906 via control lines. The control lines can receive the control signals, for example, from an external control system. In some implementations, each of the control lines can be connected to a conductor, an inductor, or another type of circuit component configured to carry a respective current *I*, which generates a respective magnetic flux Φ(t) through the superconducting circuit loops 912, 914 or 916. For instance, the control line may include an inductor (e.g., a partial loop, a single loop, or multiple loops of a conductor) that has a mutual inductance with the superconducting circuit loop 912, 914, or 916. In the example shown, the transition frequency of the first tunable-frequency qubit device 902 is tuned by tuning a magnetic flux Φ_{*e*1} in the first superconducting circuit loop 912; the transition frequency of the second tunable-frequency qubit device 904 is tuned by tuning a magnetic flux Φ_{*e*2} in the second superconducting circuit loop 914; and the transition frequency of the tunable-frequency coupler device 906 is tuned by tuning a magnetic flux Φ*_{ec}* in the third superconducting circuit loop 916. In some instances, the transition frequencies may be controlled in another manner, for instance, by another type of control signal. In some implementations, the control lines may be connected to an inductance loop or another type of flux bias element that is coupled (e.g., conductively, capacitively, or inductively) to a control port to receive control signals. In certain instances, the control signals on the control lines may cause the flux bias element to generate and modulate the magnetic flux in the superconducting circuit loop 912, 914, or 916. In some implementations, the control signals on the control line are flux bias signals or flux modulation signals, and are implemented as the control signals 206 as shown in FIG. 2.

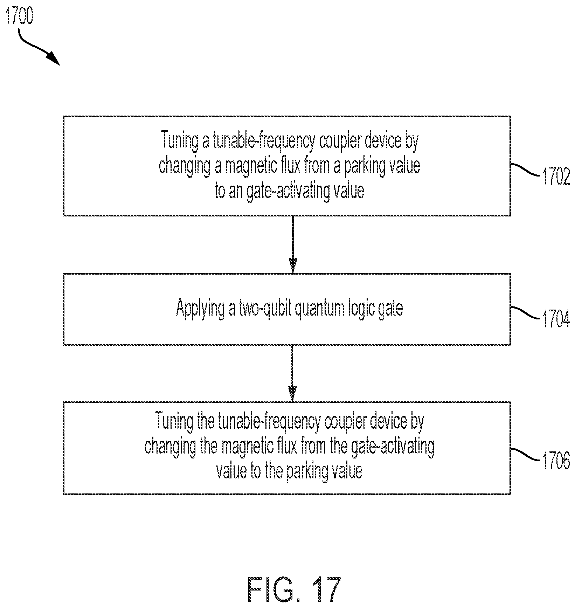

In some implementations, when the two tunable-frequency qubit devices 902, 904 are coupled through the tunable-frequency coupler device 906, the coupling between the two tunable-frequency qubit devices 902, 904 can be enabled/disabled by tuning a magnetic flux applied to the tunable-frequency coupler device 906. For example, a separate control signal (e.g., a DC or an AC current) can be applied to a control line to tune the magnetic flux threading to the third superconducting circuit loop 916 of the tunable-frequency coupler device 906 to adjust the transition frequency of the tunable-frequency coupler device 906. When the magnetic flux on the tunable-frequency coupler device 906 is at a parking value, the coupling between the two tunable-frequency qubit devices 902, 904 can be turned off or deactivated. When the magnetic flux on the tunable-frequency coupler device 906 is at a gate-activating value, the coupling between the two tunable-frequency qubit device 902, 904 can be activated for performing a two-qubit quantum logic gate. In some instances, operation for activating and deactivating the tunable-frequency coupler device 906 can be implemented with respect to the example process 1700 shown in FIG. 17 or in another manner.

In some implementations, each of the first and second tunable-frequency qubit devices 902, 904 includes highly asymmetric Josephson junctions (e.g., *E*_{*JS*1} « *E*_{*JL*1}, and *E*_{*JS*2} « *E*_{*JL*2}) that form the respective superconducting circuit loops 912, 914. The tunable-frequency coupler device 906 includes symmetric Josephson junctions or asymmetric Josephson junctions. In some implementations, a tunable-frequency coupler device 906 with asymmetric Josephson junctions allows operating two-qubit quantum logic gates by tuning the transition frequency of the tunable-frequency coupler device 906 to a minimal value to obtain gate stability against flux fluctuations. The strong asymmetry can result in much smaller tunability of the first and second tunable-frequency qubit devices 902, 904 than that of the tunable-frequency coupler device 906. The systems and techniques presented here can reduce sensitivity of the tunable-frequency qubit devices 902, 904 to flux noise thereby improving their coherence times.

The Lagrangian of the equivalent circuit shown in FIG. 9 can be expressed as $\begin{matrix}L = \frac{1}{2} {\sum }_{j = 1}^{5} {C}_{0 j} {\dot{Φ}}_{j}^{2} + \frac{1}{2} {C}_{12} {\left({\dot{Φ}}_{2}-{\dot{Φ}}_{1}\right)}^{2} + \frac{1}{2} {C}_{23} {\left({\dot{Φ}}_{3}-{\dot{Φ}}_{2}\right)}^{2} \\ + \frac{1}{2} {C}_{43} {\left({\dot{Φ}}_{4}-{\dot{Φ}}_{3}\right)}^{2} + \frac{1}{2} {C}_{13} {\left({\dot{Φ}}_{3}-{\dot{Φ}}_{1}\right)}^{2} + \frac{1}{2} {C}_{35} {\left({\dot{Φ}}_{5}-{\dot{Φ}}_{3}\right)}^{2} \\ + \frac{1}{2} {C}_{45} {\left({\dot{Φ}}_{5}-{\dot{Φ}}_{4}\right)}^{2} + \frac{1}{2} {C}_{24} {\left({\dot{Φ}}_{4}-{\dot{Φ}}_{2}\right)}^{2} + \frac{1}{2} {C}_{15} {\left({\dot{Φ}}_{5}-{\dot{Φ}}_{1}\right)}^{2} \\ + {E}_{J 1} cos \left({ϕ}_{2}-{ϕ}_{1}+{ϕ}_{01}\right) + {E}_{Jc} \left({ϕ}_{c}+{ϕ}_{3}\right) + {E}_{J 2} cos \left(\begin{matrix}{ϕ}_{4} \\ - {ϕ}_{5} + {ϕ}_{02}\end{matrix}\right)\end{matrix}$ (9) where *Φⱼ* are node fluxes, *Φ̇_{J} =* ∂*Φⱼ*/∂*t,* and *E_{Jj}*are junction energies. The junction energies *E_{Jk}* defined by ${E}_{Jk} \left({ϕ}_{ek}\right) = \sqrt{{{E}_{JSk}}^{2} + {{E}_{JLk}}^{2} + 2 {E}_{JSk} {E}_{JLk} cos \left({ϕ}_{ek}\right)}$ (10) and ${ϕ}_{0 k} = {tan}^{- 1} \left[\frac{{E}_{JSk} - {E}_{JLk}}{{E}_{JSk} + {E}_{JLk}}tan\left({ϕ}_{ek}/2\right)\right]$ (11) where *ϕⱼ* = 2πΦ_{*j*/}*Φ*₀, *Φⱼ* are node fluxes, *ϕₑₖ* = 2π*Φₑₖ*/*Φ*₀ are reduced external flux biases applied to the respective superconducting circuit loops 912, 614, 916, and *Φ*₀ = *h*/*2e* is the flux quantum, *k* ∈ *{1, 2, c},* and *j* ∈ {1,2, ...,5}. The node fluxes are defined in terms of node voltages as ${Φ}_{j} = {\int }_{- ∞}^{t} dt ′ {V}_{j} \left(t′\right) ,$ (12) where *Vⱼ* is the voltage at the jth node (nodes 952, 954, 956, 958, 960 in FIG. 9), and *j* ∈ {1,2,...,5}.

In some implementations, new variables defined by *Φ*_{1,*p*/*m*} = *Φ*₂ ± *Φ*₁, and *Φ*_{2,*p*/*m*} = *Φ*₄ ± *Φ*₅ are introduced, where the canonical momenta *Qₖ* and coordinates *Φₖ* are related by *Qₖ = L*/*Φ̇ₖ* which can be written in matrix form as $Q = C \dot{Φ}$ (13) where the charge matrix Q is given by $Q = \left[{Q}_{1 p}, {Q}_{1 m}, {Q}_{c}, {Q}_{2 p}, {Q}_{2 m}\right] ,$ (14) and the capacitance matrix *C* is given by: $C = \left(\begin{matrix}{C}_{1 p} & {C}_{1 m} & - 2 \left({C}_{13}+{C}_{23}\right) & - {C}_{24} & - {C}_{24} \\ {C}_{1 m} & {C}_{1 p} + 4 {C}_{12} & - 2 \left({C}_{23}-{C}_{13}\right) & - {C}_{24} & - {C}_{24} \\ - 2 \left({C}_{13}+{C}_{23}\right) & - 2 \left({C}_{23}-{C}_{13}\right) & {C}_{cp} & - 2 \left({C}_{34}+{C}_{35}\right) & - 2 \left({C}_{34}-{C}_{35}\right) \\ - {C}_{24} & - {C}_{24} & - 2 \left({C}_{34}+{C}_{35}\right) & {C}_{2 p} & {C}_{2 m} \\ - {C}_{24} & - {C}_{24} & - 2 \left({C}_{34}-{C}_{35}\right) & {C}_{2 m} & {C}_{2 p} + 4 {C}_{45}\end{matrix}\right)$ (15) where $\begin{matrix}{C}_{1 , p / m} = {C}_{02} + {C}_{23} + {C}_{24} \pm \left({C}_{01}+{C}_{13}\right) \\ {C}_{2 , p / m} = {C}_{04} + {C}_{34} + {C}_{24} \pm \left({C}_{05}+{C}_{35}\right) \\ {C}_{cp} = {C}_{03} + {C}_{13} + {C}_{23} + {C}_{34} + {C}_{35}\end{matrix}$ (16)

In some cases, the capacitance C15 between the two furthest qubit electrodes 822A, 824B of the first and second tunable-frequency qubit devices can be small compared to other capacitance and can be ignored. In some implementations, the qubit-coupler coupling capacitances *C*₂₃, *C*₃₄, *C*₁₃, *C*₃₅ and qubit-qubit coupling capacitance *C*₂₄ are smaller than the capacitances between the qubit electrodes and the ground plane, e.g., [*C*₂₃, *C*₃₄, *C*₂₄, *C*₁₃, *C*₃₅] « [*C*₀₁, *C*₀₂*, C*₀₄, *C*₀₅]. In some cases, the direct qubit-qubit coupling capacitance *C*₂₄ is smaller than the coupling capacitances *C*₁₂ and *C*₄₅. Besides, the capacitance between qubit electrodes of the same qubit device is smaller than their capacitance to the ground plane, [*C*₁₂, *C*₃₄] < [*C*₀₁, *C*₀₂, *C*₀₄, *C*₀₅]. The capacitances of the qubit electrodes to the ground plane are approximately the same, e.g., *C*₀₁ ≈ *C*₀₂ and *C*₀₄ ≈ *C*₀₅. The capacitances between each of the furthest qubit electrodes and the coupler electrode are approximately the same, and in some cases, they are very small and can be ignored, e.g., *C*₁₃ = *C*₃₅ = 0.

The inverse of the capacitance matrix *C*⁻¹ can be defined as ${C}^{- 1} \approx \left(\begin{matrix}4 / {C}_{1 p} & - \frac{4 {C}_{23}}{{C}_{1 p} {C}_{Σ 1}} & \frac{2 {C}_{23}}{{C}_{1 p} {C}_{cp}} & \frac{4 \left({C}_{23}{C}_{34}+{C}_{24}{C}_{cp}\right)}{{C}_{cp} {C}_{1 p} {C}_{2 p}} & \frac{{C}_{23} {C}_{34} + {C}_{24} {C}_{cp}}{4 {C}_{cp} {C}_{Σ 1} {C}_{Σ 2}} \\ - \frac{4 {C}_{23}}{{C}_{1 p} {C}_{Σ 1}} & \frac{1}{{C}_{Σ 1}} & \frac{2 {C}_{23}}{{C}_{cp} {C}_{Σ 1}} & \frac{{C}_{23} {C}_{34} + {C}_{24} {C}_{cp}}{4 {C}_{cp} {C}_{1 p} {C}_{Σ 2}} & \frac{{C}_{23} {C}_{34} + {C}_{24} {C}_{cp}}{4 {C}_{cp} {C}_{Σ 1} {C}_{Σ 2}} \\ \frac{2 {C}_{23}}{{C}_{1 p} {C}_{cp}} & \frac{2 {C}_{23}}{{C}_{cp} {C}_{Σ 1}} & \frac{1}{{C}_{cp}} & \frac{2 {C}_{2 c}}{{C}_{2 p} {C}_{cp}} & - \frac{{C}_{34}}{{C}_{2 p} {C}_{Σ 2}} \\ \frac{4 \left({C}_{23}{C}_{34}+{C}_{24}{C}_{cp}\right)}{{C}_{cp} {C}_{1 p} {C}_{2 p}} & \frac{{C}_{23} {C}_{34} + {C}_{24} {C}_{cp}}{4 {C}_{cp} {C}_{1 p} {C}_{Σ 2}} & \frac{2 {C}_{34}}{{C}_{2 p} {C}_{Σ 2}} & \frac{1}{{C}_{2 p}} & - \frac{{C}_{34}}{{C}_{2 p} {C}_{Σ 2}} \\ \frac{{C}_{23} {C}_{34} + {C}_{24} {C}_{cp}}{4 {C}_{cp} {C}_{Σ 1} {C}_{Σ 2}} & \frac{{C}_{23} {C}_{34} + {C}_{24} {C}_{cp}}{4 {C}_{cp} {C}_{Σ 1} {C}_{Σ 2}} & \frac{{C}_{34}}{2 {C}_{2 p} {C}_{Σ 2}} & - \frac{{C}_{34}}{2 {C}_{2 p} {C}_{Σ 2}} & \frac{1}{{C}_{Σ 2}}\end{matrix}\right)$ (17) where C_{Σ1}, C_{Σc}, and C_{Σ2} are the approximate total capacitances that define the charging energies and can be expressed as:$\begin{matrix}{C}_{Σ 1} = {C}_{12} + {C}_{1 p} / 4 . \\ {C}_{Σc} = {C}_{cp ,}\end{matrix}$ (18) ${C}_{Σ 2} = {C}_{45} + {C}_{2 p} / 4 .$

In some implementations, the qubit nodes are represented by the flux variables *Φ*₁ₘ and *Φ*_{2*m*} and the tunable-frequency coupler node by *Φ*_{c}. The nodes represented by the flux variables *Φ*_{1*p*} and *Φ*_{2*p*} are "free particle" rather than a harmonic oscillator because its spring constant vanishes (e.g., there are no inductance associated with these nodes). The Hamiltonian of the system is then given by $H = \frac{1}{2} {Q}^{T} {C}^{- 1} Q + U \left(Φ\right)$ (19) where U is the potential energy. $\begin{matrix}H = 4 {E}_{C 1} {n}_{1}^{2} + 4 {E}_{C 2} {n}_{2}^{2} + 4 {E}_{1 C} {n}_{1} {n}_{c} + 4 {E}_{2 C} {n}_{2} {n}_{c} + 4 {E}_{12} {n}_{1} {n}_{2} \\ - {E}_{J 1} cos \left({ϕ}_{1}+{ϕ}_{01}\right) - {E}_{JC} cos \left({ϕ}_{c}+{ϕ}_{0 c}\right) \\ - {E}_{J 2} cos \left({ϕ}_{2}+{ϕ}_{02}\right)\end{matrix}$ (2) where *nₖ* = *-i∂*/*∂ϕₖ* is the Cooper-pair number of operator and *E_{Ck} = e²*/(2C*_{Σk})* is the charging energy. The coupling energies *E_{JC}* between the qubit devices and the coupler device, and the coupling energy between the two qubit devices *E*₁₂ are given by $\begin{matrix}{E}_{1 c} = \frac{{e}^{2} {C}_{23}}{2 {C}_{cp} {C}_{Σ 1}} ; \\ {E}_{2 c} = \frac{{e}^{2} {C}_{34}}{2 {C}_{cp} {C}_{Σ 2}} ; \\ {E}_{12} = \frac{{e}^{2}}{4 {C}_{Σ 1} {C}_{Σ 2} {C}_{cp}} \left({C}_{23}{C}_{34}+{C}_{24}{C}_{cp}\right) .\end{matrix}$ (21)

Note that the direct qubit-qubit coupling (*E*₁₂) in Equation (21) has two terms. The first term, containing *C*₂₃*C*₃₄, describes the coupling mediated by the tunable-frequency coupler device 906, while the second term, containing *C*₂₄*C_{cp},* is due to the direct capacitive coupling between the qubit electrodes of the two tunable-frequency qubit devices 902, 904. In some cases, since *C_{cp}* » [*C*₂₃, *C*₃₄], the second term can have significant contribution even if *C*₂₄ is negligible compared to *C*₂₃, *C*₃₄. The capacitance *C*₂₄ plays a key role in achieving a vanishing direct qubit-qubit coupling.

Introducing annihilation and creation operators for a harmonic oscillator as $\begin{matrix}{n}_{k} = i {n}_{k}^{zpf} \left({a}_{k}^{†}-{a}_{k}\right) \\ {φ}_{k} = {φ}_{k}^{zpf} \left({a}_{k}^{†}+{a}_{k}\right) , k ∈ \left\{1, 2, c\right\}\end{matrix}$ (22) where ${n}_{k}^{zpf}$ and ${φ}_{k}^{zpf}$ are the zero-point fluctuations and are given by $\begin{matrix}{n}_{k}^{zpf} = \frac{1}{\sqrt{2}} {\left(\frac{{E}_{Jk}}{8 {E}_{Ck}}\right)}^{\frac{1}{4}} \\ {φ}_{k}^{zpf} = \frac{1}{\sqrt{2}} {\left(\frac{{E}_{Ck}}{8 {E}_{Jk}}\right)}^{\frac{1}{4}}\end{matrix}$ (23) where $\left[{a}_{k}, {a}_{k}^{†}\right] = 1$. The Hamiltonian can then be expressed in the harmonic oscillator basis (up to six orders in the cosine expansion) as $\begin{matrix}H = {\sum }_{k = 1 , 2 , c} \left[{ω}_{k}+\frac{{E}_{Ck}}{2}\left(1+\frac{{ξ}_{k}}{4}\right)-\frac{{E}_{Ck}}{2}\left(1+\frac{9 {ξ}_{k}}{16}\right){a}_{k}^{†}{a}_{k}\right] {a}_{k}^{†} {a}_{k} \\ + {g}_{1 c} \left({a}_{1}^{†}{a}_{c}+{a}_{1}{a}_{c}^{†}-{a}_{1}{a}_{c}-{a}_{1}^{†}{a}_{c}^{†}\right) \\ + {g}_{2 c} \left({a}_{2}^{†}{a}_{c}+{a}_{2}{a}_{c}^{†}-{a}_{2}{a}_{c}-{a}_{2}^{†}{a}_{c}^{†}\right) \\ + {g}_{12} \left({a}_{1}^{†}{a}_{2}+{a}_{1}{a}_{2}^{†}-{a}_{1}{a}_{2}-{a}_{1}^{†}{a}_{2}^{†}\right)\end{matrix}$ (24) where the frequencies of the first and second tunable-frequency qubit devices 902,904 and the tunable-frequency coupler device 906 are: $\begin{matrix}{ω}_{k} = \sqrt{8 {E}_{Jk} {E}_{Ck}} - {E}_{Ck} \left(1+\frac{{ξ}_{k}}{4}\right) \\ {ξ}_{k} = \sqrt{\frac{2 {E}_{Ck}}{{E}_{Jk}}} , k ∈ \left\{1, 2, c\right\}\end{matrix}$ (25) and the coupling rates are ${g}_{jc} = \frac{{E}_{jc}}{\sqrt{2}} {\left[\frac{{E}_{Jk}}{{E}_{Ck}}\frac{{E}_{Jc} \left({Φ}_{ec}\right)}{{E}_{Cc}}\right]}^{\frac{1}{4}} \left[1-\frac{1}{8}\left({ξ}_{c}+{ξ}_{k}\right)\right] , k = 1 , 2$ (26) ${g}_{12} = \frac{{E}_{12}}{\sqrt{2}} {\left[\frac{{E}_{J 1}}{{E}_{C 1}}\frac{{E}_{J 2} \left({Φ}_{ec}\right)}{{E}_{C 2}}\right]}^{\frac{1}{4}} \left[1-\frac{1}{8}\left({ξ}_{1}+{ξ}_{2}\right)\right] ,$ where *g_{kc}* are the qubit-coupler couplings and *g*₁₂ is the direct qubit-qubit capacitive coupling. The qubit-coupler couplings are directly proportional to the coupling energies *E_{Jc},* which in turn is proportional to *C*₂₃ and/or *C*₃₄. Thus, these couplings can be controlled by varying *C*₂₃ and/or *C*₃₄. The correction terms 1 - (*ξ_{c}* + *ξₖ*)/8 are due to the qubits' nonlinearities. The coupling rate *g*₁₂, which is positive for a grounded tunable-frequency coupler device, compensates the effective qubit-qubit coupling mediated by the coupler to achieve a vanishing qubit-qubit coupling.

Although the tunable-frequency qubit devices 902, 904 are coupled to the tunable-frequency coupler device 906, the coupling can be turned off at the idle point by tuning the transition frequency of the tunable-frequency coupler device 906 by tuning the magnetic flux to a parking value. The coupling can be tuned on, when two-qubit quantum logic gates are applied, by tuning the transition frequency of the tunable-frequency coupler device 906. In some implementations, the transition frequency is tuned by tuning the magnetic flux to a gate-activating value that maximizes the coupling or the fidelity. Approximating the first and second tunable-frequency qubit devices 902, 904 and the tunable-frequency coupler device 906 by their respective first three energy levels, the Hamiltonian of the system can be written as $\begin{matrix}H = {\sum }_{k = 1 , 2 , c} {ω}_{k} {\left|1\right〉}_{k} \left〈1\right| + \left(2{ω}_{k}-{η}_{k}\right) {\left|2\right〉}_{k} \left〈2\right| + {\sum }_{k = 1 , 2} {g}_{kc} \left({σ}_{k}+{σ}_{k}^{†}\right) \\ + {g}_{12} \left({σ}_{1}+{σ}_{1}^{†}\right) \left({σ}_{2}+{σ}_{2}^{†}\right)\end{matrix}$ (27) where ${σ}_{k} = {\left|0\right〉}_{k} \left〈1\right| + \sqrt{2} {\left|1\right〉}_{k} \left〈2\right|$ and *ωₖ* and *ηₖ* are the |0〉 → |1) transition frequency and anharmonicity of the qubit devices, respectively. Applying the Schrieffer-Wolff transformation and assuming the tunable-frequency coupler device remains in the grounded state 〈*σ_{zc}*〉 = -1, which is valid in the dispersive regime (e.g., $\frac{{g}_{kc}}{\left|{ω}_{c}-{ω}_{k}\right|} ≪ 1$), the effective qubit-qubit Hamiltonian can be expressed as $\begin{matrix}H = {\sum }_{k = 1 , 2} {ω}_{01 , k} {\left|1\right〉}_{k} \left〈1\right| + {ω}_{02 , k} {\left|2\right〉}_{k} \left〈2\right| + {g}_{01} \left(\left|10\right〉\left〈01\right|+\left|01\right〉\left〈10\right|\right) \\ + {g}_{02} \left(\left|11\right〉\left〈02\right|+\left|02\right〉\left〈11\right|\right) + {g}_{20} \left(\left|11\right〉\left〈20\right|+\left|20\right〉\left〈11\right|\right)\end{matrix}$ (28) where *ω*_{01*,k*} and *ω*_{02,*k*} are dressed qubit frequencies and the qubit-qubit coupling rates are given by $\begin{matrix}{g}_{01} = {g}_{12} - \frac{{g}_{1 c} \left({Φ}_{ec}\right) {g}_{2 c} \left({Φ}_{ec}\right)}{2} {\sum }_{k = 1 , 2} \left(\frac{1}{{Δ}_{k}}+\frac{1}{{Σ}_{k}}\right) , \\ {g}_{02} = \sqrt{2} {g}_{12} - \frac{{g}_{1 c} \left({Φ}_{ec}\right) {g}_{2 c} \left({Φ}_{ec}\right)}{\sqrt{2}} \left(\frac{1}{{Δ}_{1}}+\frac{1}{{Σ}_{1}}+\frac{1}{{Δ}_{2} + {η}_{2}}+\frac{1}{{Σ}_{2} - {η}_{2}}\right) , \\ {g}_{20} = \sqrt{2} {g}_{12} - \frac{{g}_{1 c} \left({Φ}_{ec}\right) {g}_{2 c} \left({Φ}_{ec}\right)}{\sqrt{2}} \left(\frac{1}{{Δ}_{1} + {η}_{1}}+\frac{1}{{Σ}_{1} - {η}_{1}}+\frac{1}{{Δ}_{2}}+\frac{1}{{Σ}_{2}}\right) ,\end{matrix}$ (29) where $\begin{matrix}{Δ}_{k} = {ω}_{c} - {ω}_{k} \\ {Σ}_{k} = {ω}_{c} + {ω}_{k}\end{matrix}$ (3)

The interaction described by the Hamiltonian allows activating two-qubit quantum logic gates. The iSWAP gate is activated by modulating the transition frequency of the second tunable-frequency qubit device 904 such that a time average of the transition frequency of the second tunable-frequency qubit device 904, which has a higher maximum transition frequency, is on resonance with a transition frequency of the first tunable-frequency qubit device 902. In some cases, the transition frequency of the first tunable-frequency qubit device 902 can be tuned to a maximum frequency value (*ωₘₐₓ*)*,* a minimum frequency value (*ωₘᵢₙ*), or another frequency value. In the case of controlled-Z (CZ) gates, the time average of the modulated |1〉 → |2〉 transition frequency of the second tunable-frequency qubit device 904 is brought on resonance with the |0〉 → |1〉 transition frequency of the first tunable-frequency qubit device 902. During operation of the two-qubit quantum logic gate, the magnetic flux applied to the tunable-frequency coupler device 906 is tuned to a gate-activating value such that the total coupling is turned on, enabled, or activated. During the idle time, the magnetic flux applied to the tunable-frequency coupler device 906 is tuned to a parking value so that the total coupling is turned off, deactivated, or vanished. In some case, the tunable-frequency coupler device 906 can be parked at a magnetic flux that gives a vanishing ZZ-coupling between the first and second tunable-frequency qubit devices 902, 904. In certain instances, the ZZ coupling can be measured by preparing both qubit devices in their excited states and measuring the accumulated phase in qubit state |11〉.

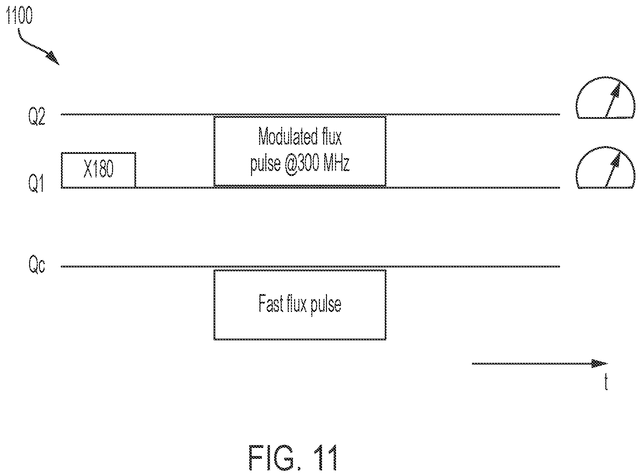

When the magnetic flux on the tunable-frequency coupler device 906 is at a parking value, the total coupling of an XX coupling or a ZZ coupling between the two tunable-frequency qubit devices 902, 904 can be turned off, deactivated, or vanished (e.g., less than or equal to a predetermined threshold value). When the magnetic flux on the tunable-frequency coupler device 906 is at a gate-activating value different from the parking value, the total coupling between the two tunable-frequency qubit devices 902, 904 can be turned on, enabled, or otherwise activated for performing a two-qubit quantum logic gate or another multi-qubit quantum logic gate. In other instances, operation for determining the parking value and the gate-activating value of the magnetic flux on the tunable-frequency coupler device 906 in a superconducting quantum processing unit 900 can be implemented with respect to operation of the example process 1100 shown in FIG. 11 or in another manner.

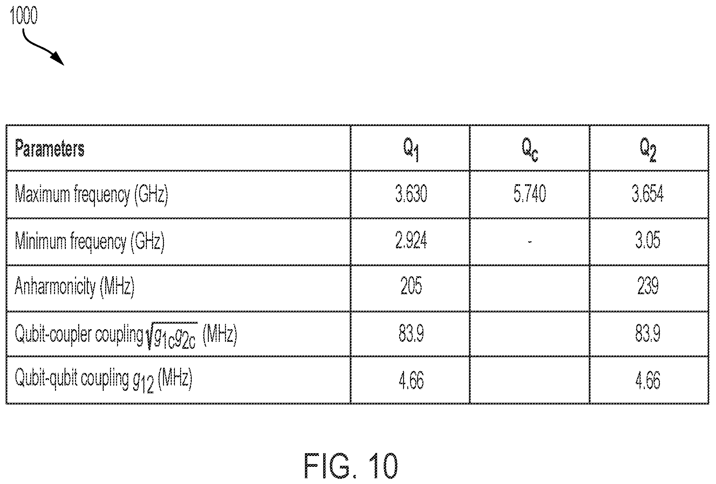

FIG. 10 is a table 1000 showing device parameters of an example quantum processing unit. The example quantum processing unit includes two tunable-frequency qubit devices coupled by a tunable-frequency coupler device. For example, the example quantum processing unit can be implemented as the example superconducting quantum processing unit 800 shown in FIG. 8, which can be represented by the equivalent circuit diagram 900 shown in FIG. 9. Qubit device Q1 represents the first tunable-frequency qubit device 812, which has a |0〉 → |1) transition frequency (at zero flux bias) of 3.630 GHz (a maximum value of the transition frequency, *ωₘₐₓ*/2*π* = 3.630 GHz), a |1〉 → |2〉 transition frequency (at zero flux bias) of 2.924 GHz (a minimum value of the transition frequency *ωₘᵢₙ*/2π = 2.924 GHz), and anharmonicity (at zero flux bias) of 205 MHz. Qubit device Q2 represents the second tunable-frequency qubit device 814, which has a |0〉 → |1〉 transition frequency (at zero flux bias) of 3.654 GHz (a maximum value of the transition frequency, *ωₘₐₓ*/2*π* = 3.654 GHz), a |1〉 → |2〉 transition frequency (at zero flux bias) of 3.05 GHz (a minimum value of the transition frequency, *ωₘᵢₙ*/2*π* = 3.05 GHz), and anharmonicity (at zero flux bias) of 239 MHz. Coupler device Qc represents the tunable-frequency coupler device 816, which has a |0〉 → |1〉 transition frequency (at zero flux bias) of 5.740 GHz (a maximum value of the transition frequency, *ωₘₐₓ*/2*π* = 5.740 GHz). The qubit-coupler coupling $\sqrt{{g}_{1 C} {g}_{2 C}}$ is 83.9 MHz and the qubit-qubit coupling *g*₁₂ is 4.66 MHz. In some implementations, the device parameters and coupling rates shown in FIG. 10 are determined with respect to operation 1504 in FIG. 15 or in another manner.

FIG. 11 is a schematic diagram 1100 showing pulse sequences for ZZ coupling measurement to determine a parking value of a coupler flux bias applied on a tunable-frequency coupler device of an example superconducting quantum processing unit. In some implementations, the superconducting quantum processing unit is implemented as the example superconducting quantum processing unit 800 shown in FIG. 8. The first tunable-frequency qubit device Q1 is promoted to its excited state |1〉 by applying a qubit drive signal (e.g., a *π* pulse), while the second tunable-frequency qubit device Q2 is in its ground state. The transition frequency of the second tunable-frequency qubit device is tuned by modulating the flux bias (flux pulses) applied on the second tunable-frequency qubit device Q2 at a flux modulation frequency. In some implementations, a flux modulation frequency of the flux modulation signal applied on the second tunable-frequency qubit device Q2 is greater than a value that is required for activating activates interactions between the first tunable-frequency qubit device Q1 and the second tunable-frequency qubit device Q2. In some instances, the flux modulation frequency can be 300 MHz (e.g., as shown in plot 700 of FIG. 7A) or another value such that a time average of the transition frequency of the second tunable-frequency qubit device Q2 is on resonance with the transition frequency of the first tunable-frequency qubit device Q1. At the same time, a coupler flux bias signal (e.g., fast flux pulses with a period in a range of between tens of nanoseconds and hundreds of nanoseconds) is communicated to the tunable-frequency coupler device Qc to change the magnetic flux of the tunable-frequency coupler device from a parking value to a gate-activating value. If there is a finite coupling between the first and second tunable-frequency qubit devices Q1, Q2, at a given magnetic flux of the tunable-frequency coupler device Qc, the two qubits defined by the first and second tunable-frequency qubit devices Q1, Q2 can exchange energy. By varying the magnetic flux in the tunable-frequency coupler device Qc, it is possible to obtain a total coupling rate as a function of the magnetic flux from which a parking value of the coupler flux bias that causes a total qubit-qubit coupling to turn-off, deactivate, or vanish (e.g., *g*₀₁ = 0 or less than a threshold value) and a gate-activating value of the coupler flux bias that causes a total qubit-qubit coupling to turn-on, activate, or be enabled can be determined. In some instances, the parking value and the gate-activating value are determined with respect to operations of the example process 1500 in FIG. 15 or in another manner.

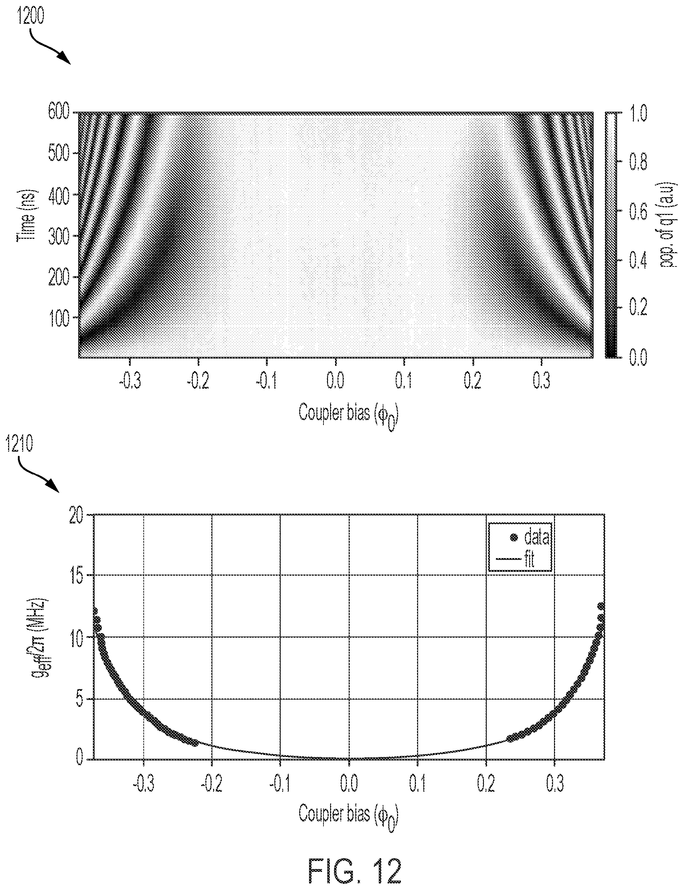

FIG. 12 are plots 1200, 1210 showing a gate time in nanosecond (ns), a population of a qubit device, an effective qubit-qubit coupling (*g_{eff}*) between two qubit devices as a function of a coupler flux bias (*Φ*₀) applied on a tunable-frequency coupler device in an example quantum processing unit. In some instances, the two qubit devices are tunable-frequency qubit devices which can be implemented as the first tunable-frequency qubit device 814 and the second tunable-frequency qubit device 816; and the tunable-frequency coupler device can be implemented as the tunable-frequency coupler device 816 of the example superconducting quantum processing unit 800 shown in FIG. 8. Qubit device parameters of the qubit devices and coupler devices are shown in FIG. 10. The two qubit devices are brought to resonance according to the operations in the example process 300 as shown in FIG. 3 or in another manner.

As shown in FIG. 12, the population of the first tunable-frequency qubit device 814 remains constant (~1) for a coupler flux bias in a range of between -0.2Φ₀ and 0.2Φ₀ and independent of the gate time. when the coupler flux bias is set to a value within this range, there is no exchange of energy between the two qubit devices, or the exchange of energy is negligible. In other words, the two qubit devices are decoupled when the coupler flux bias is set to a value within this range. Once the coupler flux bias increases beyond - 0.2Φ₀ or 0.2Φ₀, the population of the first tunable-frequency qubit device 814 oscillates as the coupler flux bias increases at a fixed gate time; and the population of the first tunable frequency qubit device 814 also oscillates as the gate time increases at a fixed coupler flux bias. The oscillation of the population of the first tunable-frequency qubit device 812 indicates energy exchange interaction between two qubits defined by the two qubit devices. The rate of exchange of energy (coupling rate) can be obtained by fitting the data (represented by filled circles in plot 1210) as illustrated in plot 1210 in FIG. 12. As clearly shown in FIG. 12, the qubit-qubit coupling vanishes (e.g., *g_{eff}*/2*π*<1 MHz) when the coupler flux bias is getting close to zero and when the two qubit devices are brought to resonance.

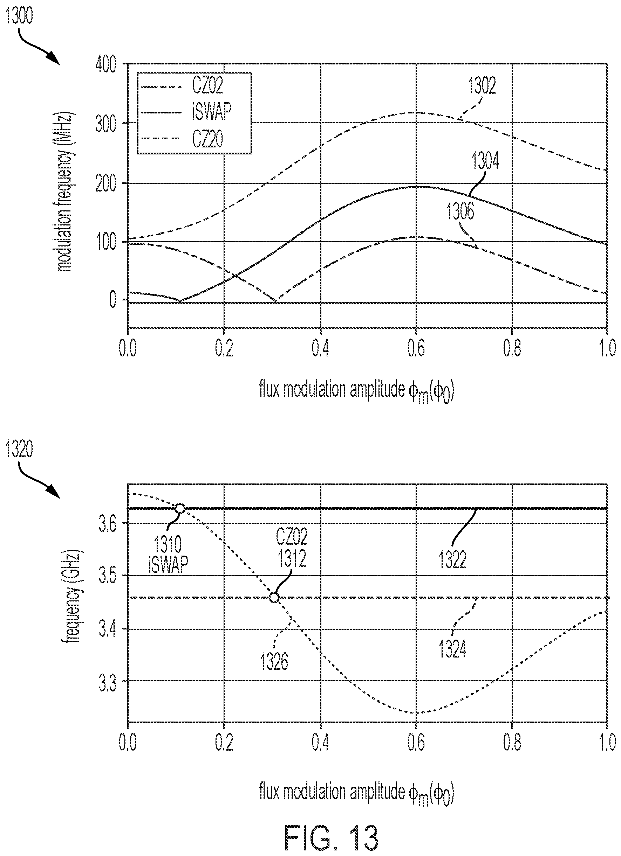

FIG. 13 are plots 1300, 1320 showing a flux modulation frequency (*ωₘ*) in MHz and transition frequencies of two qubit devices as a function of flux modulation amplitude (Φ*_{ac}*(Φ₀)) applied one of the two qubit device of an example superconducting quantum processing unit for activating various two-qubit quantum logic gates. In some instances, the two qubit devices are tunable-frequency qubit devices which can be implemented as the first tunable-frequency qubit device 814 and the second tunable-frequency qubit device 816 of the example superconducting quantum processing unit 800 shown in FIG. 8. Qubit device parameters of the qubit devices are shown in FIG. 10. As shown in FIG. 13, a two-qubit quantum logic gate (e.g., an iSWAP gate, a CZ02 gate, a CZ20 gate, or another two-qubit quantum logic gate) is activated by bringing a time average of the transition frequency of the second tunable-frequency qubit device 814 over a duration of the flux modulation signal on resonance with the transition frequency of the first tunable-frequency qubit device 812.

For example, an iSWAP gate can be activated when the time average of the transition frequency of the |0〉 - |1〉 transition ( $\left〈{f}_{01}^{{T}_{2}}\right〉$) of the second tunable-frequency qubit device 814 under flux modulation is brought on resonance with the transition frequency of the |0〉 → |1〉 transition ( ${f}_{01}^{{T}_{1}}$) of the first tunable-frequency qubit device 812 without flux modulation (e.g., at operating point 1310 between the tunable |0〉 → |1〉 transition frequency of the second tunable-frequency qubit device 814 represented by curve 1326 and the |0〉 → |1) transition frequency of the first tunable-frequency qubit device 812 represented by curve 1322).

Similarly, a CZ02 gate is activated when the time average of the modulated |0〉 → |1〉 transition frequency ( $\left〈{f}_{01}^{{T}_{2}}\right〉$) of the second tunable-frequency qubit device 814 under flux modulation is brought on resonance with the |1〉 → |2〉 transition frequency ( ${f}_{12}^{{T}_{1}}$) of the first tunable-frequency qubit device 812 without flux modulation (e.g., at operating point 1312 between the tunable |0〉 → |1〉 transition frequency of the second tunable-frequency qubit device 814 represented by curve 1326 and the |1〉 → |2〉 transition frequency of the first tunable-frequency qubit device 812 represented by curve 1324.

In some cases, to activate an iSWAP gate, the transition frequency of the second tunable-frequency qubit device 814 can be modulated at any available frequency that can be provided by a signal source (e.g., a flux pulse source as part of the signal hardware 104B of the control system 105B in FIG. 1). In some implementations, a value of a flux modulation frequency to activate a two-qubit quantum logic gate is greater than threshold values that can activate interactions between the first tunable-frequency qubit device and the second qubit device. In some implementations, the value of the flux modulation frequency can be selected as the frequency does not land on the curves 1302, 1304, 1306 shown in FIG. 13 and their corresponding higher harmonics frequencies. In some instances, an optimal range of the flux modulation frequency (*ωₘ*/2*π*) for activating an iSWAP gate is greater than a threshold frequency value. In some instances, the threshold frequency value is the maximum value of the flux modulation frequency that can activate a sideband parametric two-qubit quantum logic gate (e.g., *ωₘ*/2*π* ≥ 320 MHz for the CZ20 gate at 0.6Φ₀). Modulating the qubit flux bias applied on the second tunable-frequency qubit device 814 at a flux modulation frequency in this range ensures that other sideband parametric gates are not activated. In some implementations, the value of the flux modulation frequency of the flux modulation signal does not activate any sideband parametric two-qubit quantum logic gate between the second tunable-frequency qubit device 814 and the first-frequency qubit device 812. In some implementations, the value of the flux modulation frequency of the flux modulation signal does not activate any sideband parametric two-qubit quantum logic gate between the second tunable-frequency qubit device 814 and the tunable-frequency coupler device 816.

In some instances, the flux modulation frequency can be fixed and the modulation amplitude can be varied to generate the chevron. For example, a flux modulation frequency of *ωₘ*/2*π* = 300 MHz of the flux modulation signal applied to the second tunable-frequency qubit device 814 can be used to activate an iSWAP gate; a coupler flux bias of *Φ_{c}* = 0.336 *Φ*₀ is used to enable the coupling between the first and the second tunable-frequency qubit device 812, 814; and a chevron measurement can be performed to determine the flux modulation amplitude of the flux modulation signal applied to the second tunable-frequency qubit device 812.

In some implementations, the flux modulation frequency (e.g., *ωₘ* = 0) can be zero. In this case, a value of the flux modulation amplitude can be tuned to activate a respective two-qubit quantum logic gate. As shown in plot 1320 of FIG. 13, when the flux modulation frequency is zero, a value of the flux modulation amplitude of the flux modulation signal applied to the second tunable-frequency qubit device 814 can be tuned to ~0.15Φ₀ to activate an iSWAP gate, and ~0.30Φ₀ to activate an CZ02 gate.

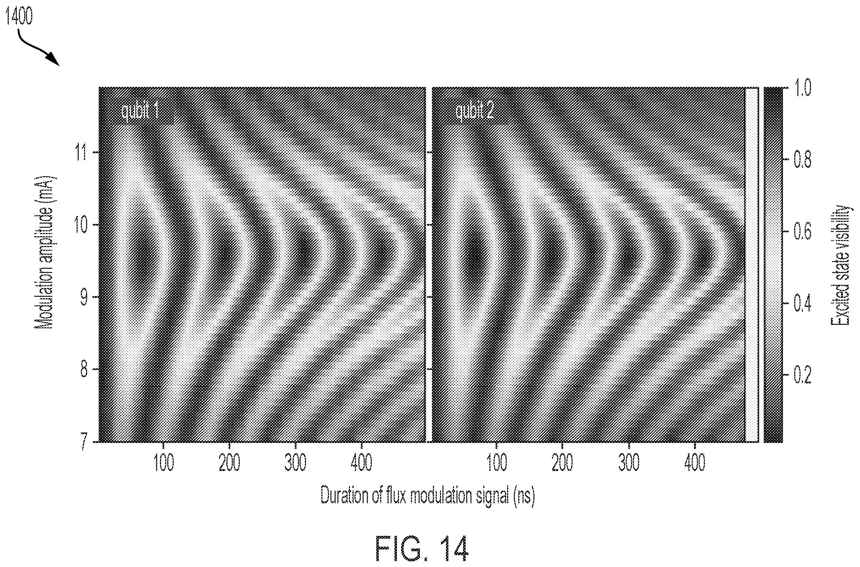

FIG. 14 is a plot 1400 showing population transferring between the first and second tunable-frequency qubit devices 812, 814 of the example superconducting quantum processing unit 800 shown in FIG. 8. The population transfer is represented by excited state visibility as a function of the flux modulation amplitude of the flux modulation signal applied on the second tunable-frequency qubit device 814 and duration of a flux modulation signal applied on the second tunable-frequency qubit device 814 shown in FIG. 8. The modulated flux pulse is applied to the second qubit 814 once the state |10〉 has been prepared. As shown in the plot 700, experimentally measured chevrons are associated with the XY interaction. The first qubit device qubit 1 (e.g., the second tunable-frequency qubit device 814 in FIG. 8) is initially prepared in its excited state |1〉 while the second qubit device qubit 2 (e.g., the first tunable-frequency qubit device 812 in FIG. 8) is in its ground state |0〉.

As shown in FIG. 14, energy exchange occurs between the two qubits defined by the two qubit devices. By modulating the qubit flux bias applied to the second tunable-frequency qubit device 814 (qubit 2) at 300 MHz, while communicating a fast DC flux bias on the tunable-frequency coupler device 816 coupled between the two qubit device with a flux bias amplitude of *Φ_{c}* = 0.336 *Φ*₀, the first and second tunable-frequency qubit devices 812, 814 are brought on resonance at a modulation amplitude I = 9.6 mA ( or a flux modulation amplitude of *Φ_{ac}*(*t*) = 0.18 *Φ*₀). In some implementations, the population transferring between the two qubit devices illustrates a resonant condition under which the two qubit devices are on resonance.

FIG. 15 is a flow chart showing aspects of an example process 1500. The example process 1500 can be used to determine control parameters of control signals for performing a two-qubit quantum logic gate. The example process 1500 can be used, for example, to operate a superconducting quantum processing unit of a quantum computing system. In some implementations, the example process 1500 is a calibration process. For instance, the example process 1500 may be used for determining values of control parameters to bring two qubit devices of a superconducting quantum processing unit on resonance for performing a two-qubit quantum logic gate. The example process 1500 is used to determine a parking value and a gate-activating value of a tunable-frequency coupler device to deactivate and activate a coupling between two qubit devices. In some implementations, the superconducting quantum processing unit includes at least one tunable-frequency qubit device. For example, the superconducting quantum processing unit includes two tunable-frequency qubit devices which can be implemented as the superconducting quantum processing units 800, 1900 in FIGS. 8 and 19. In some instances, the superconducting quantum processing unit includes a tunable-frequency coupler device (e.g., the tunable-frequency coupler device 816, 1916, 2206 in FIGS. 8, 19, 22). In some implementations, the superconducting quantum processing unit may include other superconducting quantum circuit devices, for example, readout resonator devices, flux bias elements, control lines, connections (e.g., capacitive coupling, galvanic coupling, inductive coupling, or combinations thereof). The example process 1500 may include additional or different operations, and the operations can be performed in the order shown or in another order.

In some implementations, one or more operations in the example process 1500 can be performed by a computer system, for instance, by a digital computer system having one or more digital processors (e.g., a microprocessor or other data processing apparatus) that execute instructions (e.g., instructions stored in a digital memory or other computer-readable medium), or by another type of digital, quantum, or hybrid computer system. As an example, in some cases the superconducting quantum processing unit can be deployed as the superconducting quantum processing unit 102 shown in FIG. 1, and operations in the example process 1500 shown in FIG. 15 can be controlled, executed, or initiated by one or more components of the control system 110 shown in FIG. 1.

At 1502, device parameters are obtained. The device parameters representing the quantum circuit devices (e.g., the two qubit devices and the coupler device) in a superconducting quantum processing unit can be determined by performing a measurement or characterization process, a calibration process, or another type of process. In some implementations, the device parameters may include one or more of the device parameters of the two qubit devices, and the coupler device in the superconducting quantum processing unit. For example, device parameters as shown in the table 1000 of FIG. 10, such as a range of operating frequencies (e.g., minimal and a maximal frequency values of the transition frequency), and anharmonicity of each of the qubit devices and the coupler device involved in the interaction, or another qubit device parameter, may be obtained. In certain cases, the values of the device parameters may be used to determine values of control parameters for control signals (e.g., drive frequency of a qubit drive signal, etc.). In some implementations, operation 1502 may be implemented with respect to the operation 302 of the example process 300.

At 1504, control parameters of control signals for applying a two-qubit quantum logic gate on qubits are determined. The qubits are defined by the two qubit devices in the quantum processing unit. In some instances, a flux modulation frequency and a flux modulation amplitude of the flux modulation signal applied on a first qubit device, a qubit flux bias applied on a second qubit device (e.g., when the second qubit device is a tunable-frequency qubit device), a coupler flux bias for coupling and decoupling the first and second qubit devices, and a gate time are determined. As shown in FIG. 15, operation 1504 includes sub-operations 1510, 1512, 1514, and 1516.

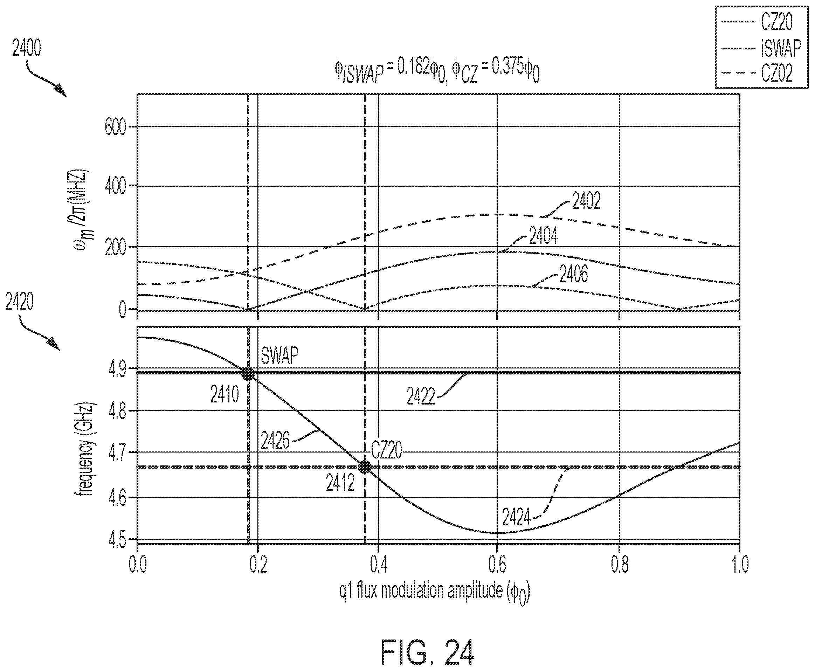

At 1510, a qubit flux bias applied on the first qubit device is modulated with a flux modulation frequency and a time average of the transition frequency of the first qubit device is determined. In some instances, operation 1510 can be used to determine the curves 722, 726 of FIG. 7, the curve 1326 of FIG. 13, and the curve 2426 of FIG. 24of FIG. 13. In some implementations, the first qubit device that receives the modulated flux bias (e.g., the second tunable-frequency qubit device 814 in FIG. 8 with a maximum transition frequency of 3.654 GHz shown in FIG. 10) has a higher value of a maximum transition frequency than that of the second qubit device (e.g., the first tunable-frequency qubit device 812 in FIG. 8 with a maximum transition frequency of 3.630 GHz shown in FIG. 10). In some instances, the flux modulation frequency for modulating the qubit flux bias on the first qubit device is set at a value that is not equal to a subharmonic of the difference between the time average of the transition frequency of the first tunable-frequency qubit device and the transition frequency of the second qubit device. For example, the flux modulation frequency can be set to a value above a threshold frequency value that activates interactions between the first and second qubit devices, e.g., equal to or greater than 300 MHz.

At 1512, the flux modulation frequency of the qubit flux bias is computed as a function of a flux modulation amplitude of the first qubit device. In some implementations, the flux modulation frequencies corresponding to the iSWAP, CZ20 and CZ02 gates are determined using *ω_{iSWAP}* = (*ω̅*_{T01} - *ω_{F}*)/2, *ω*_{*CZ*02} = (*ω̅*_{T01} *- ω_{F} + η_{F}*)/2 and *ω*_{*CZ*20} = (*ω̅*_{T01} - *ω_{F}* - *ω_{T}*)/2 respectively, where ${\overline{ω}}_{T 01} = \frac{1}{τ} {\int }_{0}^{τ} dt {ω}_{T 01} \left(t\right)$, and τ = 2*π*/*ωₘ.*

At 1514, a value of the flux modulation amplitude at which the time average of the |0〉 → |1〉 transition frequency of the first qubit device which is on resonance with the |1〉 → |2〉 transition frequency of the second qubit device is identified. For example, the value of the flux modulation amplitude can be determined based on the plot 1320 of FIG. 13. In some cases, the value of the flux modulation amplitude corresponds to the value of the flux modulation amplitude when the flux modulation frequency is zero. As shown in plot 1320 of FIG. 13, the value of the flux modulation amplitude depends on the type of the two-qubit quantum logic gate. For example, to activate an iSWAP gate, a flux modulation amplitude of 0.1Φ₀ can be applied on the first qubit device; while to activate a CZ02 gate, a flux modulation amplitude of 0.3Φ₀ can be applied on the first qubit device.

In some implementations, the value of the flux modulation amplitude of the flux modulation signal applied on the first qubit device can be determine by performing a chevron measurement. In some implementations, once the flux modulation frequency is determined, the flux modulation amplitude of the flux modulation signal can be selected according to results from a chevron measurement (e.g., the plot 1400 in FIG. 14). A value of the flux modulation amplitude that give maximum population transfer between the qubits is the value that causes the two qubit devices on resonance.

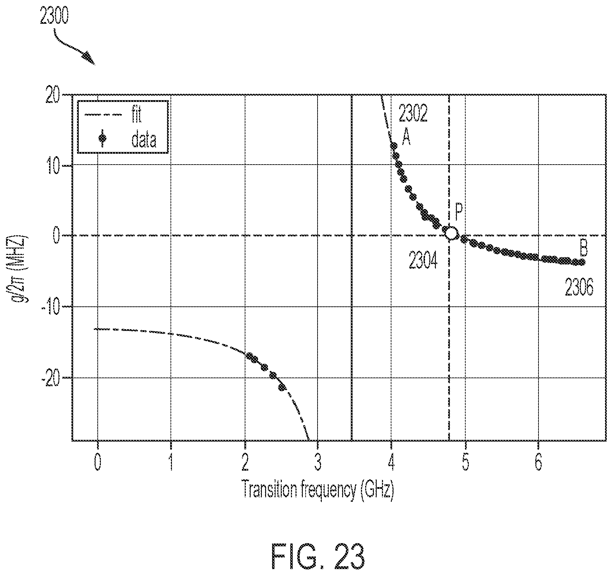

At 1516, a gate time is determined. In some instances, the gate time may be determined based on a coupler flux bias applied on the tunable-frequency coupler device. For example, a gate time can be determined according to the plot 1200 of FIG. 12. In some instances, an effective coupling between the two qubit devices as a function of the coupler flux bias can be obtained with respect to operations in the example process 1100 shown in FIG. 11 or in another manner. In some cases, qubit-qubit coupling as a function of tunable-frequency coupler flux bias can be measured by obtaining the plot 1400 in FIG. 14 from a chevron measurement at each coupler flux bias (or transition frequency of the tunable-frequency coupler device) and by obtaining the plot 2300 shown in FIG. 23. The parking value of the transition frequency of the tunable-frequency coupler device at which the coupling rate *g*/2*π* = 0 can be determined(e.g., operating point 2304). The transition frequency of the tunable-frequency coupler device can be tuned from the parking value (operating point 2304) to operating point 2302 or 2306 to increase the qubit-qubit coupling rate or decrease the gate time. In some cases, a gate time is selected to minimize the impact of incoherent errors. In some implementations, when the coupling rate is determined (at the corresponding transition frequency of the tunable-frequency coupler device), a gate time of an iSWAP gate is given by *t_{iSWAP}* = 2*π*/*2g* and a gate time for a CZ20 gate or a CZ02 gate is given by ${t}_{CZ 20} = {t}_{CZ 02} = 2 π / \sqrt{2} g$.

In some implementations, total coupling strength of the two qubit devices are measured. In some instances, the total coupling strength of the two qubit devices is measured at different values of a coupler flux bias applied to the coupler device. For example, a first value of the coupler flux bias can be applied to the coupler device to tune the frequency of the tunable-frequency coupler device to a maximal value. When the coupler device is tuned to the maximal value, a π pulse can be applied to one of the two qubit devices and an oscillation of a population of the other one of the two tunable-frequency qubit devices can be measured. In some instances, the total coupling strength at the first value of the coupler flux bias may be determined according to the oscillation period. This process is repeated as coupler flux bias is varied from the first value to a second value of the coupler flux bias causing coupler device to park at the minimal frequency. In some instances, the total coupling strength as a function of the coupler flux bias may be determined using a different control signal or in another manner. In some instances, a total XX coupling can be determined.

In some instances, a parking value of the coupler flux bias is identified. In some instances, the parking value of the coupler flux bias is identified as the value of the coupler flux bias at a vanishing total coupling strength, e.g., *g* = 0 or *g* ≤ *g*₀₁*_{,th}.* In certain instances, the predetermined threshold value (e.g., *g*_{01*,th*}) of the total coupling strength is determined according to a performance parameter, e.g., a gate fidelity. For example, a different gate fidelity value may result in a different threshold value for the total coupling strength.

In some instances, a gate-activating value of the coupler flux bias can be also identified. In certain examples, when the frequency of the coupler device is greater or less than both of the frequencies of the two qubit devices, the gate-activating value of the coupler flux bias is a value of the coupler flux bias that causes the total coupling strength to reach a local maximal value. In some instances, when the coupler device includes asymmetric Josephson junctions and its minimum frequency is greater than both the frequencies of the two qubit devices, the gate-activating value of the coupler flux bias is a value that causes the coupler device to park at the minimal frequency or another value.

In some implementations, the values of the control parameters of the control signal that are applied to the flux bias element can be determined according to the values of the coupler flux bias to be achieved. In some instances, the values of the control parameters of the control signal that are applied to the flux bias element can be determined using a measurement process, a calibration process, or another type of process. In some implementations, the values of the control parameters of the control signal are determined according to the design of the other quantum circuit devices in the superconducting quantum processing unit.

In some instances, the control signal can be applied to the first and second qubit devices to bring the first and second qubit devices on resonance with each other, for example, by tuning the qubit flux bias on a superconducting circuit loop of one of the two qubit devices to tune the transition frequency of the one of the two qubit devices. When the control signals are applied on the first and second qubit devices, a coupling of the first and second tunable-frequency qubit devices is allowed to evolve for a predetermined time period. In some examples, a time evolution of initial states of the first and second qubit devices is determined by a unitary operation that is applied to the first and second qubit devices within the predetermined time period. The predetermined time period is an evolution time or a gate time.

In some implementations, the coupler flux bias applied to the coupler device can be optimized to minimize the leakage from the states of the qubit devices to the tunable-frequency coupler device. For example, the coupler flux bias (flux pulses) can be a bipolar flux pulse, which is shaped to have a positive amplitude for part of the gate time, and a negative amplitude for the rest of the gate time such that the qubit is insensitive to flux noise, thus improving dephasing time and performance of two-qubit quantum logic gates.

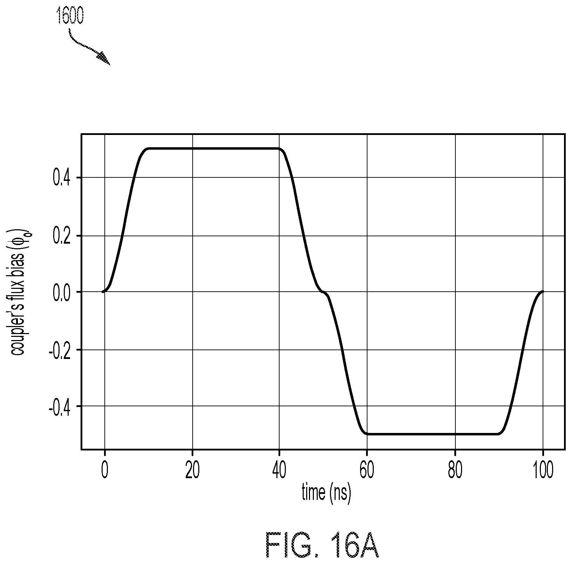

FIGS. 16A-16B are plots 1600, 1610 showing example bipolar pulse shapes for reducing flux noise sensitivity and improving dephasing time in an example superconducting quantum processing unit. As shown in FIG. 16A, a bipolar flux pulse can be defined using cosine functions as ${Φ}_{c} \left(t\right) = {Φ}_{0} \left\{\begin{matrix}\frac{a}{2} \left[1-cos\left(\frac{πt}{{τ}_{r}}\right)\right] , \\ a , \\ \frac{a}{2} \left[1-cos\left(\frac{π \left(0.5{τ}_{p}-t\right)}{{τ}_{r}}\right)\right] , \\ - \frac{a}{2} \left[1-cos\left(\frac{π \left(0.5{τ}_{p}-t\right)}{{τ}_{r}}\right)\right] , \\ - a , \\ - \frac{a}{2} \left[1-cos\left(\frac{π \left({τ}_{p}-t\right)}{{τ}_{r}}\right)\right] ,\end{matrix} \begin{matrix}0 \leq t \leq {τ}_{r} \\ {τ}_{r} \leq t \leq \frac{{τ}_{p}}{2} - {τ}_{r} \\ \frac{{τ}_{p}}{2} - {τ}_{r} \leq t \leq \frac{{τ}_{p}}{2} \\ \frac{{τ}_{p}}{2} \leq t \leq \frac{{τ}_{p}}{2} + {τ}_{r} \\ \frac{{τ}_{p}}{2} + {τ}_{r} \leq t \leq {τ}_{p} - {τ}_{r} \\ {τ}_{p} - {τ}_{r} \leq t \leq {τ}_{p}\end{matrix}\right.$ (31) where *a* is the amplitude of the flux pulse (dimensionless quantity), *τᵣ* is the pulse rise time in nanosecond (ns), and *τₚ* is the pulse length in ns.

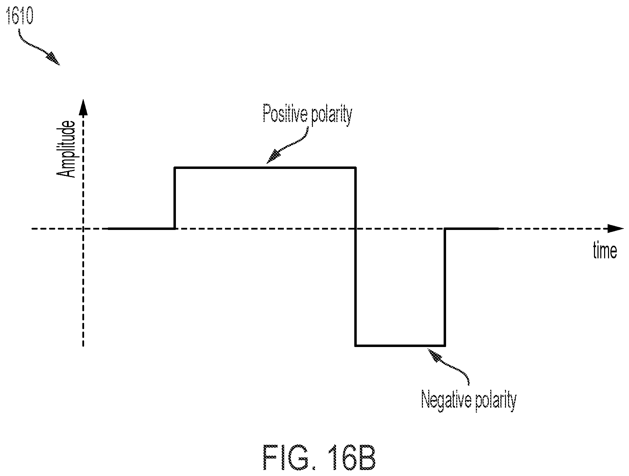

In some implementations, a bipolar flux pulse can be asymmetric and has net-zero flux during a period. As shown in FIG. 16B, a bipolar pulse, having positive and negative amplitudes that can differ in absolute value and duration, and a zero total net flux in one period can be communicated to a tunable-frequency coupler device (e.g., the tunable-frequency coupler device 816 in FIG. 8). In some instances, a bipolar flux pulse with a net-zero flux can be used to increase robustness to long-timescale flux dynamical distortions in the flux bias control line. Moreover, if the bipolar pulse is used on symmetric Hamiltonian, it can refocus low frequency flux noise, increasing the gate fidelity. In some instances, the bipolar flux pulse may have another different shape.

In some other implementations, one or two tunable-frequency qubit devices are modulated with two tones (e.g., bichromatic modulation). The bichromatic modulation generates dynamical sweet spots where the qubit is first order insensitive to slow flux noise and as a consequence where the dephasing time is not limited by slow flux noise. A two-qubit quantum logic gate can be activated at dynamical sweet spots by optimizing the bichromatic parameters to get the time average of the transition frequencies of a tunable-frequency qubit device on resonance with the transition frequency of another tunable-frequency qubit device or a fixed-frequency qubit device. This two-qubit quantum logic gate is protected from slow flux noise and can reach high fidelity. In certain implementations, the bichromatic modulation is optimized to maximize the sideband weight in order to minimize the gate time. In some other implementations, the flux pulse is optimized to maximize the gate fidelity of the two-qubit quantum logic gate.

FIG. 17 is a flow chart showing aspects of an example process 1700. The example process 1700 can be used, for example, to operate a superconducting quantum processing unit. For instance, the example process 1700 may apply one or more quantum logic gates or another type of control operation to a pair of qubits defined by two qubit devices with at least one tunable-frequency qubit device in a superconducting quantum processing unit. Examples of quantum logic gates include two-qubit quantum logic gates, and other multi-qubit quantum logic gates. Examples of two-qubit quantum logic gates include iSWAP gates, SWAP gates, XY gates, controlled-Z gates and other controlled-rotation gates, controlled-NOT gates, and Bell-Rabi gates. The example process 1700 may include additional or different operations, and the operations can be performed in the order shown or in another order.

In some implementations, the superconducting quantum processing unit may include a superconducting circuit that includes quantum circuit devices. The quantum circuit devices may include, for example, tunable-frequency qubit devices, fixed-frequency qubit device, tunable-frequency coupler devices, readout resonator devices, control lines, connections (e.g., capacitive coupling, galvanic coupling, inductive coupling, or combinations thereof), and other types of circuit devices. For instance, the example process 1700 shown in FIG. 17 may be used to manage control operations, e.g., parametrically activated quantum logic gates, for a superconducting quantum processing unit including a superconducting quantum processing unit 800, 1900, shown in FIGS. 8, 19, or another type of superconducting circuit.

In some implementations, one or more operations in the example process 1700 can be performed by a computer system, for instance, by a digital computer system having one or more digital processors (e.g., a microprocessor or other data processing apparatus) that execute instructions (e.g., instructions stored in a digital memory or other computer-readable medium) to perform the example process 1700, or by another type of digital, quantum, or hybrid computer system. As an example, in some cases the superconducting quantum processing unit can be deployed as the superconducting quantum processing unit 102 shown in FIG. 1, and operations in the example process 1700 shown in FIG. 17 can be controlled, executed, or initiated by one or more components of the control system 110 shown in FIG. 1.

At 1702, the tunable-frequency coupler device is tuned by changing a coupler flux bias from a parking value to a gate-activating value. In some instances, the parking value and the gate-activating value of the coupler flux bias applied to the tunable-frequency coupler device may be obtained with respect to operations of the example process 1500 shown in FIG. 15 or in another manner. The gate-activating value of the coupler flux bias is the value of the coupler flux bias applied to the tunable-frequency coupler device that causes the tunable-frequency coupler device to park at a minimal frequency value of the transition frequency of the tunable-frequency coupler device. In some instances, a magnitude of the coupling strength between the first and second tunable-frequency qubit devices is maximal when the gate-activating value of the coupler flux bias is applied to the tunable-frequency coupler device.

At 1704, a two-qubit quantum logic gate is applied. The two-qubit quantum logic gate is applied on qubits defined by the first tunable-frequency qubit device and the second tunable-frequency qubit device. In some instances, values of control parameters for a control signal are obtained and stored in a database. For example, control parameters of control signals (e.g., flux modulation frequency and amplitude of a flux modulation signal applied on the second tunable-frequency qubit device, a qubit flux bias applied on the first tunable-frequency qubit device, and a coupler flux bias applied on the tunable-frequency coupler device, or other control parameters) can be obtained with respect to operations of the example process 1500 in FIG. 15 or in another manner. In some instances, the two-qubit quantum logic gates are applied according to operations of the example process 300. In some implementations, the control signal may be generated according to control information. In some implementations, the control information may be provided by a user device (e.g., the user device 110) or in another manner. In some implementations, the control information contains higher-level quantum instructions, such as a quantum algorithm, quantum operations that are to be performed on qubits defined by one or more tunable-frequency qubit devices in a superconducting quantum processing unit.

In some implementations, the control information may be converted to one or more control signals by operation of a processing unit. The control signal, which can be implemented as the control signals 206, can be communicated by operation of a control system, e.g., the control system 202 in FIG. 2, and delivered to the superconducting quantum processing unit, e.g., the superconducting quantum processing unit 204 in FIG. 2. The control signals converted from the control information depend on the superconducting quantum processing unit where the control signals are implemented. For example, the frequency of the control signal depends on the modality of the superconducting quantum processing unit. When the superconducting quantum processing unit contains superconducting quantum circuit devices, the control signal may have a frequency in a radiofrequency or microwave domain.

In some implementations, the control signal may be used to operate devices in the superconducting quantum processing unit, including the tunable-frequency qubit devices, the tunable-frequency coupler devices, readout resonator devices, bias devices, flux bias elements, or another type of component in the superconducting quantum processing unit, e.g., the superconducting quantum processing unit 102 of the quantum computing system 103 as shown in FIG. 1.

In some implementations, the control signal is a current signal, a voltage signal, or another type of electrical signal that is used to control the magnetic flux applied to tunable-frequency qubit devices in a superconducting quantum processing unit, e.g., the tunable-frequency qubit device 512, 812, 814, 902, 904, 1912, 1914 in FIGS. 5, 8, 9, 19. In some instances, the control signal is used to control a flux bias element to generate and modulate the magnetic flux that is applied to the tunable-frequency qubit devices.

At 1706, the tunable-frequency coupler device is tuned by changing the coupler flux bias from the gate-activating value to the parking value, after applying the two-qubit quantum logic gate. In some implementations, the tunable-frequency coupler devices are tuned by changing the coupler flux bias to its parking value which causes the tunable-frequency coupler device to park at a designated frequency value (e.g., the maximum) of the transition frequency of the tunable-frequency coupler device. In this case, the control signals are used to control a coupler flux bias applied to the tunable-frequency coupler device (e.g., the tunable-frequency coupler device 816, 906, 1916 in FIGS. 8, 9, 19) to park at a frequency value that causes the total coupling strength of the tunable-frequency qubit devices to vanish (e.g., *g* = 0 or *g* ≤ *g*_{01,}*ₜₕ,* where *g*_{01,*th*} is a threshold coupling strength value).

FIG. 18 is a schematic diagram showing aspects of an example superconducting quantum processing unit 1800. In some implementations, the superconducting quantum processing unit 1800 includes multiple unit cells in a two-dimensional grid or a three-dimensional lattice. The example superconducting quantum processing unit 1800 includes five tunable-frequency qubit devices 1802A, 1802B, 1802C, 1802D, 1802E, and four tunable-frequency coupler devices 1804A, 1804B, 1804C, 1804D. In some instances, the example superconducting quantum processing unit 1800 may also include readout resonator devices associated with the respective tunable-frequency qubit devices 1802A, 1802B, 1802C, 1802D, 1802E. The example superconducting quantum processing unit 1800 may include additional or different features and components, which may be configured in another manner. In some implementations, each of the tunable-frequency coupler devices includes one coupler electrode; and each of the tunable-frequency qubit devices includes two qubit electrodes. Each of the tunable-frequency qubit devices 1802A, 1802B, 1802C, 1802D, 1802E may be implemented as the tunable-frequency qubit device 812, 814 in FIG. 8; and each of the tunable-frequency coupler device 1804A, 1804B, 1804C, 1804D may be implemented as the tunable-frequency coupler device 816 in FIG. 8. The coupler electrodes associated with the tunable-frequency coupler devices 1804A, 1804B, 1804C, 1804D and the qubit electrodes associated with the tunable-frequency qubit devices 1802A, 1802B, 1802C, 1802D, 1802E. in the example superconducting quantum processing unit 1800 may be arranged in another manner.

Qubit electrodes of the tunable-frequency qubit devices 1802A, 1802B, 1802C, 1802D, 1802E are configured to form couplings with different superconducting circuit elements as shown in the example superconducting quantum processing unit 1800. For example, the qubit electrodes of the tunable qubit devices 1802A, 1802B, 1802C, 1802D, 1802E are configured to form couplings with the respective tunable-frequency coupler devices 1804A, 1804B, 1804C, 1804D in both X and Y directions. In some instances, the qubit electrodes are also configured to form coupling with other superconducting circuit elements, for example, Purcell filter devices, readout resonator devices, etc. The qubit electrodes of the tunable-frequency qubit devices 1802A, 1802B, 1802C, 1802D, 1802E and the coupler electrodes of the tunable-frequency coupler devices 1804A, 1804B, 1804C, 1804D may be implemented as the respective electrodes 822A, 822B, 824A, 824B, and 826 in FIG. 8. In certain instances, the other superconducting circuit elements, including the ground plane and the readout resonator devices, may be formed by patterning the same superconductive material as or different superconductive materials from that used in the qubit electrodes.

In the example shown in FIG. 18, a parking value of a respective coupler flux bias applied to a respective tunable-frequency coupler device 1804A, 1804B, 1804C, or 1804D can be obtained by measuring a total coupling strength of a pair of two neighboring tunable-frequency qubit devices including one of 1802A, 1802B, 1802C, 1802D, 1802E. The total coupling strength may be a coupling strength (e.g., *g*₀₁) of a XX coupling or a coupling strength (e.g., ζ) of a ZZ coupling. The measurement to find a vanishing total coupling strength *ζ* = 0 or *g*₀₁ = 0 can be performed by sending either a fast flux pulse or a flux modulation signal to a tunable-frequency qubit device with a higher frequency (e.g., the second tunable-frequency qubit device 812 in FIG. 8) to bring it on resonance with another tunable-frequency qubit device (e.g., the first tunable-frequency qubit device 814 in FIG. 8). Values of the total coupling strength of the first and second tunable-frequency qubit devices are measured as the value of the coupler flux bias varies from a maximal value to a minimal value. Based on the measured values of the coupling strength, the parking value and the gate-activating values of the coupler flux bias applied to the tunable-frequency coupler device are identified.

In some implementations, when operating a two-qubit quantum logic gate in the example superconducting quantum processing unit 1800, the tunable-frequency coupler device is tuned by changing the coupler flux bias applied to the tunable-frequency coupler device from a parking value to a gate-activating value. While the coupler flux bias is at the gate-activating value, one or more control signals can be applied to one or more of the first and second tunable-frequency qubit devices to perform the two-qubit quantum logic gate on qubits defined by the first and second tunable-frequency qubit devices. After the two-qubit quantum logic gate is performed, the tunable-frequency coupler device is tuned by changing the coupler flux bias from the gate-activating value to the parking value. In some implementations, operations of the superconducting quantum processing unit to perform a quantum logic gate may be performed using operations in the example process 1700 shown in FIG. 17 or in another manner.

FIG. 19 contains schematic diagrams of a top view and a cross-sectional view of an example superconducting quantum processing unit 1900. The example superconducting quantum processing unit 1900 includes superconducting quantum circuit devices. As shown in FIG. 19, the superconducting quantum circuit devices in the example superconducting quantum processing unit 1900 include a first tunable-frequency qubit device 1912, a second tunable-frequency qubit device 1914, and a tunable-frequency coupler device 1916. As shown in FIG. 19, the example superconducting quantum processing unit 1900 includes a ground plane 1928 surrounding the first and second tunable-frequency qubit devices 1912, 1914 and the tunable-frequency coupler device 1916, and other superconducting quantum circuit devices.

In some examples, the first and second tunable-frequency qubit devices 1912, 1914 and the tunable-frequency coupler device 316 may be implemented by other types of systems, and the features and components represented in FIG. 19 can be extended in a larger two-dimensional or three-dimensional array of devices (e.g., the two-dimensional and three-dimensional arrays 2000, 2100 shown in FIGS. 20-21). The example superconducting quantum processing unit 1900 may include additional or different features and components, which may be configured in another manner. For example, the superconducting quantum circuit devices may include respective readout resonator devices associated with the first and second tunable-frequency qubit devices 1912, 1914 for performing readout operations. For another example, the example superconducting quantum processing unit 1900 may include control lines (e.g., flux bias control lines and/or XY qubit control lines) for providing control signals (e.g., to activate or deactivate coupling between the first and second tunable-frequency qubit devices 1912, 1914) and performing multi-qubit quantum logic gates.

Each of the first and second tunable-frequency qubit devices 1912, 1914 and the tunable-frequency coupler device 1916 includes a superconducting circuit loop that has two Josephson junctions connected in parallel. Particularly, the first tunable-frequency qubit device 1912 includes a first superconducting circuit loop 1932; the second tunable-frequency qubit device 1914 includes a second superconducting circuit loop 1934; and the tunable-frequency coupler device 1916 includes a third superconducting circuit loop 1936. In some implementations, each of the first, second, and third superconducting circuit loops 1932, 1934, and 1936 can be inductively coupled to (has a mutual inductance with) a respective control line, which can individually tune a magnetic flux in a respective superconducting circuit loop. The control lines are connected to an external control system (e.g., the control system 202 in FIG. 2) which is configured to generate respective flux control signals. The two Josephson junctions in a superconducting circuit loop include an asymmetric Superconducting Quantum Interference Device (SQUID). In some instances, the first and second tunable-frequency qubit devices 1912, 1914 and the tunable-frequency coupler device 1916 may include additional or different features, and may operate as described with respect to FIG. 19 or in another manner. For example, the superconducting circuit loops 1932, 1934, and 1936 may include more than two Josephson junctions.

As shown in FIG. 19, each of the first and second tunable-frequency qubit devices 1912, 1914 and the tunable-frequency coupler device 1916 includes a pair of qubit electrodes. Particularly, the first tunable-frequency qubit device 1912 includes a first pair of qubit electrodes 1922A/1922B; the second tunable-frequency qubit device 1914 includes a second pair of qubit electrodes 1924A/1924B; and the tunable-frequency coupler device 1916 includes a third pair of coupler electrodes 1926A/1926B. Each of the first, second and third pairs of qubit electrodes are electrically floating at a certain potential without being conductively connected to the ground plane 1928. In other words, since the ground plane 1928 are configured around superconducting quantum circuit devices, the qubit electrodes 1922A/1922B, 1924A/1924B, and coupler electrodes 1926A/1926B are capacitively coupled to the ground plane 1928.

In some examples, a shunt capacitor can be formed between two qubit electrodes from the same superconducting quantum circuit device. In some instances, a residual capacitor can be formed between two qubit electrodes from two distinct superconducting quantum circuit devices forming a capacitive coupling between the two distinct superconducting quantum circuit devices. In some instances, a residual capacitor can be formed between a qubit electrode of the first tunable-frequency qubit device 1912 and a qubit electrode of the second tunable-frequency qubit device 1914. Therefore, a static capacitive coupling (*g*₁₂) between the first and second tunable-frequency qubit devices 1912, 1914 includes two components, e.g., a direct capacitive coupling component and an indirect capacitive coupling component. In some instances, the direct capacitive coupling component is caused by the capacitance formed between qubit electrodes 1922A/1922B of the first tunable-frequency qubit device 1912 and qubit electrodes 1924A/1924B of the second tunable-frequency qubit device 1914. In some instances, the indirect capacitive coupling component is a capacitive coupling mediated by the tunable-frequency coupler device 1906. The indirect capacitive coupling component is caused by the capacitances formed between coupler electrodes 1926A/1926B of the tunable-frequency coupler device 1916 and qubit electrodes 1922A/1922B/1924A/1924B of the first and second tunable-frequency qubit devices 1912, 1914.

The example superconducting quantum processing unit 1900 shown in FIG. 19 resides on the top surface of a substrate 1902, which can be implemented as the substrate 802 of the example superconducting quantum processing unit 800 in FIG. 8. The electrodes 1922A, 1922B, 1924A, 1924B, 1926A, and 1926B and the ground plane 1928 include superconductive materials and can be formed by patterning one or more superconductive (e.g. superconducting metal) layers or other materials on the surface of the substrate 1902. In some implementations, the qubit electrodes and the coupler electrodes may be implemented as the qubit electrodes and coupler electrodes of the example superconducting quantum processing unit 800 in FIG. 8 or in another manner.

FIG. 20 is a schematic diagram showing aspects of an example superconducting quantum processing unit 2000. The example superconducting quantum processing unit 2000 includes multiple tunable-frequency qubit devices 2002 and multiple tunable-frequency coupler devices 2004 arranged in an array. As shown, each of the multiple tunable-frequency qubit devices 2002 is coupled with four tunable-frequency coupler devices 2004; and each of the multiple tunable-frequency coupler devices 2004 is coupled with two tunable-frequency qubit devices 2002. Each of the multiple tunable-frequency coupler devices 2004 and multiple tunable-frequency qubit devices 2002 includes two qubit electrodes, which are electrically floating without being directly connected to the ground plane. In some instances, each of the tunable-frequency qubit devices 2002 and the tunable-frequency coupler devices 2004 may be implemented as the tunable-frequency qubit devices 512, 812, 814, 902, 904, 1912, 1914 in FIGS. 5, 8, 9, 19 and the tunable-frequency coupler device 1916 shown in FIG. 19, or in another manner.

The example superconducting quantum processing unit 2000 may include additional or different features and components, which may be configured in another manner. For example, the example superconducting quantum processing unit 2000 includes other superconducting quantum circuit devices, e.g., readout resonator devices associated with each of the multiple tunable-frequency qubit devices 2002 for performing readout operations. For another example, the example superconducting quantum processing unit 2000 may include control lines (e.g., flux bias control lines and/or qubit drive lines) for providing control signals (e.g., to activate or deactivate coupling between a pair of neighboring tunable-frequency qubit devices 2002) and performing multi-qubit quantum logic gates. In some implementations, each of the multiple tunable-frequency qubit devices 2002 has a dedicated flux bias control line. In some instances, each of the multiple tunable-frequency qubit devices has the flux bias control line combined with a qubit drive line. In some implementations, the tunable-frequency qubit devices 2004 and the tunable-frequency coupler devices 2004 in the example superconducting quantum processing unit 2000 may be operated with respect to the operations described in the example process 300, 1500, 1700 as shown in FIGS. 3, 15, and 17.

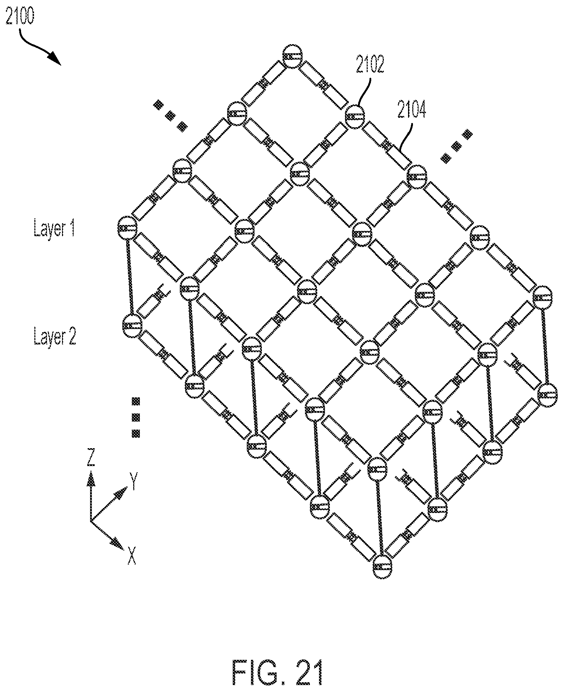

FIG. 21 is a schematic diagram showing aspects of an example superconducting quantum processing unit 2100. The example superconducting quantum processing unit 2100 includes multiple tunable-frequency qubit devices 2102 and multiple tunable-frequency coupler devices 2104 arranged in a three-dimensional lattice. As shown, each of the multiple tunable-frequency qubit devices 2102 is coupled with four tunable-frequency coupler devices 2104; and each of the multiple tunable-frequency coupler devices 2104 is coupled with two tunable-frequency qubit devices 2102. In some instances, each of the tunable-frequency qubit devices 2102 and the tunable-frequency coupler devices 2104 may be implemented as the tunable-frequency qubit devices 2002 and the tunable-frequency coupler device 2004 shown in FIG. 20 or in another manner. In some implementations, the example superconducting quantum processing unit 2100 in a three-dimensional lattice includes multiple layers of the example superconducting quantum processing unit 2000 in two-dimensional grid shown in FIG. 20. A coupling between two tunable-frequency qubit devices 2102 from two distinct layers includes a static capacitive coupling or other types of coupling. In some instances, control lines may reside on a second distinct surface of a substrate opposite to a first surface with the example superconducting quantum processing unit 2100.

In some implementations, the tunable-frequency qubit devices 2102 and the tunable-frequency coupler devices 2104 in the example superconducting quantum processing unit 2100 may be operated with respect to the operations described in the example process 300, 1500, 1700 as shown in FIGS. 3, 15, and 17. As shown in FIG. 21, all the tunable-frequency qubit device 2102 and tunable-frequency coupler devices 2104 are floating with no qubit/coupler electrodes galvanically connected to the ground plane. In some cases, the use of floating tunable-frequency coupler devices adds the flexibility of moving the qubit devices apart while getting enough coupling between them to achieving a vanishing coupling. In some cases, floating tunable-frequency qubit devices can provide better coherence times than grounded tunable-frequency qubit devices (e.g., one of the qubit electrodes is galvanically connected to the ground plane), which has a positive impact on the performance of operating two-qubit quantum logic gates.

In some instances, the methods and techniques presented here can be used to improve the performance of parametrically activated multi-qubit quantum logic gates by reducing the gate time while taking advantage of the selectivity of parametric gates. The methods and techniques presented in this disclosure enable activation of two-qubit quantum logic gates without a reduction of the coupling rates. In some implementations, all the two-qubit quantum logic gates as well as other types of multi-qubit quantum logic gates on different qubit devices can be activated at a single flux modulation frequency value. In this case, sensitive to the frequency dependent transfer function that could lead to chevron distortion which can negatively impact the performance of the multi-qubit quantum logic gates can be reduced.

FIG. 22 is a circuit diagram showing an example equivalent circuit 2200 of an example superconducting quantum processing unit. The example equivalent circuit 2200 represented in FIG. 22 includes a tunable-frequency qubit device 2202, a fixed-frequency qubit device 2204, and a tunable-frequency coupler device 2206. For instance, the equivalent circuit 2200 in FIG. 22 can represent a pair of qubit devices 212B, 212C and the coupler device 214C in the superconducting quantum processing unit 204 in FIG. 2, or the equivalent circuit 2200 in FIG. 22 can represent devices in another type of system or environment.

In the example shown in FIG. 22, each of the tunable-frequency qubit device 2202 and the tunable-frequency coupler device 2206 is implemented as a tunable-frequency transmon qubit device. As shown, the tunable-frequency qubit device 2202 includes two Josephson junctions, e.g., a first Josephson junction 2232A and a second Josephson junction 2232B. The first and second Josephson junctions 2232A, 2232B having Josephson energies *E*_{*JS*1} and *E*_{*JL*1} are connected in parallel with each other to form a first superconducting circuit loop 2212. The tunable-frequency qubit device 2202 also includes a shunt capacitor 2222 with a capacitance *C*₁, which is connected in parallel with the two Josephson junctions 2232A, 2232B. The shunt capacitor 2222 is caused by two qubit electrodes of the tunable-frequency qubit device 2202.

The tunable-frequency coupler device 2206 includes two Josephson junctions, e.g., a third Josephson junction 2236A and a fourth Josephson junction 2236B. The third and fourth Josephson junctions 2236A, 2236B having Josephson energies *E_{JSC}* and *E_{JLC}* are connected in parallel with each other to form a third superconducting circuit loop 2216. The tunable-frequency coupler device 2206 also includes a shunt capacitor 2226 with a capacitance *C_{C}*, which is connected in parallel with the two Josephson junctions 2236A, 2236B. The shunt capacitor 2226 is caused by two electrodes of the tunable-frequency coupler device 2206. In this case, each of the two electrodes of the tunable-frequency coupler device 2206 is a capacitively coupled to the ground plane; and the tunable-frequency coupler device 2206 is electrically floating.

The fixed-frequency qubit device 2204 includes one Josephson junctions, e.g., a fifth Josephson junction 2234. The fifth Josephson junction 2234 having a Josephson energy *E_{J2}* are connected in parallel with a shunt capacitor 2224 with a capacitance *C*₂. The shunt capacitor 2224 is caused by two qubit electrodes of the fixed-frequency qubit device 2204.

In the example shown in FIG. 22, each of the tunable-frequency qubit device 2202, the fixed-frequency qubit device 2204, and the tunable-frequency coupler device 2206 is capacitively coupled to the ground plane through respective residual capacitors. Particularly, the tunable-frequency qubit device 2202 is coupled to the ground plane via residual capacitors 2242A, 2242B; the fixed-frequency qubit device 2204 is coupled to the ground plane via residual capacitors 2244A, 2244B; and the tunable-frequency coupler device 2206 is coupled to the ground plane via residual capacitors 2246A, 2246B.

As shown in FIG. 22, the tunable-frequency coupler device 2206 is capacitively coupled to each of the tunable-frequency qubit device 2202 and the fixed-frequency qubit device 2204 via respective residual capacitors. Particularly, the tunable-frequency coupler device 2206 is coupled to the tunable-frequency qubit device 2202 via a residual capacitor 2248A; and the tunable-frequency coupler device 2206 is coupled to the fixed-frequency qubit device 2204 via a residual capacitor 2248B. The residual capacitors 2248A, 2248B represent the indirect capacitive coupling component between the tunable-frequency qubit device 2202 and the fixed-frequency qubit device 2204. Further, the tunable-frequency qubit device 2202 and the fixed-frequency qubit device 2204 are also capacitively coupled to each other via a residual capacitor 2258. Therefore, the residual capacitor 2258 represent the direct capacitive coupling component the tunable-frequency qubit device 2202 and the fixed-frequency qubit device 2204.

In some implementations, control operations can be performed on the superconducting circuit by providing control signals to the tunable-frequency qubit device 2202 and the fixed-frequency qubit device 2204 and the tunable-frequency coupler device 2206 via control lines. The control lines can receive the control signals, for example, from an external control system. In some implementations, each of the control lines can be connected to a conductor, an inductor, or another type of circuit component configured to carry a respective current *I* from a respective current source 2254A, 2254B, which generates a respective magnetic flux Φ(t) through the superconducting circuit loops 2212, 2216. For instance, the control line may include an inductor 2256A, 2256B (e.g., a partial loop, a single loop, or multiple loops of a conductor) that has a mutual inductance with the respective superconducting circuit loop 2212, 2216. In the example shown, the transition frequency of the tunable-frequency qubit device 2202 is tuned by tuning a magnetic flux in the first superconducting circuit loop 2212; and the transition frequency of the tunable-frequency coupler device 2206 is tuned by tuning a magnetic flux in the second superconducting circuit loop 2216. In some instances, the transition frequencies may be controlled in another manner, for instance, by another type of control signal. In some implementations, the control lines may be connected to an inductance loop or another type of flux bias element that is coupled (e.g., conductively, capacitively, or inductively) to a control port to receive control signals. In certain instances, the control signals on the control lines may cause the flux bias element to generate and modulate the magnetic flux in the superconducting circuit loop 2212, 2216. In some implementations, the control signals on the control line are flux bias signals or flux modulation signals, and are implemented as the control signals 206 as shown in FIG. 2.

In some implementations, when the tunable-frequency qubit device 2202 and the fixed-frequency qubit device 2204 are coupled through the tunable-frequency coupler device 2206, the coupling between the tunable-frequency qubit device 2202 and the fixed-frequency qubit device 2204 can be enabled/disabled by tuning a magnetic flux applied to the tunable-frequency coupler device 2206. For example, a separate control signal (e.g., a DC or an AC current) can be applied to a control line to tune the magnetic flux threading to the superconducting circuit loop 2216 of the tunable-frequency coupler device 2206 to adjust the transition frequency of the tunable-frequency coupler device 2206. When the magnetic flux on the tunable-frequency coupler device 2206 is at a parking value, the coupling between the two tunable-frequency qubit devices 2202, 2204 can be turned off or deactivated. When the magnetic flux on the tunable-frequency coupler device 906 is at a gate-activating value, the coupling the tunable-frequency qubit device 2202 and the fixed-frequency qubit device 2204 can be activated for performing a two-qubit quantum logic gate. In some instances, operation for activating and deactivating the tunable-frequency coupler device 2206 can be implemented with respect to the example process 1700 shown in FIG. 17 or in another manner.

In some implementations, the tunable-frequency qubit device 2202 includes highly asymmetric Josephson junctions (e.g., *E*_{*JS*1} « *E*_{*JL*1}) that form the superconducting circuit loop 2212. The tunable-frequency coupler device 2206 includes symmetric Josephson junctions or asymmetric Josephson junctions. In some implementations, a tunable-frequency coupler device 2206 with asymmetric Josephson junctions allows operating two-qubit quantum logic gates by tuning the transition frequency of the tunable-frequency coupler device 2206 to a minimal value to obtain gate stability against flux fluctuations. The strong asymmetry can result in much smaller tunability of the tunable-frequency qubit device 2202 than that of the tunable-frequency coupler device 2206. The systems and techniques presented here can reduce sensitivity of the tunable-frequency qubit device 2202 to flux noise thereby improving their coherence times.

In some implementations, when the tunable-frequency coupler device 2206 is in the ground state, the net qubit-qubit system can be described by the following Hamiltonian: $H = {ω}_{1} \left|1\right〉 \left〈1\right| ⊗ I + {ω}_{2} I ⊗ \left|1\right〉 \left〈1\right| + g \left(\left|01\right〉\left〈10\right|+\left|10\right〉\left〈01\right|\right)$ (32) where $g = {g}_{12} - \frac{1}{2} {g}_{1 c} {g}_{2 c} \left(\frac{1}{{ω}_{c} - {ω}_{1}}+\frac{1}{{ω}_{c} - {ω}_{2}}+\frac{1}{{ω}_{c} + {ω}_{1}}+\frac{1}{{ω}_{c} + {ω}_{2}}\right)$ (33) where *g* is the effective qubit-qubit coupling; *g*₁₂ is the direct qubit-qubit coupling via the residual capacitor 2258; *g*_{1*c*} is the coupling between the tunable-frequency coupler device 2206 and the tunable-frequency qubit device 2204 via the residual capacitor 2248A; *g*_{2*c*} is the coupling between the tunable-frequency coupler device 2206 and the fixed-frequency qubit device 2204 via the residual capacitor 2248B; and *ωⱼ* (*j* = 1,2, *c*) are the respective transition frequencies of the tunable-frequency qubit device 2202, the fixed-frequency qubit device 2204, and the tunable-frequency coupler device 2206.

In some implementations, a two-qubit quantum logic gate can be applied to qubits defined by the tunable-frequency qubit device 2202 and the fixed-frequency qubit device 2204 of the example superconducting quantum processing unit 2200. In some instances, a flux modulation signal can be generated and communicated to the tunable-frequency qubit device 2202. The flux modulation signal is configured to modulate a transition frequency of the tunable-frequency qubit device 2202 such that an average frequency of the tunable-frequency qubit device 2202 over a duration of the flux modulation signal is on resonance with the transition frequency of the fixed-frequency qubit device 2204 in the superconducting quantum logic circuit 2200. In some instances, the tunable-frequency coupler device can be tuned from a parking value (operating point 2304 as shown in FIG. 23) to a gate-activating value (e.g., operating point 2302, 2306 as shown in FIG. 23) to enable fast gates. The parking value of the transition frequency is the frequency at which the net qubit-qubit coupling *g* = 0 (Equation 33). In some implementations, the superconducting quantum processing unit 2200 may be operated with respect to the operations in the example process 300 as shown in FIG. 3 or in another manner.

FIG. 23 is a plot 2300 showing an effective qubit-qubit coupling *g*/*2*π (MHz) as a function of a transition frequency (MHz) of the tunable-frequency coupler device 2206 in the example superconducting quantum processing unit 2200 shown in FIG. 22. The plot 2300 shows a range of transition frequencies on the horizontal axis and a range of qubit-qubit coupling strengths on the vertical axis. The plot 2300 shows a number of operating points (filled circles) and a curve fit to the operating points. As shown in FIG. 23, the parking value (operating point 2304 shown in FIG. 23) is the operating point where the coupling strength is zero; the parking value is labeled "P" in the plot 2300 and corresponds to a transition frequency between 4 and 5 MHz. FIG. 23 also shows two possible gate-activating values (operating points 2302, 2306 shown in FIG. 23), which are operating points where the magnitude of the coupling strength is substantially increased relative to the parking value. One of the gate-activating values is labeled "A" in the plot 2300 and corresponds to a transition frequency near 4 MHz; another gate-activating value is labeled "B" in the plot 2300 and corresponds to a transition frequency between 6-7 MHz.

FIG. 24 are plots 2400, 2420 showing a flux modulation frequency (*ωₘ*) in MHz and transition frequencies of two qubit devices as a function of flux modulation amplitude (Φ*_{ac}*(Φ₀)) applied one of the two qubit device of an example superconducting quantum processing unit for activating various two-qubit quantum logic gates. In some instances, the two qubit devices include a tunable-frequency qubit device which can be implemented as the tunable-frequency qubit device 2202 of the example superconducting quantum processing unit 2200 shown in FIG. 22; and a fixed-frequency qubit device which can be implemented as the fixed-frequency qubit device 2204. As shown in FIG. 24, a two-qubit quantum logic gate (e.g., an iSWAP gate, a CZ02 gate, a CZ20 gate, or another two-qubit quantum logic gate) is activated by bringing a time average of the transition frequency of the tunable-frequency qubit device 2202 over a duration of the flux modulation signal on resonance with the transition frequency of the fixed-frequency qubit device 2204.

For example, an iSWAP gate can be activated when the time average of the transition frequency of the |0〉 → |1〉 transition of the tunable-frequency qubit device 2202 under flux modulation is brought on resonance with the transition frequency of the |0〉 → |1〉 transition of the fixed-frequency qubit device 2204 (e.g., at operating point 2410 between the tunable |0〉 → |1〉 transition frequency of the tunable-frequency qubit device 2202 represented by curve 2426 and the |0〉 → |1〉 transition frequency of the fixed-frequency qubit device 2204 represented by curve 2422).

Similarly, a CZ20 gate is activated when the time average of the modulated |0〉 → |1〉 transition frequency of the tunable-frequency qubit device 2202 under flux modulation is brought on resonance with the |1〉 → |2〉 transition frequency of the fixed-frequency qubit device 2204 (e.g., at operating point 2412 between the tunable |0〉 → |1〉 transition frequency of the tunable-frequency qubit device 2202 represented by curve 2426 and the |1〉 → |2〉 transition frequency of the fixed-frequency qubit device 2204 represented by curve 2424).

In some cases, to activate an iSWAP gate, the transition frequency of the tunable-frequency qubit device 2202 can be modulated at any available frequency that can be provided by a signal source (e.g., a flux pulse source as part of the signal hardware 104B of the control system 105B in FIG. 1). In some implementations, a value of a flux modulation frequency to activate a two-qubit quantum logic gate is greater than threshold values that can activate interactions between the tunable-frequency qubit device 2202 and the fixed-frequency qubit device 2204. In some implementations, the value of the flux modulation frequency can be selected as the frequency does not land on the curves 2402, 2404, 2406 shown in FIG. 24 and their corresponding higher harmonics frequencies. In some instances, an optimal range of the flux modulation frequency (*ωₘ*/2*π*) for activating an iSWAP gate is greater than a threshold frequency value. In some instances, the threshold frequency value is the maximum value of the flux modulation frequency that can activate a sideband parametric two-qubit quantum logic gate (e.g., *ωₚ*/2*π* ≥ 300 MHz for the CZ20 gate at 0.6Φ₀). Modulating the qubit flux bias applied on the tunable-frequency qubit device 2202 at a flux modulation frequency in this range ensures that other sideband parametric gates are not activated. In some implementations, the value of the flux modulation frequency of the flux modulation signal does not activate any sideband parametric two-qubit quantum logic gate between the tunable-frequency qubit device 2202 and the fixed-frequency qubit device 2204. In some implementations, the value of the flux modulation frequency of the flux modulation signal does not activate any sideband parametric two-qubit quantum logic gate between the tunable-frequency qubit device 2202 and the tunable-frequency coupler device 2206.

In some instances, the flux modulation frequency can be fixed and the modulation amplitude can be varied to generate the chevron. For example, a flux modulation frequency of *ωₘ*/2*π* = 300 MHz of the flux modulation signal applied to the second tunable-frequency qubit device 814 can be used to activate an iSWAP gate; a coupler flux bias of *Φ_{c}* = 0.336 *Φ*₀ is used to enable the coupling between the first and the second tunable-frequency qubit device 812, 814; and a chevron measurement can be performed to determine the flux modulation amplitude of the flux modulation signal applied to the second tunable-frequency qubit device 812.

In some implementations, a value of the flux modulation amplitude can be tuned to activate a respective two-qubit quantum logic gate. As shown in plot 2420 of FIG. 24, value of the flux modulation amplitude of the flux modulation signal applied to the tunable-frequency qubit device 2202 can be tuned to ~0.182Φ₀ to activate an iSWAP gate, and ~0.375Φ₀ to activate an CZ20 gate.

In some other implementations, a two-qubit quantum logic gate between the tunable-frequency qubit device 2202 and the fixed-frequency qubit device 2204 coupled via the tunable-frequency coupler device 2206 can be activated by modulating the transition frequency of the tunable-frequency coupler device 2202 at a frequency value that does not activate any sideband gate. For example, a flux modulation signal can be generated by and communicated from an AC+DC flux bias source (e.g., the current source 2254A in FIG. 22) to the tunable-frequency qubit device 2202 and at the same time tuning the transition frequency of the tunable-frequency coupler device 2206 from the parking value to the gate-activating value via a DC flux pulse generated by a DC flux bias source (e.g., the current source 2254 in FIG. 22).

Some of the subject matter and operations described in this specification can be implemented in digital electronic circuitry, or in computer software, firmware, or hardware, including the structures disclosed in this specification and their structural equivalents, or in combinations of one or more of them. Some of the subject matter described in this specification can be implemented as one or more computer programs, i.e., one or more modules of computer program instructions, encoded on a computer storage medium for execution by, or to control the operation of, data-processing apparatus. A computer storage medium can be, or can be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media.

Some of the operations described in this specification can be implemented as operations performed by a data processing apparatus on data stored on one or more computer-readable storage devices or received from other sources.

The term "data-processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a crossplatform runtime environment, a virtual machine, or a combination of one or more of them.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program, or in multiple coordinated files (e.g., files that store one or more modules, sub programs, or portions of code). A computer program can be deployed to be executed on one computer or on multiple computers that are located at one site or distributed across multiple sites and interconnected by a communication network.

Some of the processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

In a general aspect, forming, activating, and calibrating two-qubit quantum gates are performed in a superconducting quantum processing unit.

In a first example, a flux modulation signal is generated, by operation of a control system. The flux modulation signal is configured to modulate a transition frequency of a first tunable-frequency qubit device in a superconducting quantum processing unit such that a time average of the transition frequency of the first tunable-frequency qubit device over a duration of the flux modulation signal is on resonance with a transition frequency of a second qubit device in the superconducting quantum processing unit. A two-qubit quantum logic gate is applied to a pair of qubits in the superconducting quantum processing unit. When the two-qubit quantum logic gate is applied, the flux modulation signal is communicated to a flux bias control line coupled to the first tunable-frequency qubit device. The pair of qubits includes a first qubit defined by the first tunable-frequency qubit device and a second qubit defined by the second qubit device.

Implementations of the first example may include one or more of the following features. The first tunable-frequency qubit device includes a superconducting circuit loop, and a flux bias element that applies a magnetic flux to the superconducting circuit loop. When the flux modulation signal is communicated to the flux bias control line coupled the first tunable-frequency qubit device, the flux modulation signal is communicated to the flux bias element such that the magnetic flux to the superconducting circuit loop is modulated. The second qubit device includes a fixed-frequency qubit device; and the superconducting quantum processing unit includes a fixed-frequency coupler device coupled between the first tunable-frequency qubit device and the fixed-frequency qubit device. The second qubit device includes a second tunable-frequency qubit device. The superconducting quantum processing unit includes a tunable-frequency coupler device coupled between the first tunable-frequency qubit device and the second tunable-frequency qubit device. The transition frequency of the second qubit device is a maximum transition frequency of the second tunable-frequency qubit device. When the two-qubit quantum logic gate is applied, a flux bias signal is communicated to a flux bias control line coupled to the second tunable-frequency qubit device. The flux bias signal is configured to tune the transition frequency of the second tunable-frequency qubit device to the maximum transition frequency.

Implementations of the first example may include one or more of the following features. The first tunable-frequency qubit device further includes a qubit drive line. When the two-qubit quantum logic gate is applied to the pair of qubits, a microwave drive signal is generated by operation of the control system; and the microwave drive signal is communicated to the first tunable-frequency qubit device on the qubit drive line. The first tunable-frequency qubit device includes a tunable-frequency transmon device.

Implementations of the first example may include one or more of the following features. The flux modulation signal is defined by a flux modulation amplitude and a flux modulation frequency. When the flux modulation signal is generated, a value of the flux modulation frequency and a value of the flux modulation amplitude of the flux modulation signal is determined by operation of the control system. The superconducting quantum processing unit includes a third qubit device. The third qubit device is operably coupled to the first tunable-frequency qubit device. The value of the flux modulation frequency does not activate an interaction between the first tunable-frequency qubit device and the third qubit device. The value of the flux modulation frequency is not equal to a subharmonic of the difference between the time average of the transition frequency of the first tunable-frequency qubit device and the transition frequency of the second qubit device. The value of the flux modulation frequency is greater than a threshold frequency value that activates interactions between the first tunable-frequency qubit device and the second qubit device.

Implementations of the first example may include one or more of the following features. The superconducting quantum processing unit comprises a tunable-frequency coupler device coupled between the first tunable-frequency qubit device and the second qubit device. The flux modulation signal is defined by a flux modulation amplitude and a flux modulation frequency. Before the flux modulation signal is generated, a value of the flux modulation frequency and a value of the flux modulation amplitude of the flux modulation signal are determined by operation of the control system. The value of the flux modulation frequency does not activate an interaction between the first tunable-frequency qubit device and the tunable-frequency coupler device.

Implementations of the first example may include one or more of the following features. Prior to generating the flux modulation signal, a calibration process for the two-qubit quantum logic gate is performed. When the calibration process is performed, values of device parameters of the superconducting quantum processing unit are determined. When the values of the device parameters are determined, values of at least one of a range of operating frequencies and anharmonicities of the first tunable-frequency qubit device are determined. While the first and second tunable-frequency qubit devices are on resonance with each other, values of a coupling strength of the first and second tunable-frequency qubit devices are measured to determine an operating value and a parking value of a magnetic flux applied on the tunable-frequency coupler device. When the flux modulation signal is generated, a gate time for the two-qubit quantum logic gate is determined.

In a second example, a quantum computing system includes a superconducting quantum processing unit and a control system. The superconducting quantum processing unit includes a first tunable-frequency qubit device and a second qubit device. The control system is communicably coupled to the superconducting quantum processing unit. The control system is configured to perform one or more operations of the first example.

Certain features that are described in this specification or shown in the drawings in the context of separate implementations can also be combined. Conversely, various features that are described or shown in the context of a single implementation can also be implemented in multiple implementations separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single product or packaged into multiple products.

A number of embodiments have been described. Nevertheless, it will be understood that various modifications can be made. Accordingly, other embodiments are within the scope of the following claims.

## Claims

1. A quantum information control method comprising:
generating (302), by operation of a control system (202), a flux modulation signal configured to modulate a transition frequency of a first tunable-frequency qubit device (212A) in a superconducting quantum processing unit (204) such that a time average of the transition frequency of the first tunable-frequency qubit device (212A) over a duration of the flux modulation signal is on resonance with a transition frequency of a second qubit device (212B) in the superconducting quantum processing unit (204); and
applying (304) a two-qubit quantum logic gate to a pair of qubits in the superconducting quantum processing unit (204), wherein applying the two-qubit quantum logic gate comprises communicating the flux modulation signal to a flux bias control line coupled to the first tunable-frequency qubit device (212A), and the pair of qubits comprises a first qubit defined by the first tunable-frequency qubit device (212A) and a second qubit defined by the second qubit device (212B), wherein the superconducting quantum processing unit (204) comprises a tunable-frequency coupler device (214) coupled between the first tunable-frequency qubit device (212A) and the second qubit device (212B), the flux modulation signal is defined by a flux modulation amplitude and a flux modulation frequency, and the method comprises, prior to generating the flux modulation signal, determining, by operation of the control system (202), a value of the flux modulation frequency and a value of the flux modulation amplitude of the flux modulation signal, and the value of the flux modulation frequency does not activate an interaction between the first tunable-frequency qubit device (212A) and the tunable-frequency coupler device (214).

2. The method of claim 1, wherein:
the first tunable-frequency qubit device (212A) comprises:
a superconducting circuit loop (912), and
a flux bias element that applies a magnetic flux to the superconducting circuit loop (912); and
communicating the flux modulation signal to the flux bias control line comprises communicating the flux modulation signal to the flux bias element such that the magnetic flux is modulated by the flux modulation signal.

3. The method of claim 1, wherein:
the second qubit device (212B) comprises a second tunable-frequency qubit device,
the superconducting quantum processing unit (204) comprises a tunable-frequency coupler device (214) coupled between the first tunable-frequency qubit device (212A) and the second tunable-frequency qubit device (212B),
the first tunable-frequency qubit device (212A) and the second tunable-frequency qubit device (212B) are coupled by the tunable-frequency coupler device (214) during the application of the two-qubit quantum logic gate,
the transition frequency of the second qubit device (212B) is a maximum transition frequency of the second tunable-frequency qubit device (212B), and
applying the two-qubit quantum logic gate comprises communicating a flux bias signal to a flux bias control line coupled to the second tunable-frequency qubit device (212B), wherein the flux bias signal is configured to tune the transition frequency of the second tunable-frequency qubit device (212B) to the maximum transition frequency.

4. The method of claim 1, wherein the first tunable-frequency qubit device (212A) further comprises a qubit drive line, and applying the two-qubit quantum logic gate to the pair of qubits comprises:
generating, by operation of the control system (202), a microwave drive signal; and
communicating the microwave drive signal to the first tunable-frequency qubit (212A) device on the qubit drive line.

5. The method of claim 1, wherein the value of the flux modulation frequency is not
equal to a subharmonic of the difference between the time average of the transition frequency of the first tunable-frequency qubit device (212A) and the transition frequency of the second qubit device (212B).

6. The method of claim 1, wherein the value of the flux modulation frequency is
greater than a threshold frequency value that activates interactions between the first tunable-frequency qubit device (212A) and the second qubit device (212B).

7. The method of claim 1, comprising, prior to generating the flux modulation signal, performing a calibration process for the two-qubit quantum logic gate, wherein performing the calibration process comprises determining values of device parameters of the superconducting quantum processing unit (204).

8. The method of claim 7, wherein:
determining values of the device parameters comprises determining values of at least one of a range of operating frequencies and anharmonicities of the first tunable-frequency qubit device (212A); or
the calibration process comprises, while the first and second qubit devices (212A, 212B) are on resonance with each other, measuring values of a coupling strength of the first and second qubit devices (212A, 212B) to determine an operating value and a parking value of a magnetic flux applied on the tunable-frequency coupler device (214); or
the method comprises, prior to generating the flux modulation signal, determining a gate time for the two-qubit quantum logic gate.

9. A quantum computing system (200) comprising:
a superconducting quantum processing unit (204) comprising a first tunable-frequency qubit device (212A) and a second qubit device (212B); and
a control system (202) communicably coupled to the superconducting quantum processing unit (204), the control system (202) configured to perform operations comprising:
generating (302) a flux modulation signal configured to modulate a transition frequency of the first tunable-frequency qubit device (212A) such that a time average of the transition frequency of the first tunable-frequency qubit device (212A) over a duration of the flux modulation signal is on resonance with a transition frequency of the second qubit device (212B); and
applying (304) a two-qubit quantum logic gate to a pair of qubits, wherein applying the two-qubit quantum logic gate comprises communicating the flux modulation signal to a flux bias control line coupled to the first tunable-frequency qubit device, and the pair of qubits comprises a first qubit defined by the first tunable-frequency qubit device and a second qubit defined by the second qubit device, wherein the superconducting quantum processing unit (204) comprises a tunable-frequency coupler device (214) coupled between the first tunable-frequency qubit device (212A) and the second qubit device (212B), the flux modulation signal is defined by a flux modulation amplitude and a flux modulation frequency, and the operations comprise, prior to generating the flux modulation signal, determining a value of the flux modulation frequency and a value of the flux modulation amplitude of the flux modulation signal, wherein the value of the flux modulation frequency does not activate an interaction between the first tunable-frequency qubit device (212A) and the tunable-frequency coupler device (214).

10. The quantum computing system (200) of claim 9, wherein:
the first tunable-frequency qubit device (212A) comprises:
a superconducting circuit loop, and
a flux bias element that applies a magnetic flux to the superconducting circuit loop; and
communicating the flux modulation signal to the flux bias control line comprises communicating the flux modulation signal to the flux bias element such that the magnetic flux is modulated by the flux modulation signal.

11. The quantum computing system of claim 9, wherein:
the second qubit device (212B) comprises a fixed-frequency qubit device,
the superconducting quantum processing unit (204) comprises a fixed-frequency coupler device coupled between the first tunable-frequency qubit device (212A) and the fixed-frequency qubit device (212B), and
the first tunable-frequency qubit device (212A) and the fixed-frequency qubit device (212B) are coupled by the fixed-frequency coupler device (214) during the application of the two-qubit quantum logic gate; or
the second qubit device (212B) comprises a second tunable-frequency qubit device,
the superconducting quantum processing unit (204) comprises a tunable-frequency coupler device (214) coupled between the first tunable-frequency qubit device (212A) and the second tunable-frequency qubit device (212B),
the transition frequency of the second qubit device (212B) is a maximum transition frequency of the second tunable-frequency qubit device (212B), and
applying the two-qubit quantum logic gate comprises communicating a flux bias signal to a flux bias control line coupled to the second tunable-frequency qubit device (212B), wherein the flux bias signal is configured to tune the transition frequency of the second tunable-frequency qubit device (212B) to the maximum transition frequency.

12. The quantum computing system (200) of claim 9, wherein
the first tunable-frequency qubit device (212A) comprises a tunable-frequency transmon device.

13. The quantum computing system (200) of claim 9, wherein the superconducting quantum processing unit (204) comprises a third qubit device (212C), the third qubit device (212C) is operably coupled to the first tunable-frequency qubit device (212A), and the value of the flux modulation frequency does not activate an interaction between the first tunable-frequency qubit device (212A) and the third qubit device (212C).

## Patentansprüche

1. Quanteninformationssteuerverfahren, umfassend:
Erzeugen (302), durch Betrieb eines Steuersystems (202), eines Flussmodulationssignals, das konfiguriert ist, um eine Übergangsfrequenz einer frequenzabstimmbaren ersten Qubit-Vorrichtung (212A) in einer supraleitenden Quantenverarbeitungseinheit (204) derart zu modulieren, dass ein zeitlicher Mittelwert der Übergangsfrequenz der ersten frequenzabstimmbaren Qubit-Vorrichtung (212A) über eine Dauer des Flussmodulationssignals in Resonanz mit einer Übergangsfrequenz einer zweiten Qubit-Vorrichtung (212B) in der supraleitenden Quantenverarbeitungseinheit (204) ist; und
Anwenden (304) eines Zwei-Qubit-Quantenlogikgatters auf ein Paar von Qubits in der supraleitenden Quantenverarbeitungseinheit (204), wobei das Anwenden des Zwei-Qubit-Quantenlogikgatters das Kommunizieren des Flussmodulationssignals an eine Flussvorspannungssteuerleitung umfasst, die an die erste frequenzabstimmbare Qubit-Vorrichtung (212A) gekoppelt ist, und das Paar von Qubits ein erstes Qubit, das durch die erste frequenzabstimmbare Qubit-Vorrichtung (212A) definiert ist, und ein zweites Qubit, das durch die zweite Qubit-Vorrichtung (212B) definiert ist, umfasst, wobei die supraleitende Quantenverarbeitungseinheit (204) eine frequenzabstimmbare Kopplervorrichtung (214) umfasst, die zwischen die erste frequenzabstimmbare Qubit-Vorrichtung (212A) und die zweite Qubit-Vorrichtung (212B) gekoppelt ist, das Flussmodulationssignal durch eine Flussmodulationsamplitude und eine Flussmodulationsfrequenz definiert ist, und das Verfahren vor dem Erzeugen des Flussmodulationssignals Bestimmen, durch einen Betrieb des Steuersystems (202), eines Werts der Flussmodulationsfrequenz und eines Werts der Flussmodulationsamplitude des Flussmodulationssignals umfasst, und der Wert der Flussmodulationsfrequenz keine Wechselwirkung zwischen der ersten frequenzabstimmbaren Qubit-Vorrichtung (212A) und der frequenzabstimmbaren Kopplervorrichtung (214) aktiviert.

2. Verfahren nach Anspruch 1, wobei:
die erste frequenzabstimmbare Qubit-Vorrichtung (212A) umfasst:
eine supraleitende Schaltungsschleife (912), und
ein Flussvorspannungselement, das einen magnetischen Fluss auf die supraleitende Schaltungsschleife (912) anwendet; und
Kommunizieren des Flussmodulationssignals an die Flussvorspannungssteuerleitung Kommunizieren des Flussmodulationssignals an das Flussvorspannungselement umfasst, sodass der magnetische Fluss durch das Flussmodulationssignal moduliert wird.

3. Verfahren nach Anspruch 1, wobei:
die zweite Qubit-Vorrichtung (212B) eine zweite frequenzabstimmbare Qubit-Vorrichtung umfasst,
die supraleitende Quantenverarbeitungseinheit (204) eine frequenzabstimmbare Kopplervorrichtung (214) umfasst, die zwischen der ersten frequenzabstimmbaren Qubit-Vorrichtung (212A) und der zweiten frequenzabstimmbaren Qubit-Vorrichtung (212B) gekoppelt ist,
die erste frequenzabstimmbare Qubit-Vorrichtung (212A) und die zweite frequenzabstimmbare Qubit-Vorrichtung (212B) durch die frequenzabstimmbare Kopplervorrichtung (214) während der Anwendung des Zwei-Qubit-Quantenlogikgatters gekoppelt werden,
die Übergangsfrequenz der zweiten Qubit-Vorrichtung (212B) eine maximale Übergangsfrequenz der zweiten frequenzabstimmbaren Qubit-Vorrichtung (212B) ist, und
Anwenden des Zwei-Qubit-Quantenlogikgatters Kommunizieren eines Flussvorspannungssignals an eine Flussvorspannungssteuerleitung umfasst, die an die zweite frequenzabstimmbare Qubit-Vorrichtung (212B) gekoppelt ist, wobei das Flussvorspannungssignal konfiguriert ist, um die Übergangsfrequenz der zweiten frequenzabstimmbaren Qubit-Vorrichtung (212B) auf die maximale Übergangsfrequenz abzustimmen.

4. Verfahren nach Anspruch 1, wobei die erste frequenzabstimmbare Qubit-Vorrichtung (212A) ferner eine Qubit-Ansteuerleitung umfasst, und das Anwenden des Zwei-Qubit-Quantenlogikgatters auf das Paar von Qubits umfasst:
Erzeugen, durch Betrieb des Steuersystems (202), eines Mikrowellen-Ansteuersignals; und
Kommunizieren des Mikrowellen-Ansteuersignals an die erste frequenzabstimmbare Qubit(212A)-Vorrichtung auf der Qubit-Ansteuerleitung.

5. Verfahren nach Anspruch 1, wobei der Wert der Flussmodulationsfrequenz nicht gleich einer Subharmonischen der Differenz zwischen dem zeitlichen Mittelwert der Übergangsfrequenz der ersten frequenzabstimmbaren Qubit-Vorrichtung (212A) und der Übergangsfrequenz der zweiten Qubit-Vorrichtung (212B) ist.

6. Verfahren nach Anspruch 1, wobei der Wert der Flussmodulationsfrequenz größer als ein Schwellenfrequenzwert ist, der Wechselwirkungen zwischen der ersten frequenzabstimmbaren Qubit-Vorrichtung (212A) und der zweiten Qubit-Vorrichtung (212B) aktiviert.

7. Verfahren nach Anspruch 1, umfassend, vor dem Erzeugen des Flussmodulationssignals, Durchführen eines Kalibrierungsprozesses für das Zwei-Qubit-Quantenlogikgatter, wobei das Durchführen des Kalibrierungsprozesses Bestimmen von Werten von Vorrichtungsparametern der supraleitenden Quantenverarbeitungseinheit (204) umfasst.

8. Verfahren nach Anspruch 7, wobei:
Bestimmen von Werten der Vorrichtungsparameter Bestimmen von Werten von mindestens einem von einem Bereich von Betriebsfrequenzen und Anharmonizitäten der ersten frequenzabstimmbaren Qubit-Vorrichtung (212A) umfasst; oder
der Kalibrierungsprozess, während die erste und die zweite Qubit-Vorrichtung (212A, 212B) miteinander in Resonanz sind, Messen von Werten einer Kopplungsstärke der ersten und der zweiten Qubit-Vorrichtung (212A, 212B) umfasst, um einen Betriebswert und einen Parkwert eines auf die frequenzabstimmbare Kopplervorrichtung (214) angewendeten magnetischen Flusses zu bestimmen; oder
das Verfahren, vor dem Erzeugen des Flussmodulationssignals, Bestimmen einer Gatterzeit für das Zwei-Qubit-Quantenlogikgatter umfasst.

9. Quantenrechensystem (200), umfassend:
eine supraleitende Quantenverarbeitungseinheit (204), umfassend eine erste frequenzabstimmbare Qubit-Vorrichtung (212A) und eine zweite Qubit-Vorrichtung (212B); und
ein Steuersystem (202), das kommunikativ an die supraleitende Quantenverarbeitungseinheit (204) gekoppelt ist, wobei das Steuersystem (202) konfiguriert ist, um Vorgänge durchzuführen, die umfassen:
Erzeugen (302) eines Flussmodulationssignals, das konfiguriert ist, um eine Übergangsfrequenz der ersten frequenzabstimmbaren Qubit-Vorrichtung (212A) derart zu modulieren, dass ein zeitlicher Mittelwert der Übergangsfrequenz der ersten frequenzabstimmbaren Qubit-Vorrichtung (212A) über eine Dauer des Flussmodulationssignals in Resonanz mit einer Übergangsfrequenz der zweiten Qubit-Vorrichtung (212B) ist; und
Anwenden (304) eines Zwei-Qubit-Quantenlogikgatters auf ein Paar von Qubits, wobei das Anwenden des Zwei-Qubit-Quantenlogikgatters Kommunizieren des Flussmodulationssignals an eine Flussvorspannungssteuerleitung umfasst, die an die erste frequenzabstimmbare Qubit-Vorrichtung gekoppelt ist, und das Paar von Qubits ein erstes Qubit, das durch die erste frequenzabstimmbare Qubit-Vorrichtung definiert ist, und ein zweites Qubit, das durch die zweite Qubit-Vorrichtung definiert ist, umfasst, wobei die supraleitende Quantenverarbeitungseinheit (204) eine frequenzabstimmbare Kopplervorrichtung (214) umfasst, die zwischen die erste frequenzabstimmbare Qubit-Vorrichtung (212A) und die zweite Qubit-Vorrichtung (212B) gekoppelt ist, das Flussmodulationssignal durch eine Flussmodulationsamplitude und eine Flussmodulationsfrequenz definiert ist, und die Vorgänge, vor dem Erzeugen des Flussmodulationssignals, Bestimmen eines Werts der Flussmodulationsfrequenz und eines Werts der Flussmodulationsamplitude des Flussmodulationssignals umfassen, wobei der Wert der Flussmodulationsfrequenz keine Wechselwirkung zwischen der ersten frequenzabstimmbaren Qubit-Vorrichtung (212A) und der frequenzabstimmbaren Kopplervorrichtung (214) aktiviert.

10. Quantenrechensystem (200) nach Anspruch 9, wobei:
die erste frequenzabstimmbare Qubit-Vorrichtung (212A) umfasst:
eine supraleitende Schaltungsschleife, und
ein Flussvorspannungselement, das einen magnetischen Fluss auf die supraleitende Schaltungsschleife anwendet; und
Kommunizieren des Flussmodulationssignals an die Flussvorspannungssteuerleitung Kommunizieren des Flussmodulationssignals an das Flussvorspannungselement umfasst, sodass der magnetische Fluss durch das Flussmodulationssignal moduliert wird.

11. Quantenrechensystem nach Anspruch 9, wobei:
die zweite Qubit-Vorrichtung (212B) eine Festfrequenz-Qubit-Vorrichtung umfasst,
die supraleitende Quantenverarbeitungseinheit (204) eine Festfrequenz-Kopplervorrichtung umfasst, die zwischen die erste frequenzabstimmbare Qubit-Vorrichtung (212A) und die Festfrequenz-Qubit-Vorrichtung (212B) gekoppelt ist, und
die erste frequenzabstimmbare Qubit-Vorrichtung (212A) und die Festfrequenz-Qubit-Vorrichtung (212B) durch die Festfrequenz-Kopplervorrichtung (214) während der Anwendung des Zwei-Qubit-Quantenlogikgatters gekoppelt werden; oder
die zweite Qubit-Vorrichtung (212B) eine zweite frequenzabstimmbare Qubit-Vorrichtung umfasst,
die supraleitende Quantenverarbeitungseinheit (204) eine frequenzabstimmbare Kopplervorrichtung (214) umfasst, die zwischen der ersten frequenzabstimmbaren Qubit-Vorrichtung (212A) und der zweiten frequenzabstimmbaren Qubit-Vorrichtung (212B) gekoppelt ist,
die Übergangsfrequenz der zweiten Qubit-Vorrichtung (212B) eine maximale Übergangsfrequenz der zweiten frequenzabstimmbaren Qubit-Vorrichtung (212B) ist, und
Anwenden des Zwei-Qubit-Quantenlogikgatters Kommunizieren eines Flussvorspannungssignals an eine Flussvorspannungssteuerleitung umfasst, die an die zweite frequenzabstimmbare Qubit-Vorrichtung (212B) gekoppelt ist, wobei das Flussvorspannungssignal konfiguriert ist, um die Übergangsfrequenz der zweiten frequenzabstimmbaren Qubit-Vorrichtung (212B) auf die maximale Übergangsfrequenz abzustimmen.

12. Quantenrechensystem (200) nach Anspruch 9, wobei
die erste frequenzabstimmbare Qubit-Vorrichtung (212A) eine frequenzabstimmbare Transmon-Vorrichtung umfasst.

13. Quantenrechensystem (200) nach Anspruch 9, wobei
die supraleitende Quantenverarbeitungseinheit (204) eine dritte Qubit-Vorrichtung (212C) umfasst, die dritte Qubit-Vorrichtung (212C) betriebsfähig an die erste frequenzabstimmbare Qubit-Vorrichtung (212A) gekoppelt ist, und der Wert der Flussmodulationsfrequenz keine Wechselwirkung zwischen der ersten frequenzabstimmbaren Qubit-Vorrichtung (212A) und der dritten Qubit-Vorrichtung (212C) aktiviert.

## Revendications

1. Procédé de commande d'informations quantiques comprenant :
la génération (302), par fonctionnement d'un système de commande (202), d'un signal de modulation de flux configuré pour moduler une fréquence de transition d'un premier dispositif à qubit à fréquence accordable (212A) dans une unité de traitement quantique supraconductrice (204) de telle sorte qu'une moyenne de temps de la fréquence de transition du premier dispositif à qubit à fréquence accordable (212A) sur une durée du signal de modulation de flux est en résonance avec une fréquence de transition d'un deuxième dispositif à qubit (212B) dans l'unité de traitement quantique supraconductrice (204) ; et
l'application (304) d'une porte logique quantique à deux qubits à une paire de qubits dans l'unité de traitement quantique supraconductrice (204), dans lequel l'application de la porte logique quantique à deux qubits comprend la communication du signal de modulation de flux à une ligne de commande de polarisation de flux couplée au premier dispositif à qubit à fréquence accordable (212A), et la paire de qubits comprend un premier qubit défini par le premier dispositif à qubit à fréquence accordable (212A) et un second qubit défini par le deuxième dispositif à qubit (212B), dans lequel l'unité de traitement quantique supraconductrice (204) comprend un dispositif de couplage à fréquence accordable (214) couplé entre le premier dispositif à qubit à fréquence accordable (212A) et le deuxième dispositif à qubit (212B), le signal de modulation de flux est défini par une amplitude de modulation de flux et une fréquence de modulation de flux, et le procédé comprend, avant génération du signal de modulation de flux, la détermination, par fonctionnement du système de commande (202), d'une valeur de la fréquence de modulation de flux et d'une valeur de l'amplitude de modulation de flux du signal de modulation de flux, et la valeur de la fréquence de modulation de flux n'active pas d'interaction entre le premier dispositif à qubit à fréquence accordable (212A) et le dispositif de couplage à fréquence accordable (214).

2. Procédé selon la revendication 1, dans lequel :
le premier dispositif à qubit à fréquence accordable (212A) comprend :
une boucle de circuit supraconductrice (912), et
un élément de polarisation de flux qui applique un flux magnétique à la boucle de circuit supraconductrice (912) ; et
la communication du signal de modulation de flux à la ligne de commande de polarisation de flux comprend la communication du signal de modulation de flux à l'élément de polarisation de flux de telle sorte que le flux magnétique est modulé par le signal de modulation de flux.

3. Procédé selon la revendication 1, dans lequel :
le deuxième dispositif à qubit (212B) comprend un deuxième dispositif à qubit à fréquence accordable,
l'unité de traitement quantique supraconductrice (204) comprend un dispositif de couplage à fréquence accordable (214) couplé entre le premier dispositif à qubit à fréquence accordable (212A) et le deuxième dispositif à qubit à fréquence accordable (212B),
le premier dispositif à qubit à fréquence accordable (212A) et le deuxième dispositif à qubit à fréquence accordable (212B) sont couplés par le dispositif de couplage à fréquence accordable (214) pendant l'application de la porte logique quantique à deux qubits,
la fréquence de transition du deuxième dispositif à qubit (212B) est une fréquence de transition maximale du deuxième dispositif à qubit à fréquence accordable (212B), et
l'application de la porte logique quantique à deux qubits comprend la communication d'un signal de polarisation de flux à une ligne de commande de polarisation de flux couplée au deuxième dispositif à qubit à fréquence accordable (212B), dans lequel le signal de polarisation de flux est configuré pour accorder la fréquence de transition du deuxième dispositif à qubit à fréquence accordable (212B) à la fréquence de transition maximale.

4. Procédé selon la revendication 1, dans lequel le premier dispositif à qubit à fréquence accordable (212A) comprend en outre une ligne de pilotage de qubit, et l'application de la porte logique quantique à deux qubits à la paire de qubits comprend :
la génération, par fonctionnement du système de commande (202), d'un signal de pilotage à micro-ondes ; et
la communication du signal de pilotage à micro-ondes au premier dispositif à qubit à fréquence accordable (212A) sur la ligne de pilotage de qubit.

5. Procédé selon la revendication 1, dans lequel la valeur de la fréquence de modulation de flux n'est pas égale à une sous-harmonique de la différence entre la moyenne de temps de la fréquence de transition du premier dispositif à qubit à fréquence accordable (212A) et de la fréquence de transition du deuxième dispositif à qubit (212B).

6. Procédé selon la revendication 1, dans lequel la valeur de la fréquence de modulation de flux est supérieure à une valeur de fréquence seuil qui active des interactions entre le premier dispositif à qubit à fréquence accordable (212A) et le deuxième dispositif à qubit (212B).

7. Procédé selon la revendication 1, comprenant, avant génération du signal de modulation de flux, la mise en œuvre d'un processus d'étalonnage pour la porte logique quantique à deux qubits, dans lequel la mise en œuvre du processus d'étalonnage comprend la détermination de valeurs de paramètres de dispositif de l'unité de traitement quantique supraconductrice (204).

8. Procédé selon la revendication 7, dans lequel :
la détermination de valeurs des paramètres de dispositif comprend la détermination de valeurs d'au moins l'une parmi une plage de fréquences de fonctionnement et d'anharmonicités du premier dispositif à qubit à fréquence accordable (212A) ; ou
le processus d'étalonnage comprend, alors que les premier et deuxième dispositifs à qubit (212A, 212B) sont en résonance l'un avec l'autre, la mesure de valeurs d'une force de couplage des premier et deuxième dispositifs à qubit (212A, 212B) pour déterminer une valeur de fonctionnement et une valeur de repos d'un flux magnétique appliqué sur le dispositif de couplage à fréquence accordable (214) ; ou
le procédé comprend, avant génération du signal de modulation de flux, la détermination d'un temps de porte pour la porte logique quantique à deux qubits.

9. Système informatique quantique (200) comprenant :
une unité de traitement quantique supraconductrice (204) comprenant un premier dispositif à qubit à fréquence accordable (212A) et un deuxième dispositif à qubit (212B) ; et
un système de commande (202) couplé par communication à l'unité de traitement quantique supraconductrice (204), le système de commande (202) étant configuré pour mettre en œuvre des opérations comprenant :
la génération (302) d'un signal de modulation de flux configuré pour moduler une fréquence de transition du premier dispositif à qubit à fréquence accordable (212A) de telle sorte qu'une moyenne de temps de la fréquence de transition du premier dispositif à qubit à fréquence accordable (212A) sur une durée du signal de modulation de flux est en résonance avec une fréquence de transition du deuxième dispositif à qubit (212B) ; et
l'application (304) d'une porte logique quantique à deux qubits à une paire de qubits, dans lequel l'application de la porte logique quantique à deux qubits comprend la communication du signal de modulation de flux à une ligne de commande de polarisation de flux couplée au premier dispositif à qubit à fréquence accordable, et la paire de qubits comprend un premier qubit défini par le premier dispositif à qubit à fréquence accordable et un second qubit défini par le deuxième dispositif à qubit, dans lequel l'unité de traitement quantique supraconductrice (204) comprend un dispositif de couplage à fréquence accordable (214) couplé entre le premier dispositif à qubit à fréquence accordable (212A) et le deuxième dispositif à qubit (212B), le signal de modulation de flux est défini par une amplitude de modulation de flux et une fréquence de modulation de flux, et les opérations comprennent, avant génération du signal de modulation de flux, la détermination d'une valeur de la fréquence de modulation de flux et d'une valeur de l'amplitude de modulation de flux du signal de modulation de flux, dans lequel la valeur de la fréquence de modulation de flux n'active pas d'interaction entre le premier dispositif à qubit à fréquence accordable (212A) et le dispositif de couplage à fréquence accordable (214).

10. Système informatique quantique (200) selon la revendication 9, dans lequel :
le premier dispositif à qubit à fréquence accordable (212A) comprend :
une boucle de circuit supraconductrice, et
un élément de polarisation de flux qui applique un flux magnétique à la boucle de circuit supraconductrice ; et
la communication du signal de modulation de flux à la ligne de commande de polarisation de flux comprend la communication du signal de modulation de flux à l'élément de polarisation de flux de telle sorte que le flux magnétique est modulé par le signal de modulation de flux.

11. Système informatique quantique selon la revendication 9, dans lequel :
le deuxième dispositif à qubit (212B) comprend un dispositif à qubit à fréquence fixe,
l'unité de traitement quantique supraconductrice (204) comprend un dispositif de couplage à fréquence fixe couplé entre le premier dispositif à qubit à fréquence accordable (212A) et le dispositif à qubit à fréquence fixe (212B), et
le premier dispositif à qubit à fréquence accordable (212A) et le dispositif à qubit à fréquence fixe (212B) sont couplés par le dispositif de couplage à fréquence fixe (214) pendant l'application de la porte logique quantique à deux qubits ; ou
le deuxième dispositif à qubit (212B) comprend un deuxième dispositif à qubit à fréquence accordable,
l'unité de traitement quantique supraconductrice (204) comprend un dispositif de couplage à fréquence accordable (214) couplé entre le premier dispositif à qubit à fréquence accordable (212A) et le deuxième dispositif à qubit à fréquence accordable (212B),
la fréquence de transition du deuxième dispositif à qubit (212B) est une fréquence de transition maximale du deuxième dispositif à qubit à fréquence accordable (212B), et
l'application de la porte logique quantique à deux qubits comprend la communication d'un signal de polarisation de flux à une ligne de commande de polarisation de flux couplée au deuxième dispositif à qubit à fréquence accordable (212B), dans lequel le signal de polarisation de flux est configuré pour accorder la fréquence de transition du deuxième dispositif à qubit à fréquence accordable (212B) à la fréquence de transition maximale.

12. Système informatique quantique (200) selon la revendication 9, dans lequel
le premier dispositif à qubit à fréquence accordable (212A) comprend un dispositif à transmon à fréquence accordable.

13. Système informatique quantique (200) selon la revendication 9, dans lequel
l'unité de traitement quantique supraconductrice (204) comprend un troisième dispositif à qubit (212C), le troisième dispositif à qubit (212C) est couplé fonctionnellement au premier dispositif à qubit à fréquence accordable (212A), et la valeur de la fréquence de modulation de flux n'active pas d'interaction entre le premier dispositif à qubit à fréquence accordable (212A) et le troisième dispositif à qubit (212C).
